# EUROPEAN PATENT SPECIFICATION

(11) **EP 1 829 355 B1**
(45) Date of publication and mention of the grant of the patent: **28.06.2017**
(21) Application number: 05822351.2
(22) Date of filing: 22.12.2005
(51) Int. Cl.: H04N 1/00, G06F 3/12

(54) **STATE CHANGE NOTIFICATION IN A SYSTEM PROVIDING IMAGE HANDLING SERVICES**
ZUSTANDSÄNDERUNGSBENACHRICHTIGUNG IN EIN SYSTEM ZUR BEREITSTELLUNG VON BILDVERARBEITUNGSDIENSTEN
NOTIFICATION DE MODIFICATION D'ETAT DANS UN SYSTEME FOURNISSANT DES SERVICES DE TRAITEMENT D'IMAGES

(30) Priority: 22.12.2004 JP 2004371398; 22.12.2004 JP 2004371396; 17.03.2005 JP 2005077645; 09.12.2005 JP 2005355737; 15.12.2005 JP 2005362344; 15.12.2005 JP 2005362345
(43) Date of publication of application: 05.09.2007
(60) Divisional application: 16192216.6
(73) Proprietor: Ricoh Company, Ltd., Tokyo 143-8555 (JP)
(72) Inventor: ITO, Tatsuo, Kanagawa 229-0006 (JP); TERAMURA, Shinsuke, Yokohama-shi, Kanagawa 221-0001 (JP); TAKEUCHI, Sachiko, Shinagawa-ku, Tokyo 142-0051 (JP); YAGIURA, Yutaka, Yokohama-shi, Kanagawa 224-0007 (JP)
(74) Representative: Schwabe - Sandmair - Marx
(86) International application number: PCT/JP2005/024185
(87) International publication number: WO 2006/068324

(56) References cited:
- JP-A- 2004 220 098
- JP-A- 2004 249 722
- JP-A- 2004 287 862
- JP-A- 2004 303 209
- US-A- 5 687 332
- US-A- 6 081 342
- US-A- 6 088 125
- US-A1- 2002 041 386
- US-A1- 2002 049 837
- US-A1- 2002 085 186
- US-A1- 2003 187 965
- US-A1- 2003 197 889
- US-A1- 2004 215 785
- US-B1- 6 734 985

## Description

### TECHNICAL FIELD

The present invention relates to a system providing image handling services, an image handling apparatus, an external processing apparatus (server), an information processing apparatus, a state change sending method, and a program product performed by a computer for sending a change of a state, which services are provided through a network.

### BACKGROUND ART

An image handling apparatus is an apparatus or a device which handles information concerning an image, such as a multi-functional apparatus accommodating a printer, a copier, a facsimile, and a scanner, or the entire or a part of functions of these devices within a single chassis. For example, Japanese Laid-open Patent Application No. 2002-84383 discloses a multi-functional apparatus accommodating the functions of devices such as a printer, a copier, a facsimile, and a scanner.

The multi-functional apparatus is provided with a displaying part, a printing part, an imaging part, and a like within a single chassis. In addition, the multi-functional apparatus includes applications respectively corresponding to the printer, the copier, the facsimile, and the scanner.

Recently, the multi-functional apparatus includes a communication function since networks such as the Internet, LAN (Local Area Network), and a like have been developed and widely used. The multi-functional apparatus having the communication function can be connected to an external device. Accordingly, a Web service has been desired to be provided.

The Web service uses a technology related to the WWW (World Wide Web). By the Web service, functions such as software can be used through the network. Japanese Laid-open Patent Application No. 2004-5503 discloses a multi-function type image forming apparatus providing a Web service to a device through a network.

Conventionally, it is required to develop an application conducted in the multi-functional apparatus in accordance with an interface for a special device control, a special user interface (UI), a special programming manner suitable for the multi-functional apparatus (for example, power control, a registration to an SCS (described later) or a like), in addition to a logic of the application itself.

Also, in order to customize the application, a developer is required to learn the above-described special interface for the device control, special user interface, and programming manner suitable for the multi-functional apparatus, which is not easy.

Therefore, the multi-functional apparatus has been developed to be capable of allowing an external processing apparatus to conduct at least a part of an image handling process concerning the Web service. In this case, the multi-functional apparatus has the external processing apparatus control a function, which is a part of the multi-functional apparatus (for example, a control of the application, a screen control, and a like).

However, since conventionally, the screen control is conducted by the external processing apparatus, when a state.(job state) is changed in an execution of the image handling process at the end of the image handling process or at an error occurrence, the multi-functional apparatus cannot update the screen at a real time. That is, when the job state of the image handling process conducted by the function of the multi-functional apparatus is changed, the job state is not promptly informed to the image handling process being conducted by the external processing apparatus.

Systems are known for notification of state changes in an image handling apparatus. See, for example, US-A-2003/187965, US-B-6 734 985, US-A-2002/041386, US-A-2002/049837, US-A-2004/215785, US-A-2003/197889 or US-A-6 088 125.

From these prior art documents, it is known to notify a destination of a change of state such as the occurrence of an error condition. It is also known to send the same notification contents to plural destinations.

### DISCLOSURE OF THE INVENTION

It is a general object of the present invention to provide a system using services, an image handling apparatus, an external processing apparatus, an information processing apparatus, a state change sending method, and a state change sending program performed by a computer, in which the above-mentioned problems are eliminated.

A more specific object of the present invention is to provide the system using services, the image handling apparatus, the external processing apparatus, the state change sending method, and the state change sending program performed by a computer, in which in a case of having an external processing apparatus to conduct at least a part of an image handling process concerning a service, a change of a state in an execution of the image handling process being conducted by the image handling apparatus itself.

The above objects of the present invention can be achieved by a system, apparatuses, method and program set out in the appended claims.

### BRIEF DESCRIPTION OF THE DRAWINGS

Other objects, features and advantages of the present invention will become more apparent from the following detailed description when read in conjunction with the accompanying drawings, in which:
FIG. 1 is a conceptual diagram showing one example of a system using Web services according to the present invention.
FIG. 2 is a diagram showing a system configuration of a system using Web services according to the present invention.
FIG. 3 is a diagram showing a system configuration of another system using Web services according to the present invention.
FIG. 4 is a diagram showing a system configuration of a still another system using Web services according to the present invention.
FIG. 5 is a diagram a sequence flow of an event notification process according to the present invention.
FIG. 6 is a diagram showing a data structure of an event management information TB according to the present invention.
FIG. 7 is a diagram showing a sequence flow of an event subscription registration process conducted when a state of an image forming apparatus changes, according to the present invention.
FIG. 8 is a diagram showing a configuration example of an event registration information list according to the present invention.
FIG. 9 is a diagram showing a device support function list according to the present invention.
FIG. 10 is a diagram showing another sequence flow of the event subscription registration process conducted when a state of a server changes, according to the present invention.
FIG. 11 is a diagram showing still another sequence flow of the event subscription registration process conducted at timing when a job is generated, according to the present invention.
FIG. 12 is a diagram showing a registration process of the event registration information, according to the present invention.
FIG. 13 is a diagram showing a sequence flow of an update process of the event registration information, according to the present invention.
FIG. 14 is a diagram showing a sequence flow of a delete process of the event registration information, according to the present invention.
FIG. 15 is a schematic diagram showing a module structure of a Web browser which receives the event notification, according to the present invention.
FIG. 16 is a diagram showing a sequence flow of the event notification process according to the present invention.
FIG. 17 is a schematic diagram showing a module structure of a Web browser 102b which acquires the job state by the polling according to the present invention.
FIG. 18 is a diagram showing a sequence flow of a state acquiring process according to the present invention.
FIG. 19 is a diagram showing a configuration of the system 9004 using Web services according to the present invention.
FIG. 20 is a diagram showing a sequence flow of another state acquiring process according to the present invention.
FIG. 21 is a conceptual diagram showing a basic configuration of a system using Web services.
FIG. 22 is a conceptual diagram showing a configuration of a system using Web services.
FIG. 23 is a diagram showing a configuration of the image forming apparatus.
FIG. 24 is a diagram a hardware configuration of the image forming apparatus according.
FIG. 25 is a diagram showing a configuration of a system using Web services.
FIG. 26 is a diagram showing a sequence flow of the copy process as one example of the processes conducted by the system 9102 using Web services.
FIG. 27 is a diagram a screen transition of screens displayed at the operation part of the image forming apparatus.
FIG. 28 is a diagram showing the configuration of the system using Web services.
FIG. 29 is a diagram showing a functional configuration of the Web browser.
FIG. 30 is a diagram showing a sequence flow of the process until the initial screen is displayed in the system using Web services.
FIG. 31 is a diagram showing a configuration of a system using Web services.
FIG. 32 is a diagram showing a sequence flow of the copy process conducted in the system using Web services.
FIG. 33 is a diagram showing a configuration of the system using Web services.
FIG. 34 is a diagram showing a configuration of the system using Web services.
FIG. 35 is a diagram showing a configuration of a system using Web service.
FIG. 36 is a diagram showing a configuration of a system using Web services.
FIG. 37 is a diagram showing a configuration of the system 9109 using Web services.
FIG. 38 is a diagram showing of a system 9110 using Web services, which uses another image forming apparatus instead of using the server 2w.
FIG. 39 is a diagram for explaining a first variation of the process in the system 9110 using Web services.
FIG. 40 is a diagram showing an example of a request SOAP message.
FIG. 41 is a diagram showing an example of a request SOAP message.
FIG. 42 is a diagram showing an example of a response SOAP message.
FIG. 43 is a diagram showing an example of a request SOAP message.
FIG. 44 is a diagram showing an example of a response SOAP message.
FIG. 45 is a diagram showing a second variation of the process of the system 9110 using Web services.
FIG. 46 is a diagram for explaining a third variation of the process of the system 9110 using Web services.
FIG. 47 is a diagram for explaining a fourth variation of the process of the system 9110 using Web services.
FIG. 48 is a diagram showing an example of a request SOAP message.
FIG. 49 is a diagram showing an example of a response SOAP message.
FIG. 50 is a diagram showing an example of a request SOAP message.
FIG. 51 is a diagram showing an example of a response SOAP message.
FIG. 52 is a diagram for explaining a fifth variation of the process in the system 9110 using Web services.
FIG. 53 is a diagram for explaining a sixth variation of the system 9110 using Web services.
FIG. 54 is a conceptual diagram showing a basic configuration of a system using Web services.
FIG. 55 is a diagram showing a configuration of an information processing apparatus.
FIG. 56 is a diagram a hardware configuration of the information processing apparatus.
FIG. 57 is a diagram showing a configuration of a system using Web services.
FIG. 58 is a diagram showing a sequence flow of the copy process as one example of the processes conducted by the system using Web services.
FIG. 59 is a diagram a screen transition of screens displayed at the operation part of an image forming apparatus.
FIG. 60 is a diagram showing the configuration of the system using Web services.
FIG. 61 is a diagram showing a functional configuration of the Web browser.
FIG. 62 is a diagram showing a sequence flow of the process until the initial screen is displayed in the system using Web services.
FIG. 63 is a diagram showing a configuration of a system using Web services.
FIG. 64 is a diagram showing a sequence flow of the copy process conducted in the system using Web services .
FIG. 65 is a diagram showing a configuration of the system using Web services.
FIG. 66 is a diagram showing a configuration of the system using Web services.
FIG. 67 is a diagram showing a configuration of a system using Web service.
FIG. 68 is a diagram showing a configuration of a system using Web services.
FIG. 69 is a diagram for explaining a first variation of the process in the system using Web services.
FIG. 70 is a diagram showing an example of a request SOAP message.
FIG. 71 is a diagram showing an example of a request SOAP message.
FIG. 72 is a diagram showing an example of a response SOAP message.
FIG. 73 is a diagram showing an example of a request SOAP message.
FIG. 74 is a diagram showing an example of a response SOAP message.
FIG. 75 is a diagram showing a second variation of the process of the system using Web services.
FIG. 76 is a diagram for explaining a third variation of the process of the system using Web services.
FIG. 77 is a diagram for explaining a fourth variation of the process of the system using Web services.
FIG. 78 is a diagram showing an example of a request SOAP message.
FIG. 79 is a diagram showing an example of a response SOAP message.
FIG. 80 is a diagram showing an example of a request SOAP message.
FIG. 81 is a diagram showing an example of a response SOAP message.
FIG. 82 is a diagram for explaining a fifth variation of the process in the system using Web services.
FIG. 83 is a diagram for explaining a sixth variation of the system using Web services.
FIG. 84 is a diagram for explaining a first variation of the process in the system using Web services.
FIG. 85 is a diagram showing an eighth variation of the process of the system using Web services.
FIG. 86 is a diagram for explaining a ninth variation of the process of the system using Web services.
FIG. 87 is a diagram for explaining a tenth variation of the process of the system using Web services.
FIG. 88 is a diagram for explaining an eleventh variation of the process in the system using Web services.
FIG. 89 is a diagram for explaining a twelfth variation of the system 9202 using Web services.

### BEST MODE FOR CARRYING OUT THE INVENTION

In the following, embodiments of the present invention will be described with reference to the accompanying drawings.

In a first basic configuration, an image forming apparatus is simply illustrated as an example of an apparatus according to the present invention but the present invention is not limited to the image forming apparatus. The present invention can be applied to various apparatuses, devices, and like which have an external processing apparatus conduct a part of an image handling process according to a service of themselves.

In addition, in the first concept, a Web service is illustrated as one example of services controlling a function of the image handling apparatus itself vie a network, but the present invention is not limited to the Web service. Furthermore, in the first concept, an image forming process illustrated as one example of the image handling process, but the present invention can be applied to various processes handling information concerning the image.

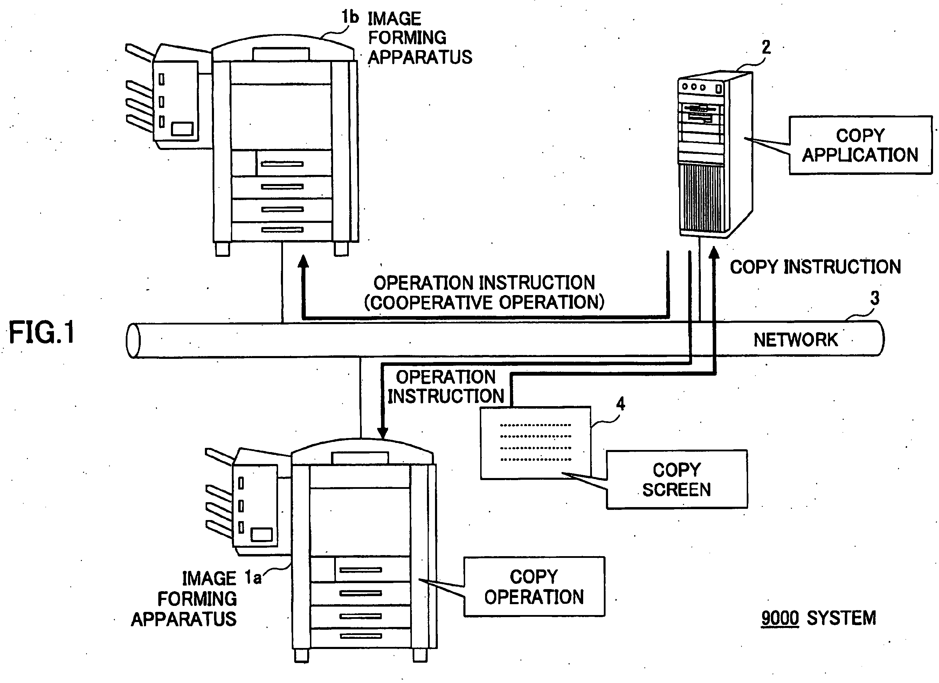

FIG. 1 is a conceptual diagram showing one example of a system using Web services according to the present invention. In a system 9000 using Web services, at least one or more image forming apparatus 1a and 1b, and a server 2 are connected to each other through a network 3 such as the Internet.

The server 2 includes a copy application. Each of the image forming apparatuses 1a and 1b includes one or more image forming functions (a scan function, a print function, and a like), and also provides a Web service controlling the one or more image forming functions. In addition, the image forming apparatus 1a includes an operation part which can display a Web browser for a user.

In the system 9000 using Web services, various services provided by the image forming apparatuses 1a and 1b are used to build the copy application on the server 2. A user interface of the copy application is provided by the Web server of the server 2. The image forming apparatus 1a displays a user interface 4 of the copy application at a Web browser as a Web client at the operation part. The user can operate the copy application built on the server 2 by using the user interface 4 of the copy application displayed at the operation part.

When the user instructs a copy operation from the user interface 4 of the copy application, a copy instruction is sent to the Web server of the server 2 from the Web browser of the image forming apparatus 1a. The copy application of the server 2 sends an operation instruction to a Web service server of the image forming apparatus 1a from a Web service client, in response to the copy instruction. When the image forming apparatus 1a and the image forming apparatus 1b cooperate with each other, the Web service client of the server 2 sends the operation instruction to the Web service server of the image forming apparatus 1b. Concerning security, communications between each of the image forming apparatuses 1a and 1b and the server 2 can be conducted by using a SSL (Secure Socket Layer) or a like.

As described above, in the system 9000 using Web services in FIG. 1, it is possible to substitute a special interface for the device control, a special user interface, and a special programming manner for the image forming apparatus with the Web services provided by the image forming apparatuses 1a and 1b. Accordingly, it is possible to develop and customize the application for controlling the functions of the image forming apparatuses 1a and 1b by using technologies such as a technology for building a Web application.

### - First Variation -

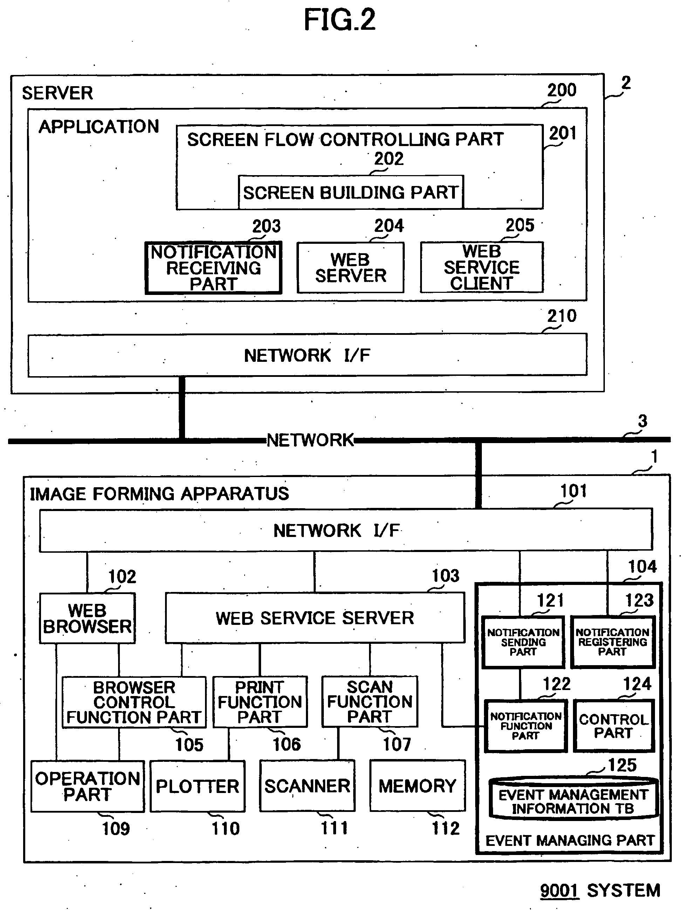

Next, a structure and process of a system 9000 using Web services according to the present invention will be described in detail. In the following, a numeral 1 is used in a case of indicating either one of the image forming apparatuses 1a and 1b. FIG. 2 is a diagram showing a system configuration of a system 9001 using Web services according to the present invention. In the system 9001 using Web services, the image forming apparatus 1 and a server 2 are connected to each other through a network 3.

The image forming apparatus 1 in FIG. 2 includes a network interface (I/F) 101, a Web browser 102, a Web service server 103, an event managing part 104, a browser control function part 105, a print function part 106, a scan function part 107, an operation part 109, a plotter 110, a scanner 111, and a memory 112. The event managing part 104 includes a notification sending part 121, a notification function part 122, a notification registering part 123, a control part 124, and an event management information TB (table) 125.

Moreover, the server 2 includes an application 200, and a network I/F 210. The application 200 includes a screen flow controlling part 201, a screen building part 202, a notification receiving part 203, a Web server 204, and a Web service client 205.

In the system 9001 using Web services in FIG. 2, an MVC model forming a "Model" module, a "View" module, and a "Controller" module is structured. The "Model" module handles logic. The "View" module handles to display, input, and output information. The "Controller" module handles to control the "Model" module and the "View" module. In detail, the "Controller" requests the "Model" module to execute necessary logic in response to an input from the "View" module, and requests the "View" module to display a result.

For example, the "View" module in the system 9001 using Web services in FIG. 2 builds an user interface on the server 2, displays the user interface at a Web browser 102 on the image forming apparatus 1, and conducts to input and output information such as setting values. For example, the "View" module displays information, changes a display of information, instructs a change of information, and instructs an execution of a process.

The "View" module is a Web service for controlling an image forming function such as the scan function part 107. For example, the "Model" module activates the scanner 111 by the scan function part 107, and digitizes an image. The "Controller" module uses a suitable Web service provided from the server 2 in response to a request from the Web browser 102.

For example, when the "Controller" module receives an execution instruction of a copy process, the "Controller" module executes a scan process by the scan function part 107 in accordance with process contents, and executes a print by the print function part 106. That is, the "Controller" module implements logic of an image forming application.

In response to an instruction from a view displayed at the operation part 109 of the image forming apparatus 1, the "Controller" module of the server 2 executes a suitable "Model" module of the image forming apparatus 1. Accordingly, it is possible for a user of the image forming apparatus 1 to use the image forming application of the server 2 as if the user uses the application of the image forming apparatus 1.

The image forming apparatus 1 sends an event notification to the server 2 when a state (job state) in an execution due to the end of the image forming process or an error occurrence in the image forming functions of the print function part 106, the scan function part 107, and the like. Errors occurred in the image forming functions include a physical error which cannot overcome without manual operations. That is, when the job state changes in the image forming function of the image forming apparatus 1, the event notification indicates information (hereinafter, simply called an event) concerning a change of the state to the server 2.

An event occurred in the image forming functions of the print function part 106, the scan function part 107, and the like is sent to the event managing part 104 through the Web service server 103. The notification sending part 121 of the event managing part 104 is a module for sending the event notification. The notification function part 122 is a module for controlling a notification function. The notification registering part 123 is a module for registering information concerning the event notification. The control part 124 is a module for controlling the entire of the event managing part 104. The event management information TB 125 stores various information necessary for conducting the event notification.

When an event occurred in the image forming function through the Web service serveur 103 is received, the event managing part 104 sends information based on a destination of the event notification, the job state, and contents of the event notification, which will be described later, to the notification receiving part 203 included in the application 200 of the server 2. The notification receiving part 203 is a module for receiving the event notification.

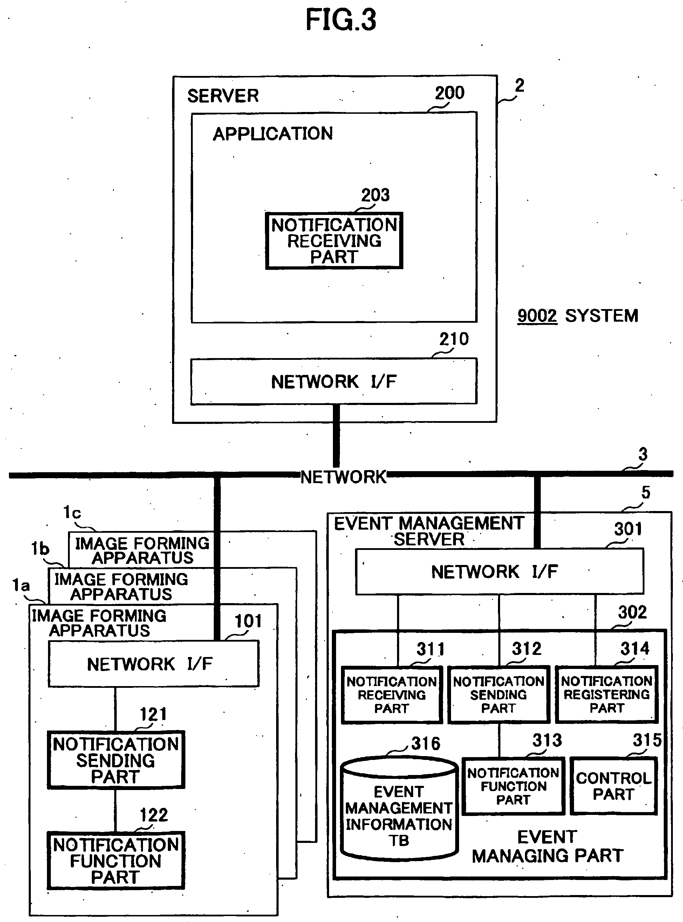

The system 9001 using Web services in FIG. 2 is illustrated in that the image forming apparatus 1 conducts the event management. Instead, an intermediate server may be provided to conduct the event management. FIG. 3 is a diagram showing a system configuration of a system 9002 using Web services as another variation according to the present invention. In the system 9002 using Web services shown in FIG. 3, the image forming apparatuses 1a, 1b, and 1c, the server 2, and an event managing server 5 as the intermediate server are connected to each other through the network 3.

In the system 9002 using Web services shown in FIG. 3, the image forming apparatuses 1a through 1c additionally includes a notification sending part 121, and a notification function 122, but excludes the event managing part 104 in the image forming apparatus 1 in FIG. 2. In the image forming apparatuses 1a through 1c in FIG. 3, explanations of the same parts as ones included in the image forming apparatus 1 in FIG. 2 will be omitted. The server 2 in FIG. 3 is the same as the server 2 in FIG. 2.

Moreover, the event managing server 5 includes a network interface (I/F) 301, and an event managing part 302. The event managing part 302 includes a notification receiving part 311, a notification sending part 312, a notification function part 313, a notification registering part 314, a controlling part 315, and an event management information TB 316.

An event occurred in the image forming functions such as the print function part 106, the scan function part 107, and the like, which are included any one of the image forming.apparatuses 1a through 1c, is sent to the notification function part 122 through the Web service server 103. The notification function part 122 requests the notification sending part 121 to send the event occurred in the image forming functions. The notification sending part 121 sends the event occurred in the image forming functions to the notification receiving part 311 included in the event managing part 302 of the event managing server 5.

The notification receiving part 311 of the event managing part 302 is a module for receiving a notification from the notification sending part 312. The notification sending part 312 of the event managing part 302 is a module for sending an event notification. The notification function part 313 is a module for controlling a notification function. The notification registering part 314 is a module for registering information concerning the event notification. The controlling part 315 is a module for controlling the entire event managing part 302. The event management information TB 316 stores various information necessary for conducting the event notification.

When an event occurred in the image forming functions is received from any one of the image forming apparatuses 1a through 1c, the event managing part 302 send information based on a destination of the event notification, the job state, and contents of the event notification, which will be described later, to the notification receiving part 311 included in the application 200 of the server 2. The notification receiving part 203 is a module for receiving the event notification.

The system 9002 using Web services in FIG. 3 is illustrated in that the event managing server 5 conducts the event management, but the image forming apparatuses 1a through 1c do not conduct the event management. Accordingly, in the system 9002 using Web services in FIG. 3, it is possible to centrally manage the events, and manage the image forming apparatuses 1a through 1c based on the event notification.

The event managing server 5 can control each of the image forming apparatuses 1a through 1c through the server 2. Moreover, the event managing server 5 can conduct the event management of the Web service cooperatively provided by a plurality of the image forming apparatuses 1a through 1c. It should be noted that the event managing server 5 can be substituted with a log management server or a like.

In the system 9001 using Web services in FIG. 2, the Web browser 102 of the image forming apparatus 1 receives image data from the Web server 204, and displays a screen corresponding to the image data at the operation part 109. Instead, the Web browser 102 may be implemented to a terminal apparatus other than the image forming apparatus 1, and the screen corresponding to the image data may be displayed on the Web browser 102.

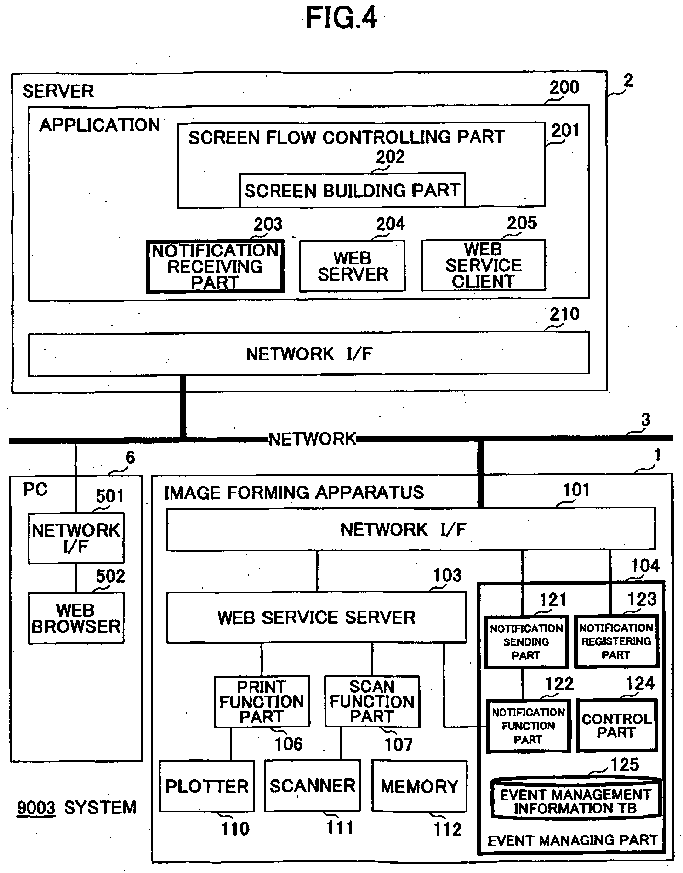

FIG. 4 is a diagram showing a system configuration of a system 9003 using Web services according to the present invention. In the system 9003 using Web services shown in FIG. 4, the image forming apparatus 1, the server 2, a PC (Personal Computer) 6 as the terminal apparatus other than the image forming apparatus 1 are connected through the network 3. The PC 6 in FIG. 4 includes a network interface (I/F) 501, and a web browser 502. The image forming apparatus 1 in FIG. 4 does not include the Web browser 102, the browser control function part 105, and the operation part 109 included in the image forming apparatus 1 in FIG. 2. A process for displaying a screen corresponding to the image data, which is conducted by the system 9003 using Web services in FIG. 4, is basically the same as the system 9001 using Web services in FIG. 2, and an explanation thereof will be omitted.

### - Event Notification in First Concept

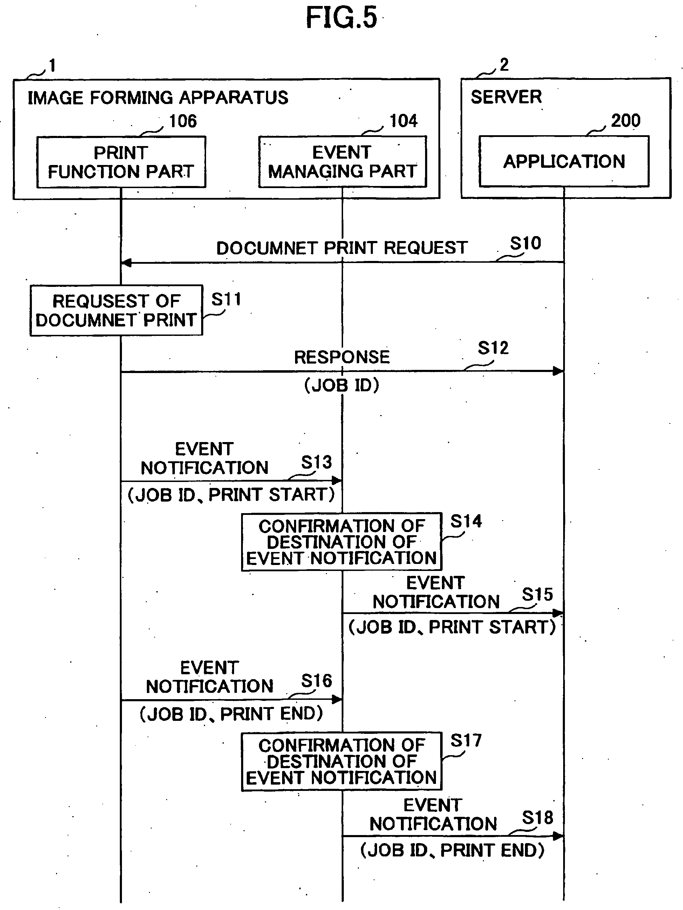

In the following, the event notification in the system 9000 using Web services will be described with reference to FIG. 5. FIG. 5 is a diagram a sequence flow of the event notification process according to the present invention. The sequence flow in FIG. 5 shows one example of the event notification process when a document is printed out by the image forming apparatus 1 of the system 9001 using Web services in FIG. 2.

For example, when power is turned on, the Web browser 102 of the image forming apparatus 1 sends a screen update instruction the Web server 204 of the server 2 in order to instruct updating a screen. The Web server 204 sends a screen update instruction to the screen flow controlling part 201 in order to instruct updating the screen. The screen flow controlling part 201 generates image data and sends the image data to the Web server 204. The Web server 204 sends the image data to the Web browser 102 of the image forming apparatus 1. The Web browser 102 displays a screen corresponding to the image data at the operation part 109.

When a user instructs a document print from the operation part 109 to print out a document, the Web browser 102 sends a document print instruction to the Web server 204 of the server 2 in order to instruct printing out the document. The Web server 204 sends the document print instruction to the screen flow controlling part 201.

The screen flow controlling part 201 sends the document print instruction to the Web service client 205. After that, the Web service client 205 included in the application 200 advances to step S10.

In step S10, the Web service client 205 sends a document print request to the print function part 106 through the Web service server 103 of the image forming apparatus 1 in order to request printing the document. The event notification process advances to step S11. In the step S11, the print function part 106 sends the document print request to the plotter 110. The event notification process advances to step S12. In the step S12, the print function part 106 sends a response to the Web service client 205 included in the application 200 of the server 2 through the Web service server 103. The response in the step S12 includes a job ID.

The event notification process advances to step S13. In the step S13, in response to an event indicating a print start, the print function part 106 of the image forming apparatus 1 sends an event notification to the notification function part 122 of the event managing part 104 through the Web service server 103. The event notification in the step S13 includes information indicating the job ID and a job state "print start".

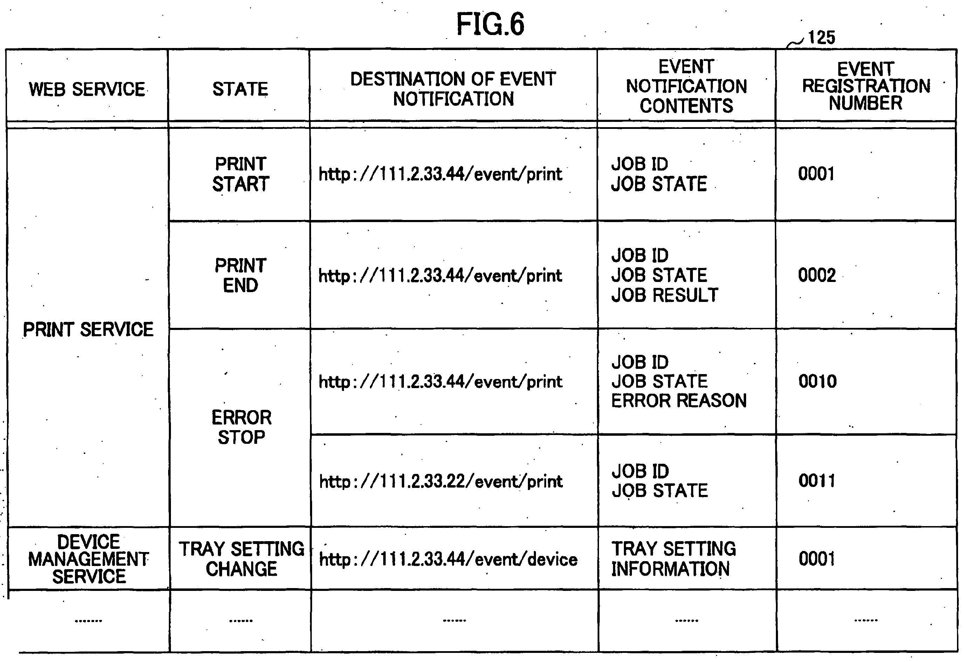

The event notification process advances to step S14. In the step S14, the notification function part 122 refers to the event management information TB 125, and confirms a destination of the event notification. FIG. 6 is a diagram showing a data structure of the event management information TB 125 according to the present invention. The event management information TB 125 stores records each of which includes data items of "WEB SERVICE", "STATE", "DESTINATION OF EVENT NOTIFICATION", "EVENT NOTIFICATION CONTENTS", and "EVENT REGISTRATION NUMBER". The data item "STATE" included in the event management information TB 125 indicates the job state. The data item "EVENT NOTIFICATION CONTENTS" indicates contents to be included in the event notification with respect to the server 2.

In this case, it is assumed that records of event management information as shown in FIG. 6 are registered in the event management information TB 125. The notification function part 122 acquires an address "http://111.2.33.44/event/print" of the server 2 as the destination of the event notification from the event management information TB 125, in response to the state "print start" included in the event notification in the step S13.

The event notification process advances to step S15. In the step S15, the notification function part 122 sends the event notification to the notification receiving part 203 included in the application 200 of the server 2 through the notification sending part 121. The event notification in the step S15 includes information indicating the job ID and the job state "print start".

The event notification process advances to step S16. In the step S16, in response to an event indicating a print end, the print function part 106 of the image forming apparatus 1 sends the event notification to the notification function part 122 of the event managing part 104 through the Web service server 103. The event notification in the step S16 includes information indicating the job ID and the job state "print end".

The event notification process advances to step S17. In the step S17, the notification function part 122 refers to the event management information TB 125, and confirms the destination of the event notification. The notification function part 122 acquires the address of the server 2 as the destination of the event notification, in response to the state "print end" indicated in the event notification in the step S16.

The event notification process advances to step S18. In the step S18, the notification function part 122 sends an event notification to the notification receiving part 203 included in the application 200 of the server 2 through the notification sending part 121. The event notification in the step S18 includes information indicating the job ID and the job state "print end".

According to the event notification process in accordance with the sequence flow shown in FIG. 5, it is possible to change the destination of the event notification and contents to be included in the event notification in accordance with information stored in the event management information TB 125 of the event managing part 104 when an event occurs in the image forming apparatus 1. It should be noted that in the step S14 and the step S17, if there is no record corresponding to the event notification in the event management information TB 125, the notification function part 122 may not send the event notification, or may send the event notification to a predetermined destination of the event notification.

In a case of sending the event notification from the image forming apparatus 1 to the server 2, it is required for the event managing part 104 to register an event subscription. Various methods can be applied such as an event batch registration, a registration for each Web service, a registration for each job, a registration for each document, a registration for each user, and a like. Also, the event subscription registration can be conducted at various timings.

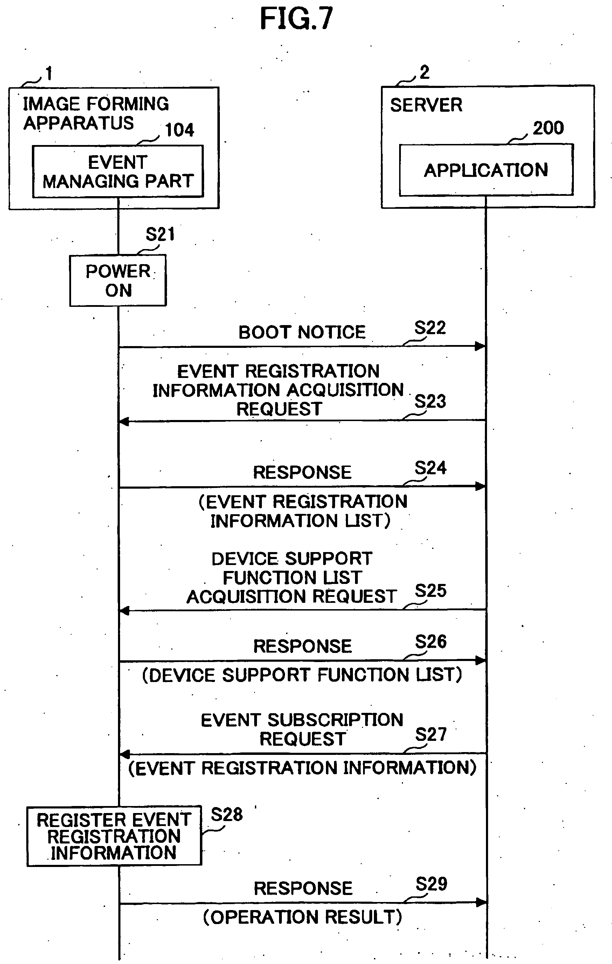

FIG. 7 is a diagram showing a sequence flow of an event subscription registration process conducted when a state of the image forming apparatus 1 changes, according to the present invention. The sequence flow in FIG. 7 illustrates one example case in that the state of the image forming apparatus 1 changes when power is turned on and the image forming apparatus 1 is booted.

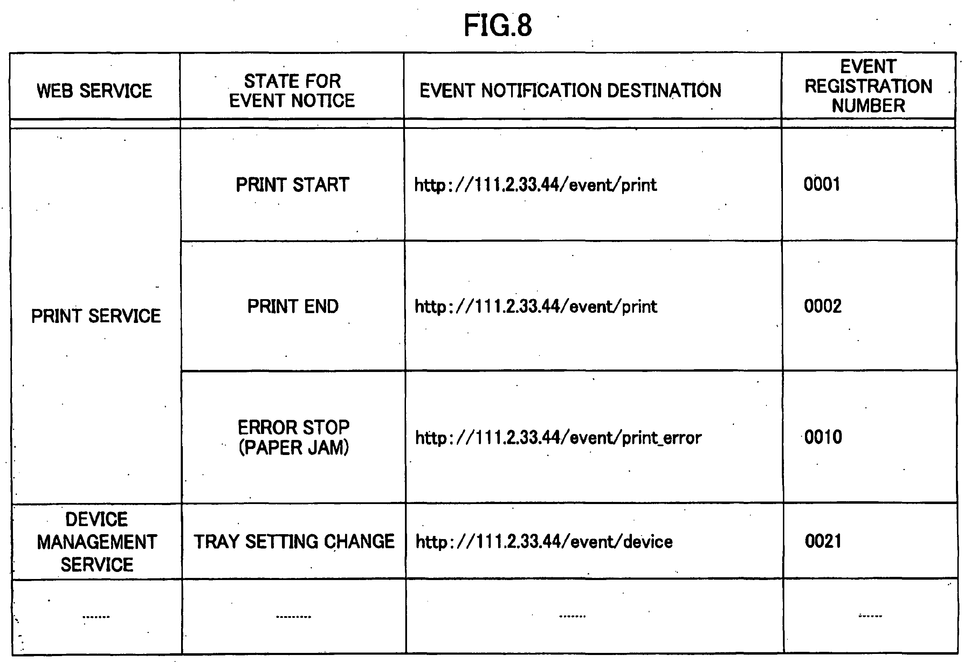

The event subscription registration process advances to step S21. In the step S21, the power is turned on and the image forming apparatus 1 is booted. The event subscription registration process advances to step S22. In the step S22, the event managing part 104 of the image forming apparatus 1 sends a boot notification to the application 200 of the server 2. The event subscription registration process advances to step S23. In the step S23, the application 200 of the server 2 sends an event registration information acquisition request to the event managing part 104 of the image forming apparatus 1 in order to request acquiring event registration information. The event subscription registration process advances to step S24. In the step S24, the event managing part 104 sends an event registration information list as shown in FIG. 8 as a response with respect to the step S23, to the application 200 of server 2.

FIG. 8 is a diagram showing a configuration example of the event registration information list according to the present invention. The event registration information list includes data items of "WEB SERVICE", "STATE FOR EVENT NOTIFICATION", "EVENT NOTIFICATION DESTINATION", and "EVENT REGISTRATION NUMBER". The data item "STATE FOR EVENT NOTIFICATION" included in the event registration information list indicates a job state to send the event notification.

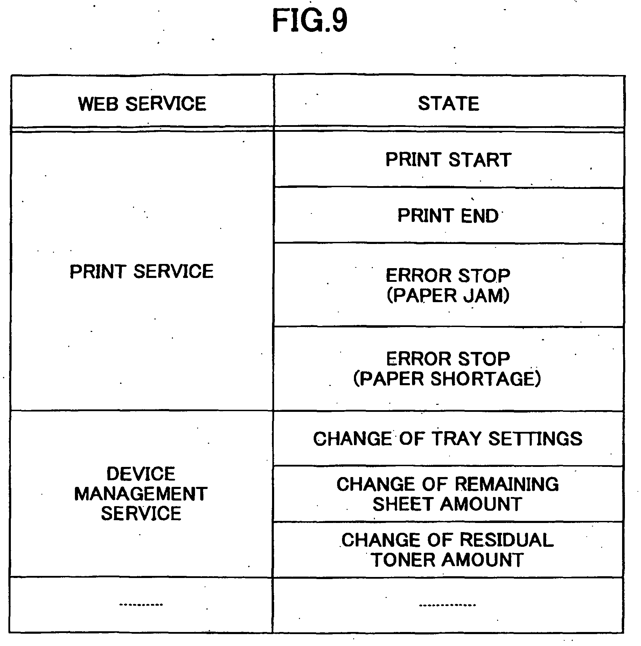

The event subscription registration process advances to step S25. In the step S25, the application 200 of the server 2 sends a device support function list acquisition request to the event managing part 104 of the image forming apparatus 1, in order to request acquiring a device support function list. The event subscription registration process advances to step S26. In the step S26, the event managing part 104 sends the device support function list as shown in FIG. 9 as a response with respect to the step S25, to the application 200 of the server 2. FIG. 9 is a diagram showing the device support function list according to the first embodiment of the present invention.

The device support function list includes records each of which includes data items of "WEB SERVICE", and "STATE". The data item "STATE" included in the device support function list indicates a job state in which the event notification can be sent.

The event subscription registration process advances to step S27. In the step S27, the application 200 of the server 2 sends an event subscription request to the event managing part 104 of the image forming apparatus 1 based on the event registration information list sent in the step S24 and the device support function list sent in the step S26. The event subscription request in the step S27 includes event registration information indicating an event notification destination, a timing of the event notification, event notification contents, and a like.

For example, the event notification destination included in the event subscription request indicates a destination of the server 2 (for example, URL (Uniform Resource Locator) or a like). The timing of the event notification indicates a state (a job running, an end of the job, a cancellation of the job, a stop of the job, or a like) when the job state changes, a state (an executable state, running, an error occurrence, and a like) when a device state changes, or a state (a new document addition, a change of document bibliographical information, or a like) when a document accumulation state changes. In addition, for example, the event notification contents indicates the job ID, the job state, a job result (a print number or a like).

As shown in FIG. 3, in a case in that the event managing server 5 as the intermediate server conducts the event management, the event subscription request in the step S27 includes information (for example, a device name, an IP address, an MAC address, and a like) specifying an event generating device.

The event subscription registration process advances to the step S28, the event managing part 104 of the image forming apparatus 1 registers the event registration information included in the event subscription request to the event management information TB 125. The event registration information is registered to the event management information TB 125, and the registration of the event subscription is terminated.

The event subscription registration process advances to step S29. In the step S29, the event managing part 104 of the image forming apparatus 1 sends a response with respect to the step S27, to the application 200 of the server 2. For example, the response in the step S29 includes information indicating an operation result. According to the event subscription registration process in accordance with the sequence flow shown in FIG. 7, it is possible to register the event subscription at a timing when the state of the image forming apparatus 1 changes.

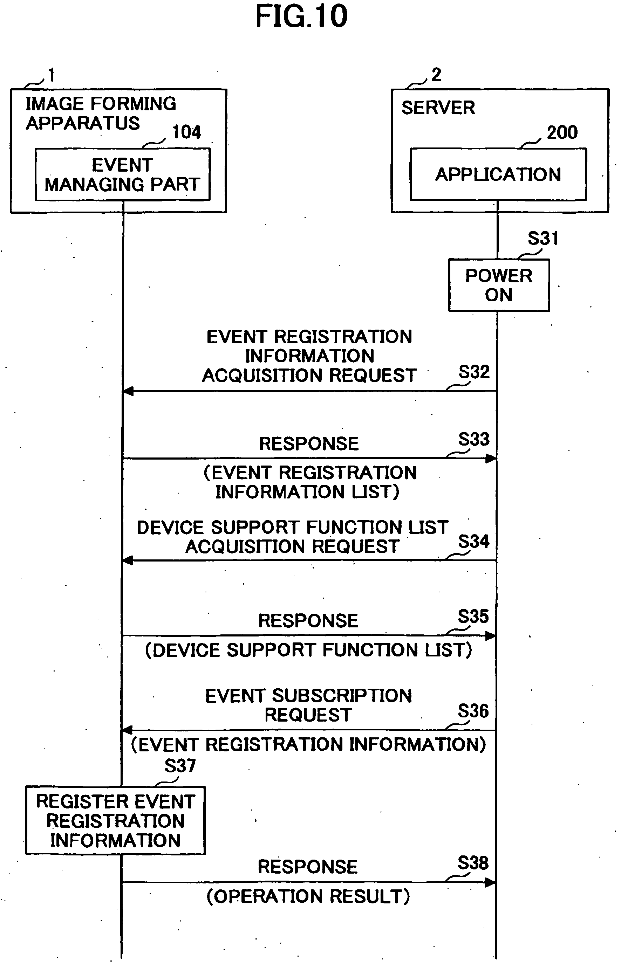

FIG. 10 is a diagram showing another sequence flow of the event subscription registration process conducted when a state of the server 2 changes, according to the present invention. The sequence flow in FIG. 10 illustrates one example case in that the state of the server 2 changes when power is turned on and the server 2 is booted.

The event subscription registration process advances to step S31. In the step S31, the server 2 is booted when the power is turned on. In FIG. 10, the following steps S32, S33, S34, S35, S36, S37, and S38 are processed similarly to the steps S23, S24, S25, S26, S27, and S28 in FIG. 7, and explanations thereof will be omitted. According to the event subscription registration process in accordance with the sequence flow shown in FIG. 10, it is possible to register the event subscription at a timing when the server 2 changes.

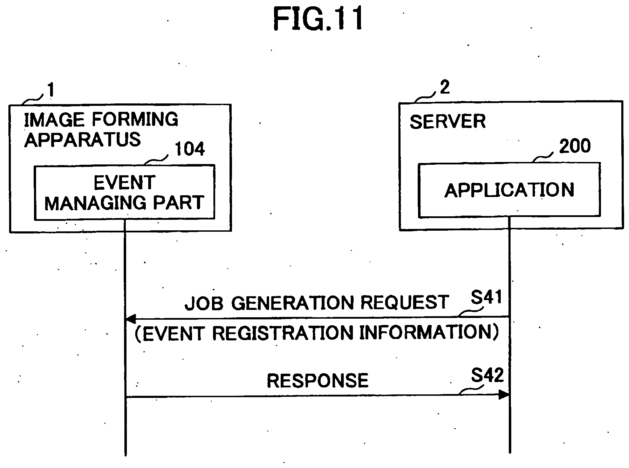

FIG. 11 is a diagram showing still another sequence flow of the event subscription registration process conducted at timing when a job is generated, according to the first embodiment of the present invention. The event subscription registration process advances to step S41. The application 200 of the server 2 sends a job generation request to the event managing part 104 of the image forming apparatus 1, in order to request generating a job. The job generation request in the step S41 includes the event registration information described above. It should be noted that in the job generation request, a flag is additionally provided as an argument to indicate using the same event generation information for a next job.

The event managing part 104 of the image forming apparatus 1 registers the event registration information included in the job generation request sent in the step S41, in the event management information TB 125. The event management information is registered in the event management information TB 125, and the event subscription registration process is terminated.

Subsequently, the event subscription registration process advances to step S42. In the step S42, the event managing part 104 of the image forming apparatus 1 sends a response with respect to the step S41, to the application 200 of the server 2. According to the event subscription registration process in accordance with the sequence flow shown in FIG. 11, it is possible to register the event subscription at a timing when a job is generated.

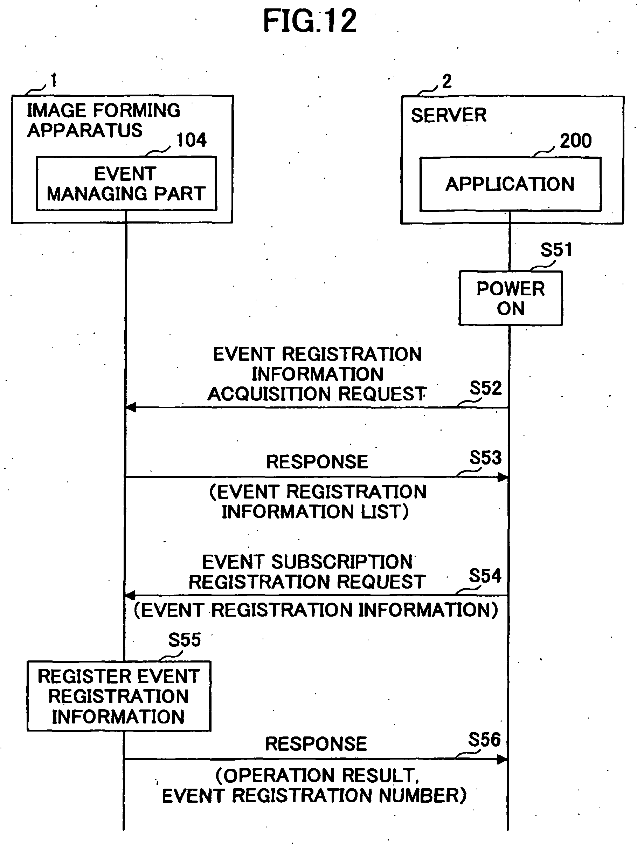

An operation of the event registration information registered in the event management information TB 125 can be conducted by a registration process, an update process, and a delete process of the event registration information, which will be described in the followings. FIG. 12 is a diagram showing the registration process of the event registration information, according to the present invention.

The registration process advances to step S51. In the step S51, the power is turned on, and the server 2 is booted. The registration process advances to step S52. In the step S52, the application 200 of the server 2 sends an event registration information to the event managing part 104 of the image forming apparatus 1. The registration process advances to step S53. In the step S53, the event managing part 104 sends the event registration information list as shown in FIG. 8 as a response with respect to the step S52, to the application 200 of the server 2.

The registration process advances to step S54. In the step S52, the application 200 of the server 2 sends an event subscription registration request to the event managing part 104 of the image forming apparatus 1, based on the event registration information list sent in the step S53. The event subscription registration request in the step S54 includes the event registration information. The registration process advances to step S55. In the step S55, the event managing part 104 of the image forming apparatus 1 registers the event registration information included in the event subscription registration request sent in the step S54, in the event management information TB 125. The event registration information is registered to the event management information TB 125, and the registration process of the event subscription is terminated.

Subsequently, the registration process advances to step S56. In the step S56, the event managing part 104 of the image forming apparatus 1 sends a response with respect to the step S54, to the application 200 of the server 2. For example, the response sent in the step S56 includes an operation result, and an event registration number. As described above, according to the registration process of the event registration information in accordance with the sequence flow shown in FIG. 12, it is possible to register the event registration information.

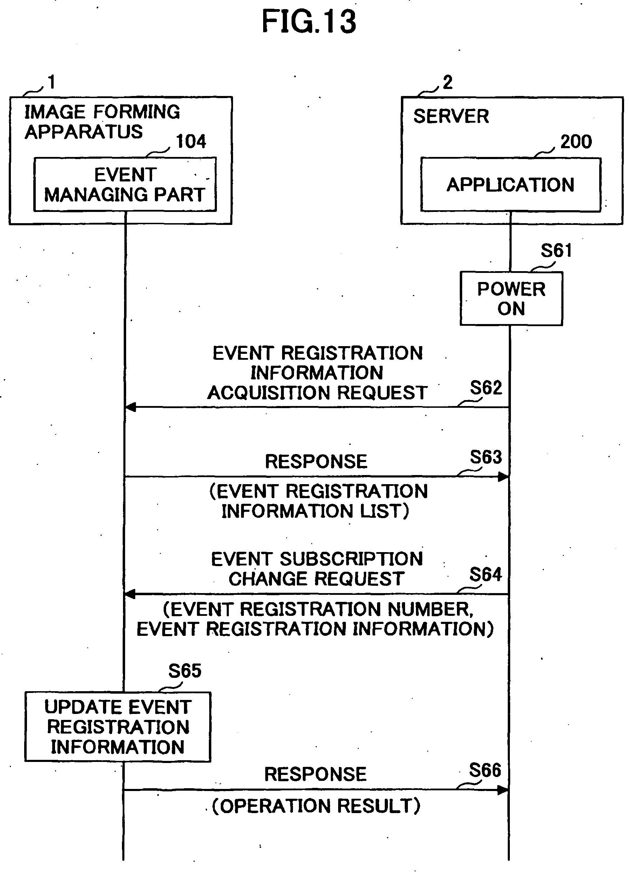

FIG. 13 is a diagram showing a sequence flow of the update process of the event registration information according to the present invention. It should be noted that in FIG. 13, steps S61, S62, and S63 are conducted similar to the steps S51, S52, and S53 in FIG. 12, and explanations thereof will be omitted.

The update process advances to the step S64. In the step S64, the application 200 of the server 2 sends an event subscription change request to the event managing part 104 of the image forming apparatus 1 in order to request changing the event subscription, based on the event registration information list sent in the step S63. The event subscription change request in the step S64 includes the event registration number and the event registration information. The update process advances to step S65. In the step S65, the event managing part 104 of the image forming apparatus 1 updates the event management information TB 125 based on the event registration number and the event registration information included in the event subscription change request sent in the step S64. The event registration information managed in the event registration information TB 125 is updated, and the update process of the event subscription is terminated.

Subsequently, the update process advances to step S66. In the step S66, the event managing part 104 of the image forming apparatus 1 sends a response with respect to the step S64, to the application 200 of the server 2. For example, the response in the step S66 includes the operation result. As described above, accordingly to the update process of the event registration information in accordance with the sequence flow shown in FIG. 13, it is possible to update the event registration information.

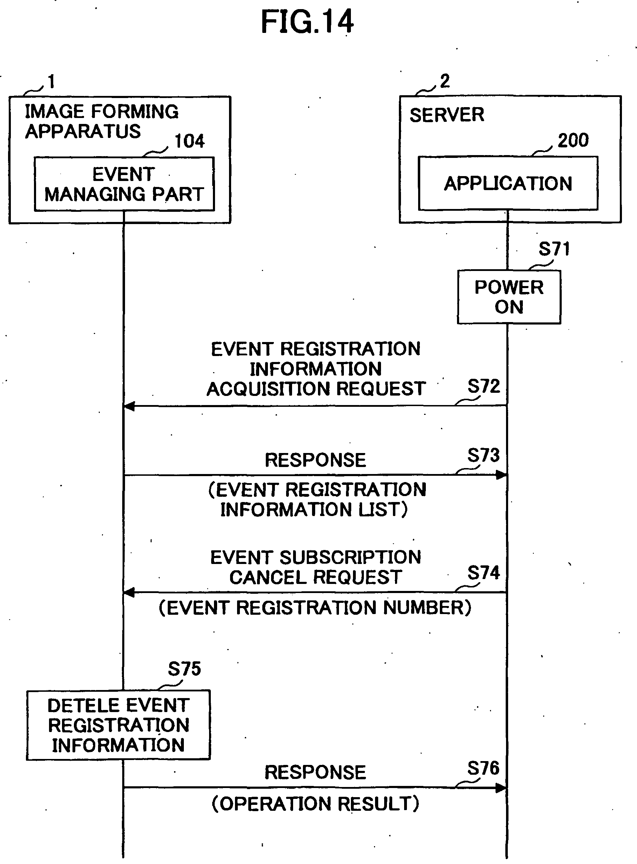

FIG. 14 is a diagram showing a sequence flow of the delete process of the event registration information according to the present invention. It should be noted that in FIG. 14, steps S71, S72, and S73 are conducted similar to the steps S51, S52, and S53 in FIG. 12, explanation thereof will be omitted.

The delete process advances to step S74. The application 200 of the server 2 sends an event subscription cancel request to the event managing part 104 of the image forming apparatus 1 in order to request canceling the event subscription, based on the event registration information list sent in the step S73. The event subscription cancel request sent in the step.S74 includes the event registration number. The delete process advances to step S75. In the step S75, the event managing part 104 of the image forming apparatus 1 deletes the event registration information from the event management information TB 125 based on the event registration number included in the event subscription cancel request sent in the step S74. The event subscription is canceled by deleting the event registration information from the event management information TB 125, and the delete process is terminated.

Subsequently, the delete process advances to step S76. In the step S76, the event managing part 104 of the image forming apparatus 1 sends a response with respect to the step S72 to the application 200 of the server 2. For example, the response in the step S76 includes the operation result. As described above, according to the delete process of the event registration information in accordance with the sequence flow shown in FIG. 14, it is possible to delete the event registration information.

The image forming apparatus 1 sends an event notification when the job is stopped due to an error. For example, in a case in that the error is a physical error such as a paper jam, a paper shortage, or a like, after a cause of the error is manually eliminated, a process resumes from a middle of the job.

### - Second Variation -

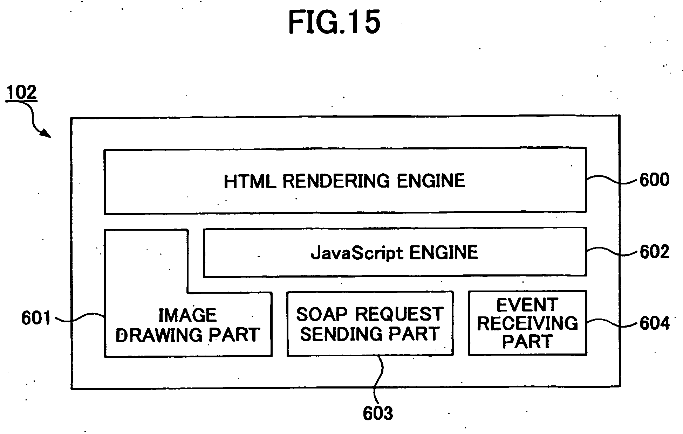

In the system 9001 using Web services in the first variation, for example, the event notification destination is the server 2. Instead, the event notification destination may be the Web browser 102. When the event notification is received, the Web browser 102 can be configured as shown in FIG. 15. FIG. 15 is a schematic diagram showing a module structure of the Web browser 102 which receives the event notification according to the present invention.

The Web browser 102 in FIG. 15 includes an HTML (HyperText Markup Language) rendering engine 600, an image drawing part 601, a JavaScript™ engine 602, a SOAP request sending part 603, and an event receiving part 604. The Web browser 102 in FIG. 15 realizes the event receiving part 604 which can receive the event notification, and the image drawing part 602 which can create image data and update a screen based on the event notification, by JavaScript™ data received from the server 2 and the JavaScript™ engine 602.

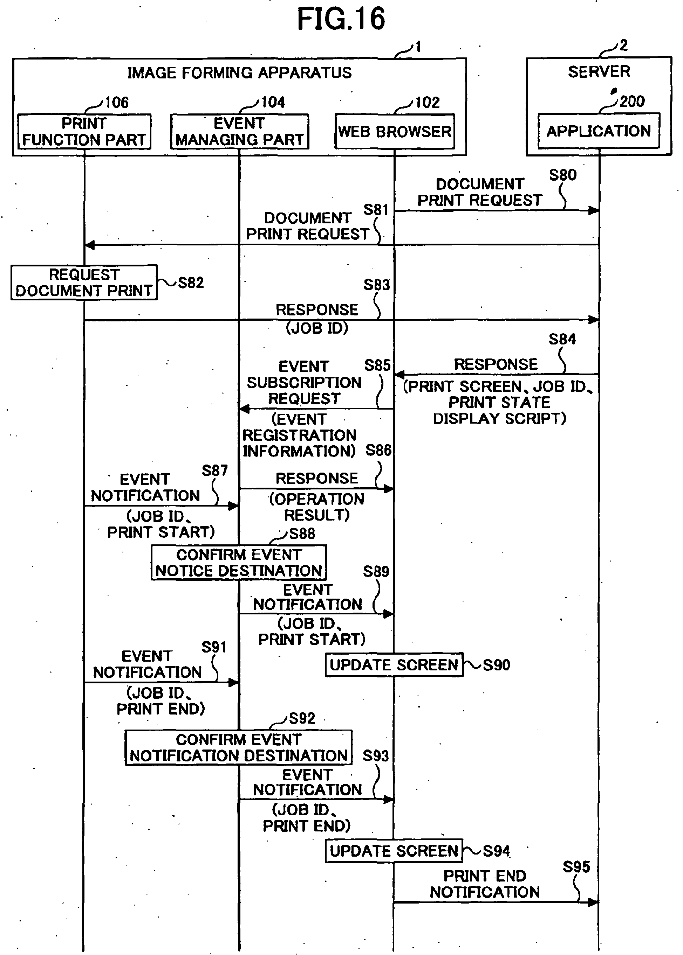

In the following, an event notification process in the system 9001 using Web services will be described with reference to FIG. 16 in that the event notification destination is the Web browser 102. FIG. 16 is a diagram showing a sequence flow of the event notification process according to the present invention. In the sequence flow in FIG. 16, the event notification process is illustrated in a case in that a document is printed at the image forming apparatus 1 of the system 9001 using Web services in FIG. 2.

When a user instructs printing a document from the operation part 109, the event notification process advances to step S80. In the step S80, and the Web browser 102 sends a document print instruction to the Web server 204 of the server 2 in order to instruct printing the document. Web server 204 sends the document print instruction to the screen flow controlling part 201. The screen flow controlling part 201 sends the document print instruction to the Web service client 205.

The event notification process advances to step S81. In the step S81, the Web service client 205 included in the application 200 sends a document print request to the print function part 106 through the Web service server 103 of the image forming apparatus 1, in order to request printing a document. The event notification process advances to step S82. In the step S82, the print function part 106 sends the document print request to the plotter 10. The event notification process advances to step S83. In the step S83, the print function part 106 sends a response to the Web service client 205 included in the application 200 of the server 2 through the Web service server 103. The response sent in the step S83 includes a job ID. The Web service client 205 sends a response with respect to the document print instruction to the screen flow controlling part 201.

The event notification process advances to step S84. In the step S84, the screen flow controlling part 201 sends a response with respect to the document print instruction to the Web server 204. The Web server 204 sends a response with respect to the step S80 to the Web browser 102 of the image forming apparatus 1. The response sent in the step S84 includes screen data of a print screen, a job ID, and print state display script data. It should be noted that the print state display script data are JavaScript™ for realizing the module structure of the Web browser 102 in FIG. 15.

The event notification process advances to step S85. In the step S85, the SOAP request sending part 603 of the Web browser 102 sends an event subscription request to the event managing part 104 of the image forming apparatus 1, in order to request subscribing an event. The event subscription request sent in the step S85 includes event registration information indicating the event notification destination and a timing of the event notification, event notification contents, and a like. It should be noted that the application 200 of the server 2 may send the event subscription request as explained in the first variation.

Subsequently, the event notification process advances to step S86. In the step S86, the event managing part 104 of the image forming apparatus 1 sends a response with respect to the step S85 to the Web browser 102. For example, the response sent in the step S86 includes an operation result.

The event notification process advances to the step S87. In the step S87, the print function part 106 of the image forming apparatus 1 sends an event notification to the notification function part 122 of the event managing part 104 through.the Web service server 103. The event notification sent in the step S87 includes information indicating a job ID and a job state "print start".

The event notification process advances to step S88. In the step S88, the notification function part 122 refers to the event management information TB 125 as shown in FIG. 6, and confirms an event notification destination. The notification function part 122 acquires an address of the Web browser 102 as the event notification destination from the event management information TB 125, in response to the job state "print start" indicated in the event notification sent in the step S87.

The event notification process advances to step S89. In the step S89, the notification function part 122 sends an event notification to the event receiving part 604 of the Web browser 102 through the notification sending part 121. The even notification sent in the step S89 includes information indicating the job ID and the job state "print start". The event notification process advances to step S90. In the step S90, the image drawing part 601 of the Web browser 102 creates the screen data based on the job state "print start", and updates the screen.

The event notification process advances to step S91. In the step S91, the print function part 106 of the image forming apparatus 1 sends an event notification to the notification function part 122 of the event managing part 104 through the Web service server 103 in response to an event indicating a print end. The event notification sent in step S91 includes information indicating the job ID and a job state "print end".

The event notification process advances to step S92. In the step S92, the notification function part 122 refers to the event management information TB 125 as shown in FIG. 6, and confirms the event notification destination. The notification function part 122 acquires the address of the Web browser 102 as the event notification destination from the event management information TB 125, in response to the job state "print end" indicated in the event notification.

The event notification process advances to step S93. In the step S93, the notification function part 122 sends the event notification to the event receiving part 604 of the Web browser 102 through the notification sending part 121. The event notification sent in the step S93 includes information indicating the job ID and the job state "print end". The event notification process advances to step S94. In the step S94, the drawing part 601 of the Web browser 102 creates the screen data based on the job state "print end", and updates the screen. Then, the event notification process advances to step S95. In the step S95, the Web browser 102 informs a document print end to the Web server 204 included in the application 200 of the server 2.

According to the event notification process in accordance with a sequence flow shown in FIG. 16, when an event occurs in the image forming apparatus 1, it is possible to change contents to be included in the event notification destination and the event notification in accordance with the event management information TB 125 of the event managing part 104.

### - Third Variation -

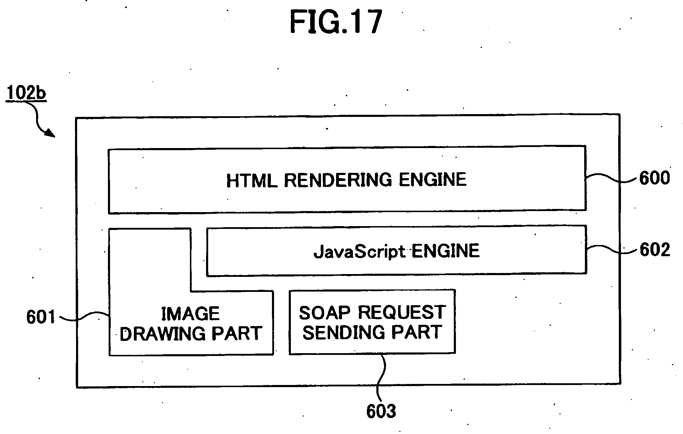

In the first variation and the second variation, the event notification is sent by a push-type information delivery in the system 9000 using Web services. In a third variation, instead, the job state may be acquired by a pull-type information delivery using polling. In a case of acquiring the job state by the polling, the Web browser 102 can be configured as shown in FIG. 17. FIG. 17 is a schematic diagram showing a module structure of a Web browser 102b which acquires the job state by the polling according to the present invention.

The Web browser 102b in FIG. 17 includes an HTML rendering engine 600, an image drawing part 601, a JavaScript™ engine 602, and a SOAP request sending part 603. The Web browser 102b in FIG. 17 realizes the SOAP request sending part 603 which can acquire the job state by the polling, and the image drawing part 601 which can create image data and update a screen based on the job state, by JavaScript™ data received from the server 2 and the JavaScript™ engine 602.

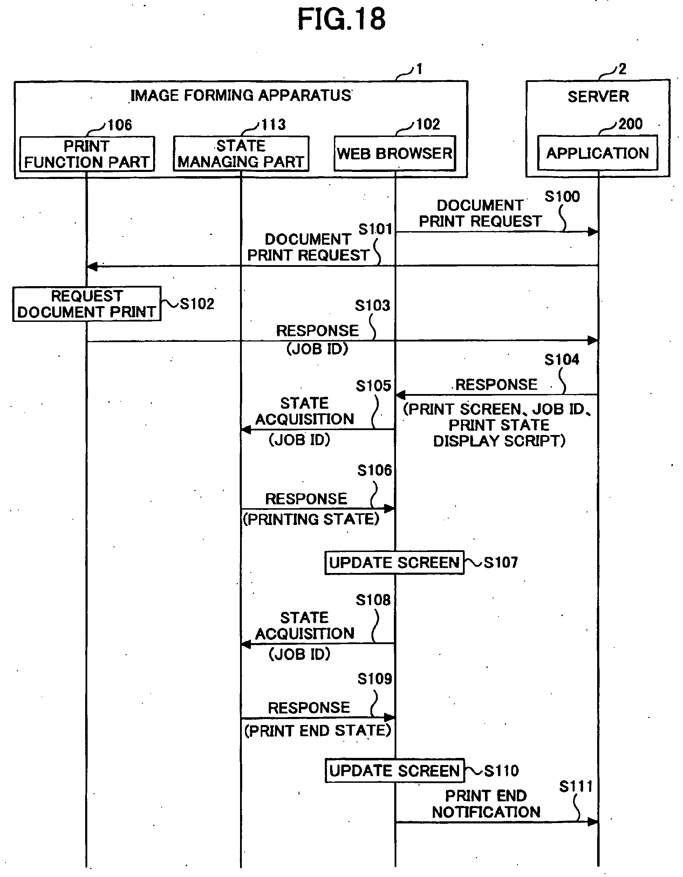

In the following, a system 9004 using Web services, which acquires the job state from the Web browser 102b from the polling. FIG. 18 is a diagram showing a sequence flow of a state acquiring process according to the present invention. In the sequence flow in FIG. 18, explanations of steps, which are the same as the ones in FIG. 16, will be omitted.

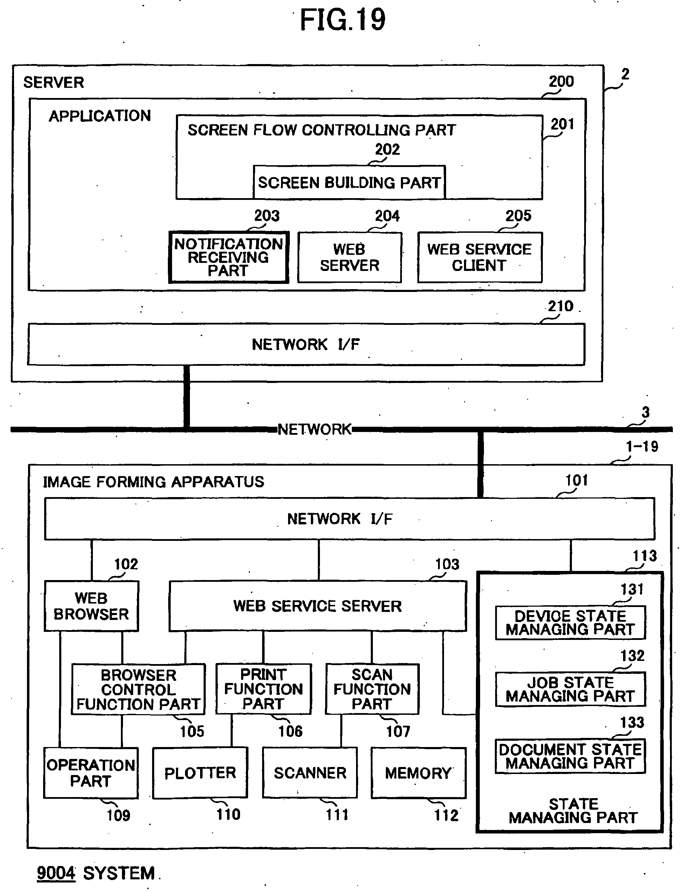

The sequence flow in FIG. 18 is one example of the state acquiring process when a document is printed at an image forming apparatus 1-19 of the system 9004 using Web services in FIG. 19. FIG. 19 is a diagram showing a configuration of the system 9004 using Web services according to the present invention.

In the system 9004 using Web services shown in FIG. 19, an image forming apparatus 1-19, and a server 2 are connected to each other through a network 3. The image forming apparatus 1-19 includes a state managing part 113, instead of the event managing part 104 included in the image forming apparatus 1 shown in FIG. 2. The state managing part 113 includes a device state managing part 131, a job state managing part 132, and a document state managing part 133. In the system 9004 shown in FIG. 19, parts that are the same as the ones in the system 9001 shown in FIG. 2 are indicated by the same reference numerals, and explanations thereof will be omitted.

Steps S100, S101, S102, S103, and S104 in the sequence flow in FIG. 18 are the same as the step S80, S81, S82, S83, and S84 in the sequence flow in FIG. 16. The state acquiring process advances to step S105. In the step S105, the SOAP request sending part 603 of the Web browser 102 sends a state acquisition request to the state managing part 113 of the image forming apparatus 1-19, in order to request acquiring a job state. The state acquisition request sent in the step S105 includes a job ID. Subsequently, the state acquiring process advances to step S106. In the step S106, the state managing part 113 of the image forming apparatus 1-19 sends a response with respect to the step S105, to the Web browser 102. The response sent in the step S106 includes information indicating the job state "print running". The state acquiring process advances to step S107. In the step S107, the image drawing part 601 of the Web browser 102 creates screen data based on the job state "print running", and updates a screen.

The state acquiring process advances to step S108. In the step S108, the SOAP sending part 603 of the Web browser 102 sends the state acquisition request to the state managing part 113 of the image forming apparatus 1-19 after a predetermined time lapses from the step S105. Subsequently, the state acquiring process advances to step S109. In the step S109, the state managing part 113 of the image forming apparatus 1-19 sends a response with respect to the step S108, to the Web browser 102. The response sent in the step S109 includes information indicating the job state "print end". The event acquiring process advances to step S110. In the step S110, the image drawing part 601 of the Web browser 102 creates image data based on the job state "print end", and updates a screen by using the image data. Then, the state acquiring process advances to step S111. In the step S111, the Web browser 102 sends a print end notification to the Web server 204 included in the application 200 of the server 2, in order to inform the end of printing the documents.

According to the state acquiring process in accordance with the sequence flow shown in FIG. 18, it is possible for the Web browser 102 to acquire the job state by the pull type information delivery.

### - Fourth Variation -

In the system 9004 in the third variation, the Web browser 102 can acquire the job state by the polling. Instead, the server 2 may acquire the job state by the polling.

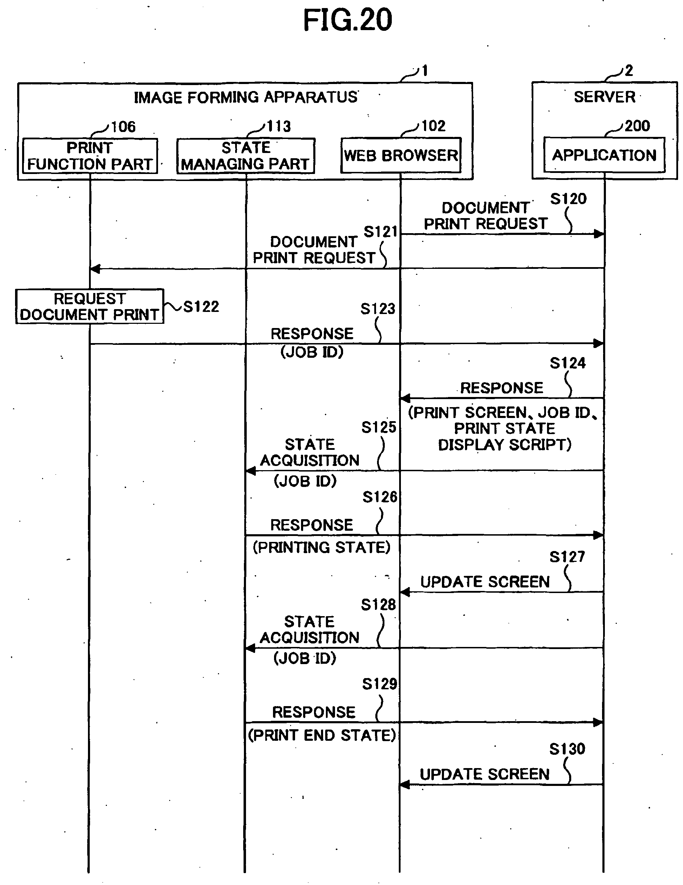

In the following, another state acquiring process for the server 2 to acquire the job state by the polling will be described in the system 9004 using Web services. FIG. 20 is a diagram showing a sequence flow of another state acquiring process according to the present invention. In the sequence flow in FIG. 20, explanations of steps, which are the same as the ones in FIG. 18, will be omitted.

The sequence flow in FIG. 20 is another example of the state acquiring process when a document is printed at the image forming apparatus 1-19 of the system 9004 using Web services in FIG. 19. Steps S120, S121, S122, S123, and S124 in the sequence flow shown in FIG. 20 are the same as the steps S100, S101, S102, S103, and S104 in the sequence flow shown in FIG. 18, and explanations thereof will be omitted.

The state acquiring process advances to step S125. In the step S125, the Web service client 205 included in the application 200 of the server 2 sends a state acquisition request to the state managing part 113 of the image forming apparatus 1-19 through the Web service server 103 of the image forming apparatus 1019. The state acquiring process advances to step S125. The state acquisition request sent in the step S125 includes the job ID. The state acquiring process advances to step S126. In the step S126, the state managing part 113 of the image forming apparatus 1-19 sends a response with respect to the step S125, to the application 200 of the server 2. The response sent in step S126 includes information indicating the job state "print running".

The state acquiring process advances to step S127. In the step S127, the application 200 of the server 2 sends a screen update request to the Web browser 102 of the image forming apparatus 1-19. The image drawing part 601 of Web browser 102 creates image data based on the job state "print running".

The state acquiring process advances to step S128. In the step S128, the Web service client 205 included in the application 200 of the server 2 sends a state acquisition request to the state managing part 113 of the image forming apparatus 1-19 through the Web service server1 103 of the image forming apparatus 1-19, after a predetermined time lapses from the step S125.

The state acquisition request sent in step S128 includes the job ID. The state acquiring process advances to step S129. In the step S129, the state managing part 113 of the image forming apparatus 1-19 sends a response with respect to the step S128, to the application 200 of the server 2. The response sent in the step S129 includes information indicating the job state "print running".

The state acquiring process advances to step S130. In the step S130, the application 200 of the server 2 sends a screen update request to the Web browser 201 of the image forming apparatus 1-19. The image drawing part 601 of the Web browser 102 creates image data based on the job state "print end", and updates a screen.

According to the state acquiring process in accordance with the sequence flow shown in FIG. 20, the server 2 can acquire the job state by the pull type information delivery.

According to the present invention, it is possible to provide a system using services, an image handling apparatus, an external processing apparatus, a state change sending method, and a program product performed by a computer for sending a change of a state, which can promptly send a change of a state in running an image handling process at its own side in a case of having the external processing apparatus conduct at least a part of the image handling process concerning services.

In the following, an image forming apparatus will be described as one example of an image handling apparatus. However, the following is not limited to the image forming apparatus. Moreover, a Web service will be described as one example of a service controlling a function through a network, but the service is not limited to the Web service.

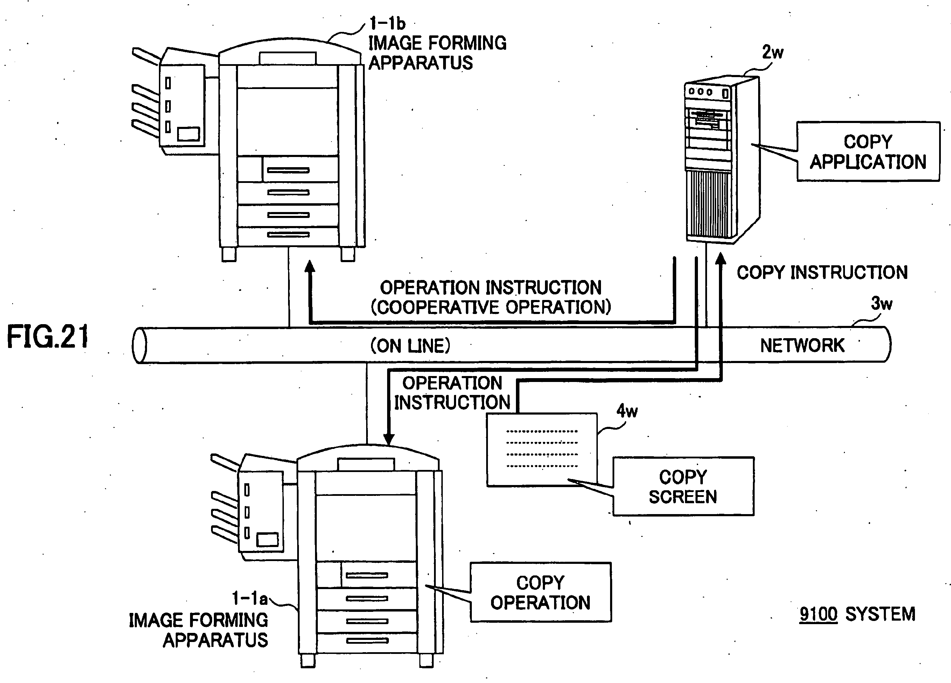

FIG. 21 is a conceptual diagram showing a basic configuration of a system 9100 using Web services. In the system 9100 using Web services, at least one or more image forming apparatuses 1-1a and 1-1b, and a server 2w are connected to each other through a network 3w such as a LAN (Local Area Network), the Intranet, or a like.

The server 2w includes a copy application. Moreover, each of the image forming apparatuses 1-1a and 1-1b includes one or more image forming functions (a scan function, a print function, and a like), and provides one or more Web services controlling the image forming functions through the network 3w. Furthermore, the image forming apparatus 1-1a includes an operation part capable of displaying a Web browser.

In the system 9100 using Web services, the Web services provided by the image forming apparatuses 1-1a and 1-1b are used and the copy application is built up on the server 2w. A user interface of the copy application is provided by a Web server of the server 2w. The image forming apparatus 1-1a displays a user interface 4w of the copy application by using the Web browser being as a Web client at the operation part. A user can operate the copy application built up on the server 2w via the user interface 4w of the copy application displayed at the operation part.

When the user instructs a copy operation from the user interface 4w of the copy application, a copy instruction is sent from the Web browser of the image forming apparatus 1-1a to the Web server of the server 2w in response to the copy instruction. When the image forming apparatus 1-1a and the image forming apparatus 1-1b cooperate with each other, the copy application of the server 2w sends the operation instruction to the Web service server of the image forming apparatus 1-1b. Concerning security, communications between each of the image forming apparatuses 1-1a and 1-1b and the server 2w can be conducted by using a SSL (Secure Socket Layer) or a like.

As described above, in the system 9100 using Web services in FIG. 21, it is possible to substitute the special interface for the device control, the special user interface, and the special programming manner for the image forming apparatus with the Web services provided by the image forming apparatuses 1-1a and 1-1b. Accordingly, it is possible to develop and customize the application for controlling the functions of the image forming apparatuses 1-1a and 1-1b by using technologies such as a technology for building the Web application.

In the system 9100 using Web services in FIG. 21, the communication between each of the image forming apparatuses 1-1a and 1-1b and the server 2w is required to be an online (communicable state). However, for example, the image forming apparatuses 1-1a and 1-1b are installed at an office, and are used as a printer, a copier, a facsimile, a scanner, or a like. Thus, it is a problem if the image forming apparatuses 1-1a and 1-1b are not available during an offline.(not communicable state).

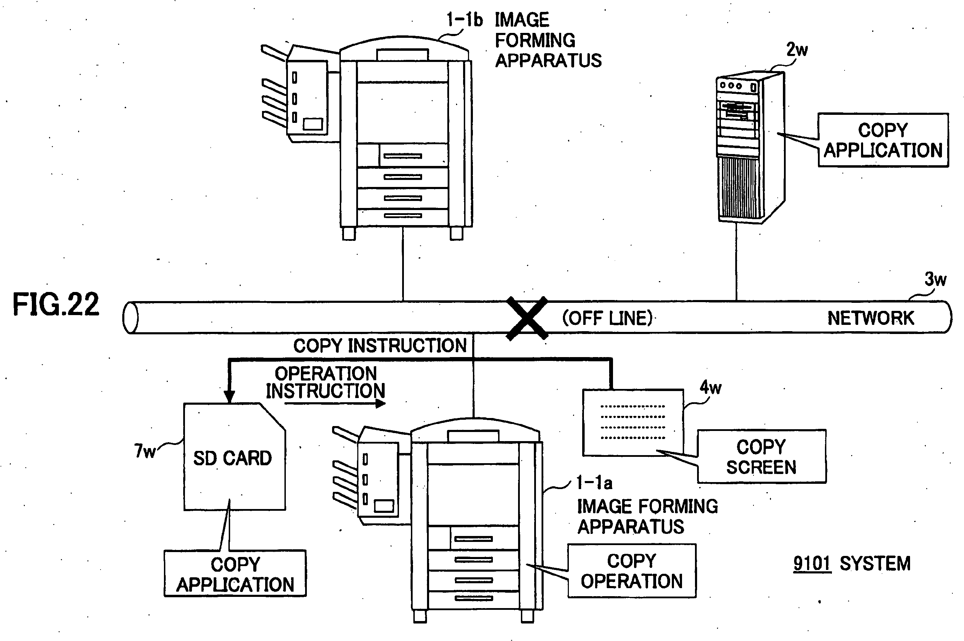

Thus, a system 9101 using Web services, minimum operations of which are available even in a case in that the communication the image forming apparatuses 1-1a and 1-1b, and the server 2w is in the offline state, will be described in the following. FIG. 22 is a conceptual diagram showing a configuration of the system 9101 using Web services.

In the system 9101 using Web service in FIG. 22, the communication between each of the image forming apparatuses 1-1a and 1-2b and the server 2w is in an offline state. For example, in order to realize data communications during the offline state, an SD (Secured Digital) memory card (hereinafter, called a SD card) 7w as an example of a recording part is mounted to a slot of the image forming apparatus 1-1a. The copy application is stored in the SD card 7w.

The image forming apparatus 1-1a includes one or more functions as the same as the Web service system in FIG. 21. Moreover, the image forming apparatus 1-1a includes an operation part capable of displaying a Web browser. When the network 3w is in the offline state, the image forming apparatus 1-1a reads the copy application from the SD card 7w, builds up the copy application in its own apparatus, and displays a user interface 4w at the operation part. When the network 3w is in the offline state, it is possible to operate the copy application built in the image forming apparatus 1-1a, from the user interface 4w of the copy application displayed at the operation part.

When the user instructs the copy operation from the user interface 4w of the copy application, a copy instruction is sent to the copy application built in the image forming apparatus 1-1a. The copy application sends the operation instruction to the function included in the image forming apparatus 1-1a.

As described above, in the system 9101 using Web services, the copy application is stored in the recording part capable of conducting the data communication even if the network 3w is in the offline state. Even if the communication between each of the image forming apparatuses 1-1a and 1-1b and the server 2w is in the offline state, it is possible to operate the copy application. For example, it is preferable to store an application, which have the image forming apparatus 1-1a conduct a minimum of operations even if the network 3w is in the offline state, to the SD card 7w.

Alternatively, the most essential image forming application such as a printer application, a copy application, a facsimile application, a scanner application, or a like is implemented in the image forming apparatus 1-1a, and may be used if the communication to the server 2w is in the offline state.

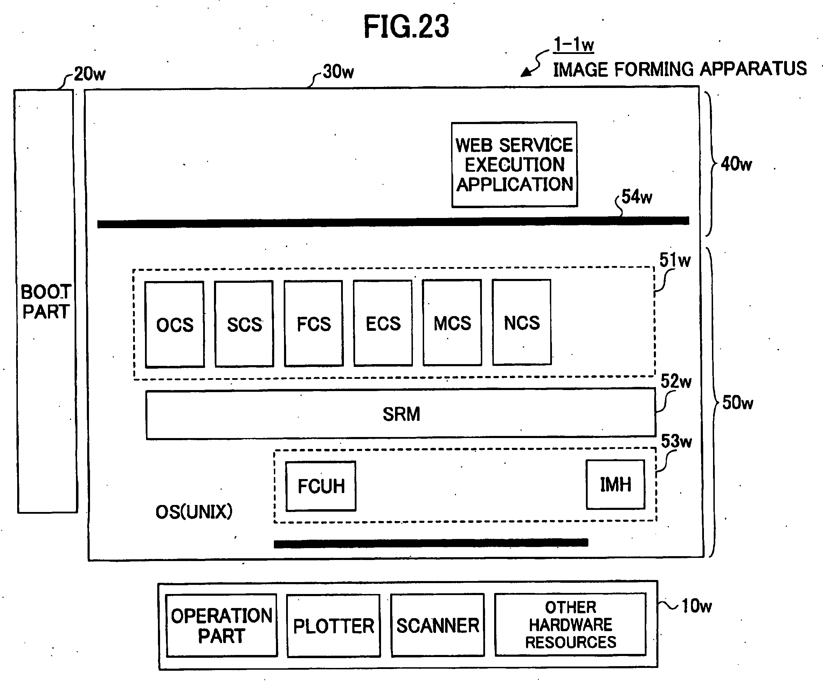

Next, configurations of the image forming apparatus 1-1a and 1-1b will be described. In the following, the image forming apparatus 1-1a and 1-1b are collectively called an image forming apparatus 1-1w. FIG. 23 is a diagram showing a configuration of the image forming apparatus 1-1w. In FIG. 23, the image forming apparatus 1-1w includes a hardware resource 10w, a boot part 20w, and a software group 30w.

The hardware resource 10w includes devices (hardware resources) such as an operation part, a plotter, a scanner, and a like. The software group 30w includes an application 40w, and a platform 50w. The boot part 20w is initially executed when the image forming apparatus 1-1w, and the application 40w and the platform 50w are activated on an OS (Operating System).

The application 40w includes a Web service execution application. The platform 50w includes a control service 51w, an SRM (System Resource Manager) 52W, and a handler layer 53w. Moreover, the platform 50w includes an API (Application Program Interface) 54w.

The control service 51w includes an OCS (Operating part Control Service), an SCS (System Control Service), an FCS (Facsimile Control Service), an ECS (Engine Control Service), an MCS (Memory Control Service), and an NCS (Network Control Service). The handler layer 53w includes an FCUH (Facsimile Control Unit Handler) and an IMH (Image Memory Handler).

Alternatively, the most essential image forming application such as a print application, a copy application, a facsimile application, or a like may be implemented in the application 40w, and may be used when the communication to the server 2w is in the offline state. In this case, the image forming apparatus 1-1w uses the image forming application of the server 2w in the online state, and uses the image forming application mounted in its own apparatus in the offline state.

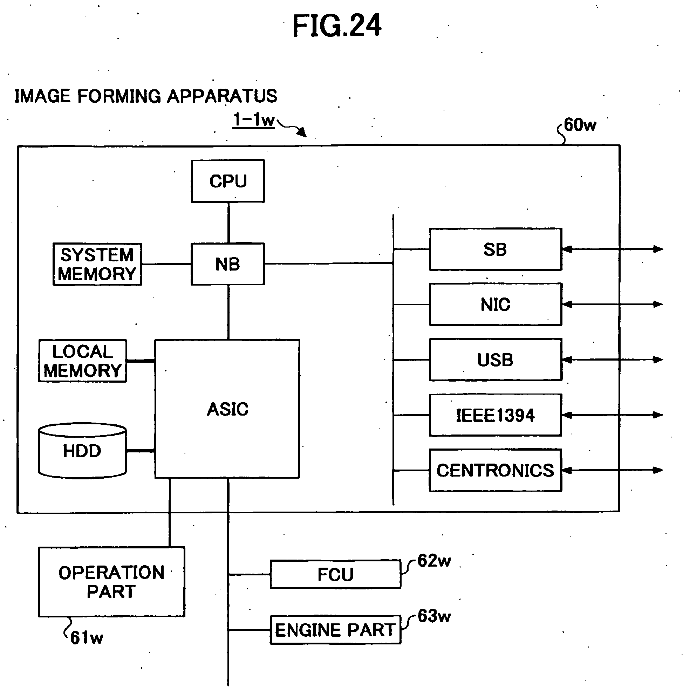

FIG. 24 is a diagram a hardware configuration of the image forming apparatus 1-1w. The image forming apparatus 1-1w includes a controller 60w, an operation part 61w, an FCU 62w, and an engine part 63w.

The controller 60w includes a CPU (Central Processing Unit), a system memory, a local memory, an HDD (Hard Disk Drive), an NB (North Bridge), an ASIC (Application Specific Integrated Circuit), an SB (South Bridge), an NIC (Network Interface Card), a USB (Universal Serial Bus) I/F, an IEEE1394 I/F, and a centronics I/F.

For example, Japanese Laid-open Patent Application No. 2002-84383 discloses details of operations of each of functional blocks configuring the image forming apparatus 1-1w shown in FIG. 23 and details of operations of each of hardware blocks configuring the image forming apparatus 1-1w shown in FIG. 24. In the following, configurations and processes of systems using Web services as modifications of the system 9101 will be described in detail.

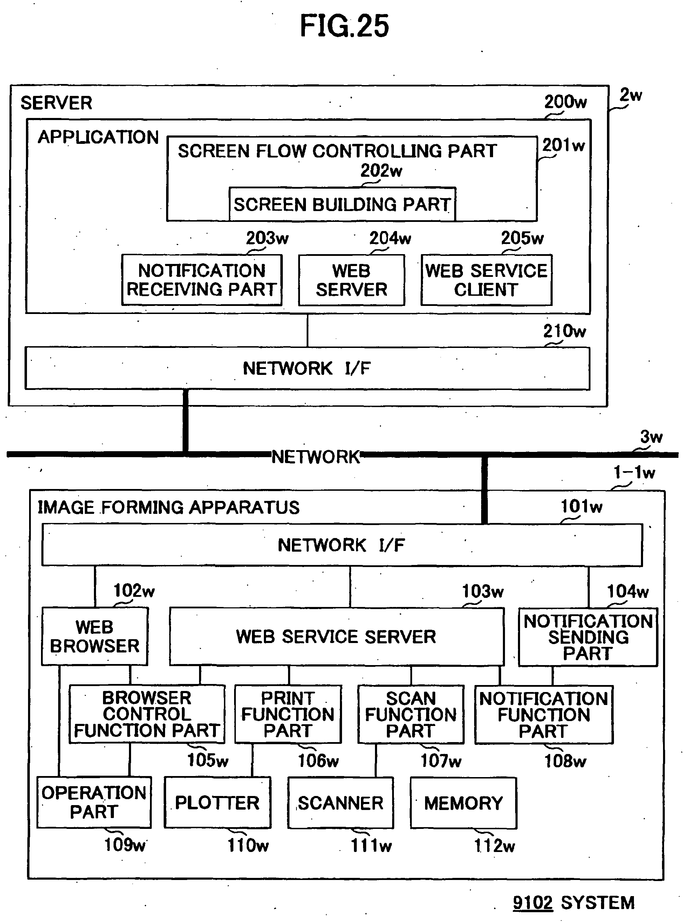

FIG. 25 is a diagram showing a configuration of a system 9102 using Web services. In the system 9102 using Web services in FIG. 25, the image forming apparatus 1-1w and the server 2w are connected to each other through the network 3w.

The image forming apparatus 1-1w includes a network I/F 101w, a Web browser 102w, a Web service server 103w, a notification sending part 104w, a browser control function part 105w, a print function part 106w, a scan function part 107w, a notification function part 108w, an operation part 109w, a plotter 110w, a scanner 111w, and a memory 112w.

Moreover, the server 2w includes an application 200w, and a network I/F 210w. The application 200w includes a screen flow controlling part 201w, a screen building part 202w, a notification receiving part 203w, a Web server 204w, and a Web service client 205w.

In the system 9102 using Web services in FIG. 25, an MVC model forming a "Model" module, a "View" module, and a "Controller" module is structured. The "Model" module handles logic. The "View" module handles to display, input, and output information. The "Controller" module handles to control the "Model" module and the "View" module. In detail, the "Controller" requests the "Model" module to execute necessary logic in response to an input from the "View" module, and requests the "View" module to display a result.

For example, the "View" module in the system 9102 using Web services in FIG. 25 builds a user interface on the server 2w, displays the user interface at a Web browser 102w on the image forming apparatus 1-1w, and conducts to input and output information such as setting values. For example, the "View" module displays information, changes a display of information, instructs a change of information, and instructs an execution of a process.

The "View" module is a Web service for controlling an image forming function such as the scan function part 107w. For example, the "Model" module activates the scanner 111w by the scan function part 107w, and digitizes an image. The "Controller" module uses a suitable Web service provided from the server 2w in response to a request from the Web browser 102w.

For example, when the "Controller" module receives an execution instruction of a copy process, the "Controller" module executes a scan process with the scan function part 107w in accordance with process contents, and executes a print by the print function part 106w. That is, the "Controller" module implements logic of an image forming application.

In response to an instruction from a view displayed at the operation part 109w of the image forming apparatus 1-1w, the "Controller" module of the server 2w executes a suitable "Model" module of the image forming apparatus 1-1w. Accordingly, it is possible for the user of the image forming apparatus 1-1w to use the image forming application of the server 2w as if the user uses the application of the image forming apparatus 1-1w.

In the system 9102 using Web service, a user interface is built in a user interface for the Web browser, a device control is conducted in the Web service client, an execution environment is in the server 2w, and a programming manner is in the Web service. Thus, it is possible to develop and customize an application.

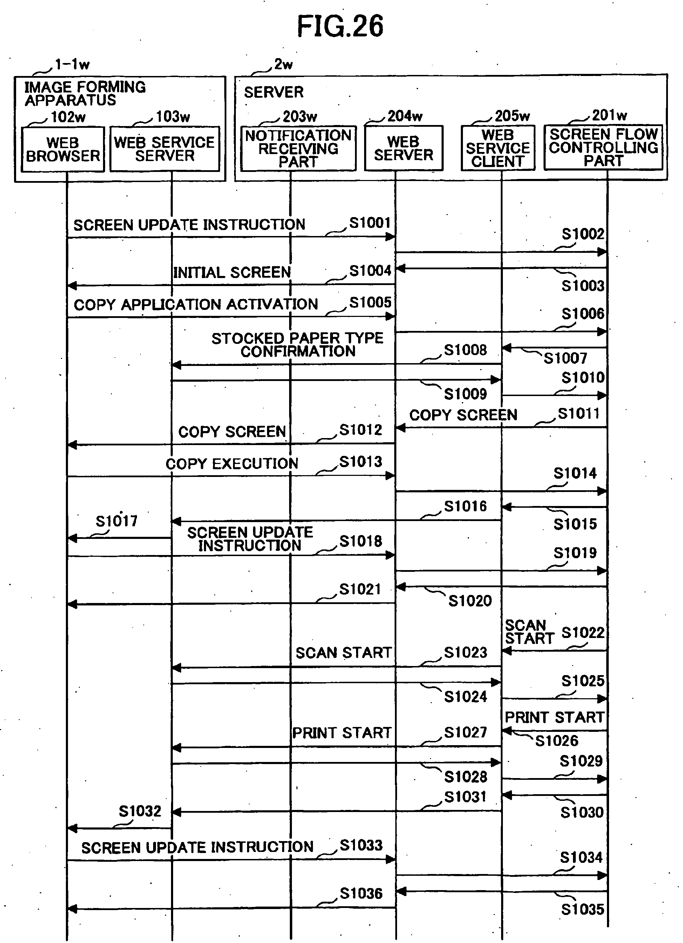

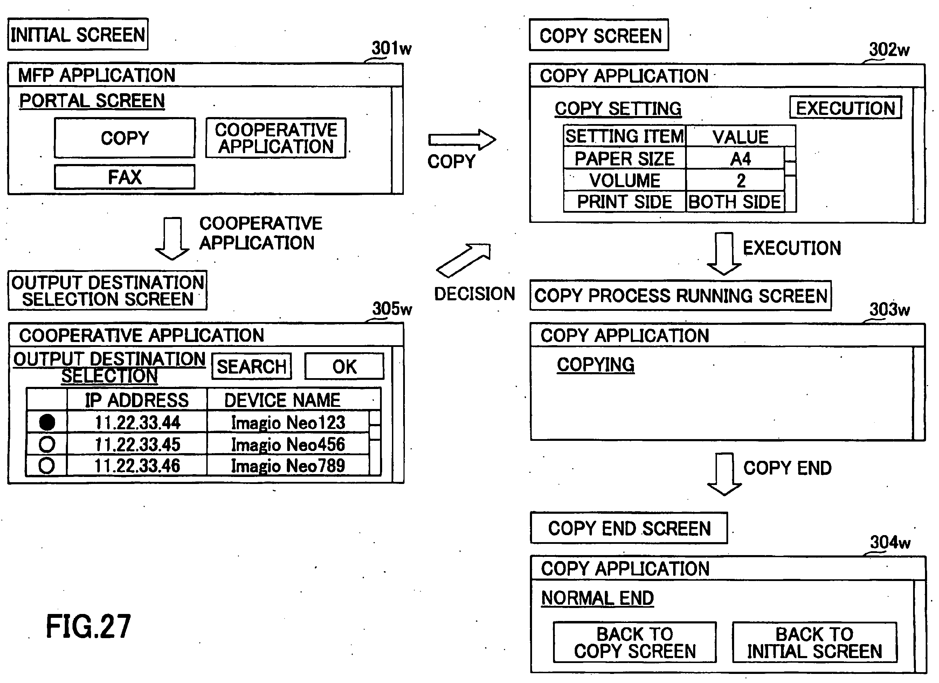

Next, a copy process will be described as one example of processes conducted by the system 9102 using Web services shown in FIG. 25. FIG. 26 is a diagram showing a sequence flow of the copy process as one example of the processes conducted by the system 9102 using Web services. FIG. 27 is a diagram a screen transition of screens displayed at the operation part 109w of the image forming apparatus 1-1w.

For example, when a power is turned on, the copy process advances to step S1001. In the step S1001, the Web browser 102w of the image forming apparatus 1-1w sends a screen update instruction to the Web server 204w of the server 2w in order to instruct updating a screen. The copy process advances to step S1002. In the step S1002, the Web server 204w sends the screen update instruction to the screen flow control part 201w. The copy process advances to step S1003. In the step S1003, the screen flow control part 201w generates an initial screen data, and sends the initial screen data to the Web server 204w. The copy process advances to step S1004. In the step S1004, the Web server 204w sends the initial screen data to the Web browser 102w of the image forming apparatus 1-1w. The Web browser 102w displays an initial screen 301w corresponding to the initial screen data at the operation part 109w.

When the user instructs activating the copy application from the operation part 109w, the Web browser 102w advances to step S1005. In the step S1005, the Web browser 102w sends a copy application activation instruction to the Web server 204w of the server 2w in order to instruct activating the copy application. The copy process advances to step S1006. In the step S1006, the Web server 204w sends the copy application activation instruction to the screen flow controlling part 201w.

The copy process advances to step S1007. In the step S1007, the screen flow controlling part 201w sends stocked paper type confirmation instruction to the Web service client 205w in order to instruct confirming a stocked paper type. The copy process advances to step S1008. In the step S1008, the Web service client 205w sends the stocked paper type confirmation instruction to the Web service server 103w of the image forming apparatus 1-1w. The copy process advances to step S1009. In the step S1009, the Web service server 103w confirms the stocked paper type by the print function part 106w, and sends the stocked paper type to the Web service client 205w of the server 2w. The copy process advances to step S1010. In the step S1010, the Web service client 205w sends the stocked paper type to the screen flow controlling part 201w.

The copy process advances to step S1011. In the step S1011, the screen flow controlling part 201w generates copy screen data, and sends the copy screen data to the Web server 204w. The copy process advances to step S1012. In the step S1012, the Web server 204 sends the copy screen data to the Web browser 102w of the image forming apparatus 1-1w. The Web browser 102w displays a copy screen 302w corresponding to the copy screen data at the operation part 109w.

When the user instructs an execution of the copy process from the operation part 109w by pressing a "EXECUTION" button of the copy screen 302w or a like, the copy process advances to step S1013. In the step S1013, the Web browser 102w sends a copy execution instruction to the Web server 204w of the server 2w. The copy process advances to step S1014. In the step S1014, the Web server 204w sends the copy execution instruction to the screen flow controlling part 201w.

The copy process advances to step S1015. In the step S1015, the screen flow controlling part 201w sends a request of the screen update instruction to the Web service client 205w. The request of the screen update instruction is made by the screen flow controlling part 201w of the server 2w so that the Web browser 102w of the image forming apparatus 1-1w sends the screen update instruction to the Web server 204w of the server 2w.

The copy process advances to step S1016. In the step S1016, the Web service client 205w sends the request of the screen update instruction to the Web service server 103w of the image forming apparatus 1-1w. The copy process advances to step S1017. In the step S1017, the Web service server 103w sends the request of the screen update instruction to the Web browser 102w through the browser control function part 105w.

When the Web browser 102w of the image forming apparatus 1-1w receives the request of the screen update instruction, the copy process advances to step S1018. In the step S1018, the Web browser 102w of the image forming apparatus 1-1w sends the screen update instruction to the Web server 204w of the server 2w. The copy process advances to step S1019. In the step S1019, the Web server 204w sends the screen update instruction to the screen flow controlling part 201w. The process advances to step S1020. In the step S1020, the screen flow controlling part 201w generates copy process running screen data to show that the copy process is running, and sends the copy process running screen data to the Web server 204w. The copy process advances to step S1021. In the step S1021, the Web server 204w sends the copy process running screen data to the Web browser 102w of the image forming apparatus 1-1w. The Web browser 102w displays a copy process running screen 303w corresponding to the copy process running screen data.

The copy process advances to step S1022. In the step S1022, the screen flow controlling part 201w of the server 2w sends a scan start instruction to the Web service client 205w to instruct scanning. The copy process advances to step S1023. In the step S1023, the Web service client 205w sends the scan start instruction to the Web service server 103w of the image forming apparatus 1-1w. The Web service server 103w controls the scanner 111w by the scan function part 107 to execute a scan. When the scan ends, the print process advances to step S1024. In the step S1024, the Web service server 103w informs a scan end to the Web service client 205w. The print process advances to step S1025. In the step S1025, the Web service client 205w informs the scan end to the screen flow controlling part 201w.

The copy process advances to step S1026. In the step S1026, the screen flow controlling part 201w of the server 2w sends a print start instruction to the Web service client 205w in order to instruct printing. The copy process advances to step S1027, the Web service client 205w sends the print start instruction to the Web service server 103w of the image forming apparatus 1-1w. The Web service server 103w controls the plotter 110 by the print function part 106w to execute a print. When the print ends, the copy process advances to step S1028. In the step S1028, the Web service server 103w informs a print end to the Web service client 205w. The copy process advances to step S1029. In the step S1029, the Web service client 205w informs the print end to the screen flow controlling part 201w.

In steps S1030, S1031, and S1032 similar to the steps S1015, S1016, and S1017, the screen update instruction is requested from the screen flow controlling part 201w of the server 2w to the Web browser 102w of the image forming apparatus 1-1w. In steps S1033 and S1034 similar to the steps S1018 and S1019, the Web browser 102w of the image forming apparatus 1-1w sends the screen update instruction from the Web browser 102w of the image forming apparatus 1-1w to the screen flow controlling part 201w of the server 2w.

The copy process advances to step S1035. In the step S1035, the screen flow controlling part 201w generates copy end screen data to show that the copy process ends, and sends the copy end screen data to the Web server 204w. The copy process advances to step S1036. In the step S1036, the Web server 204w sends the copy end screen data to the Web browser 102w of the image forming apparatus 1-1w. The Web browser 102w displays a copy end screen 304w corresponding to the copy end screen data at the operation part 109w.

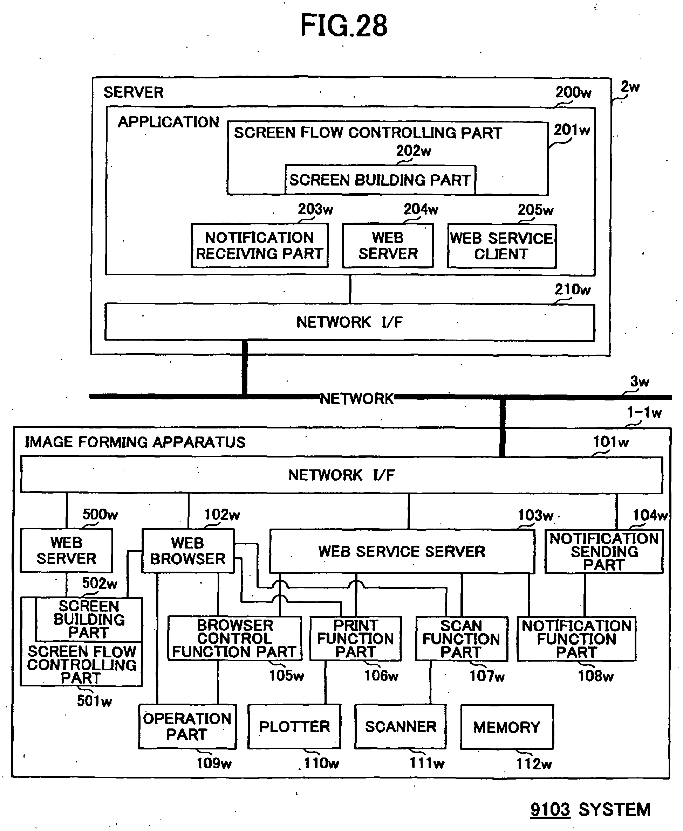

In the system 9102 using Web services in FIG. 25, the Web browser 102w of the image forming apparatus 1-1w receives various screen data from the Web server 204w, and displays screens corresponding the various screen data at the operation part 109w. In this case, performance may be degraded due to an amount of image data or a state of the network 3w. Accordingly, it is possible to improve the performance by a configuration of a system 9103 using Web services as shown in FIG. 28.

FIG. 28 is a diagram showing the configuration of the system 9103 using Web services. In the system 9103 using Web services shown in FIG. 28, the image forming apparatus 1-1w and the server 2w are connected to each other through the network 3w. The image forming apparatus 1-1w in FIG. 28 includes a Web server 500w, a screen flow controlling part 501w, and a screen building part 502w in addition to the configuration of the system 9102 using Web services.

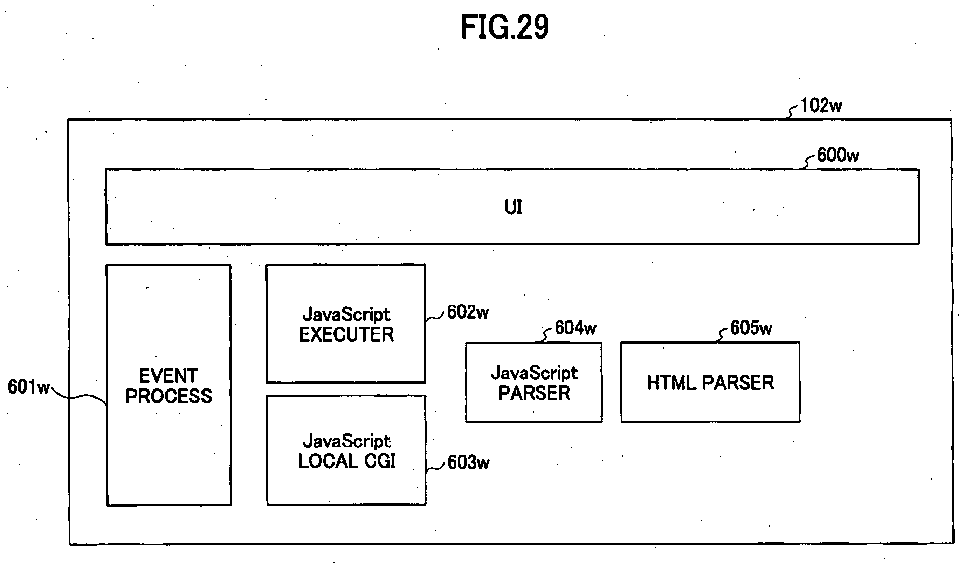

In addition, by configuring the Web browser 102w. included in the image forming apparatus 1-1w in FIG. 28 as shown in FIG. 29, the Web browser 102w can execute at least a part of processes of the application 200w. FIG. 29 is a diagram showing a functional configuration of the Web browser 102w.

The Web browser 102w in FIG. 29 includes a UI (user interface) 600w, an Event Process 601w, a JavaScript^{™} executer 602w, a JavaScript^{™} Local CGI (Common Gateway Interface) 603w, a JavaScript^{™} parser 604w, and an HTML (HyperText Markup Language) parser 605w. When the Web browser 102w receives HTML data, the HTML parser 605w parses the HTML data, and sends a layout instruction to the UI 600w. The UI 600w builds a GUI (Graphical User Interface). Moreover, when the HTML data includes JavaScript^{™}, the HTML parser 605w requests the JavaScript^{™} parser 604w to analyze JavaScript^{™}.

The JavaScript^{™} parser 604w parses JavaScript^{™}, and requests the JavaScript^{™} parser 604w to process the JavaScript^{™}. The JavaScript^{™} executer 602w sends a layout instruction to the UI 600w based on contents of the request sent from the JavaScript^{™} parser 604w. In addition, JavaScript^{™} executer 602w requests the JavaScript^{™} Local CGI 603w based on contents of the request sent form the JavaScript^{™} parser 604w.

The JavaScript^{™} Local CGI 603w requests the print function part 106w to print out or requests the scan function part 107w to scan. The Event Process 601w receives a process result from the print function part 106w or the scan function part 107w, and sends the process result to the JavaScript^{™} Local CGI 603w. The JavaScript^{™} Local CGI 603w sends the process result to the JavaScript^{™} executer 602w. The JavaScript^{™} executer 602w sends the layout instruction to the UI 600w based on the process result received from the JavaScript^{™} Local CGI 603w so as to build a GUI, or sends the process result to the Web server 204w or 500W.

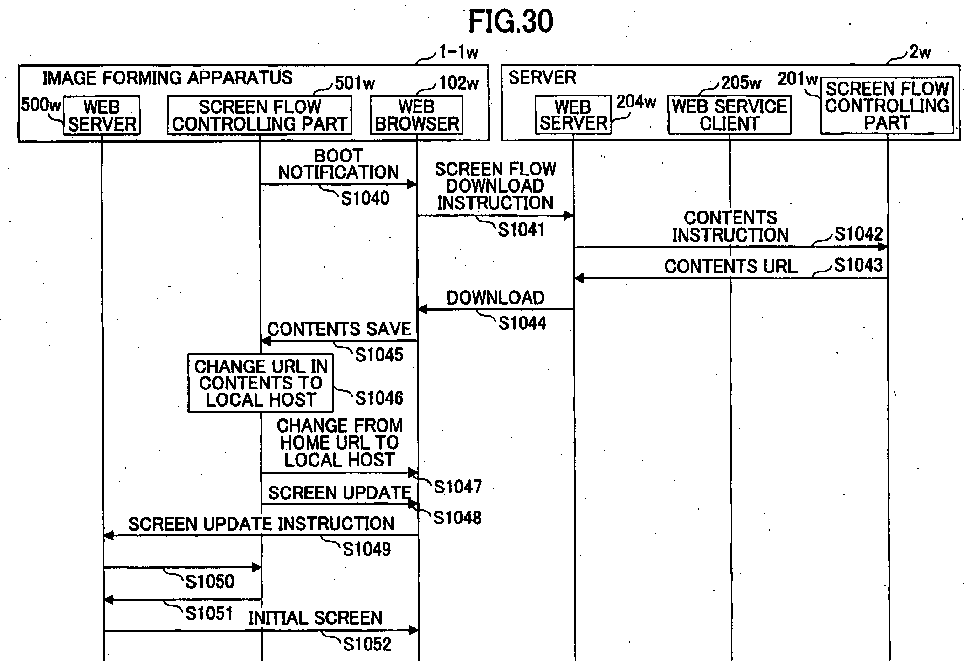

Next, as one example of processes conducted by the system 9103 using Web services in FIG. 28, a process until the initial screen 301w is displayed at the operation part 109w will be described. FIG. 30 is a diagram showing a sequence flow of the process until the initial screen 301w is displayed in the system 9103 using Web services.

When the power is turned on, the process advances to step S1040. In the step S1040, the screen flow controlling part 501w sends a boot notification to the Web browser 102w. The process advances to step S1041. In the step S1041, when the Web.browser 102w receives the boot notification from the screen flow controlling part 501w, the server 2w sends a screen flow download instruction to the Web server 204w.

The process advances to step S1042. In the step S1042, the Web server 204w sends a contents instruction to the screen flow controlling part 201w. For example, contents include a control program itself such as a Java^{™} program corresponding to a logic, and control data such as HTML data to be referred by the control program for a control. If the contents include the HTML data only, the system 9103 using Web services can be realized without a function of the Web server 500w.

The process advances to step S1043. In the step S1043, the screen flow controlling part 201w sends a contents URL to the Web server 204w. The process advances to step S1044. In the step S1044, the Web server 204w downloads the contents to the Web browser 102w of the image forming apparatus 1-1w by using the contents URL received from the screen flow controlling part 201w.

The process advances to step S1045. In the step S1045, the Web browser 102w stores the contents being downloaded to the screen flow controlling part 501w. As described above, in the sequence flow shown in FIG. 30, when the power is turned on and the image forming apparatus 1-1w is booted, the contents are copied from the server 2w to the image forming apparatus 1-1w. The process advances to step S1046. In the step S1046, the screen flow controlling part 501w changes an URL included in the contents to a local host URL. The process advances to step S1047. In the step S1047, the screen flow controlling part 501w changes a home URL to the local host URL.

The process advances to step S1048. In the step S1048, the screen flow controlling part 501w sends a request of a screen update instruction to the Web browser 102w. Since the home URL is changed to the local host URL, in step S1049 and step S1050, the screen update instruction is sent from the Web browser 102w to the screen flow controlling part 501w included in the image forming apparatus 1-1w. Subsequently, the process advances to step S1051, since the URL within the contents is changed to the local host URL, the screen flow controlling part.501w generates initial screen data and sends the initial screen data to the Web server 500w. The process advances to step S1052. In the step S1052, the Web server 502w sends the initial screen data to the Web browser 102w. The Web browser 102w displays the initial screen 301w corresponding to the initial screen data at the operation part 109w.

In processes after the initial screen 301w is displayed at the operation part 109w, by using the JavaScript^{™} Local CGI 603w from the Web browser 102w configured as shown in FIG..29, the print request is sent to the print function part 106w or the scan request is sent to the scan function part 107w. These processes are different from the sequence flow in FIG. 26, but basically are similar to the sequence flow in FIG. 26, and explanations thereof will be omitted.

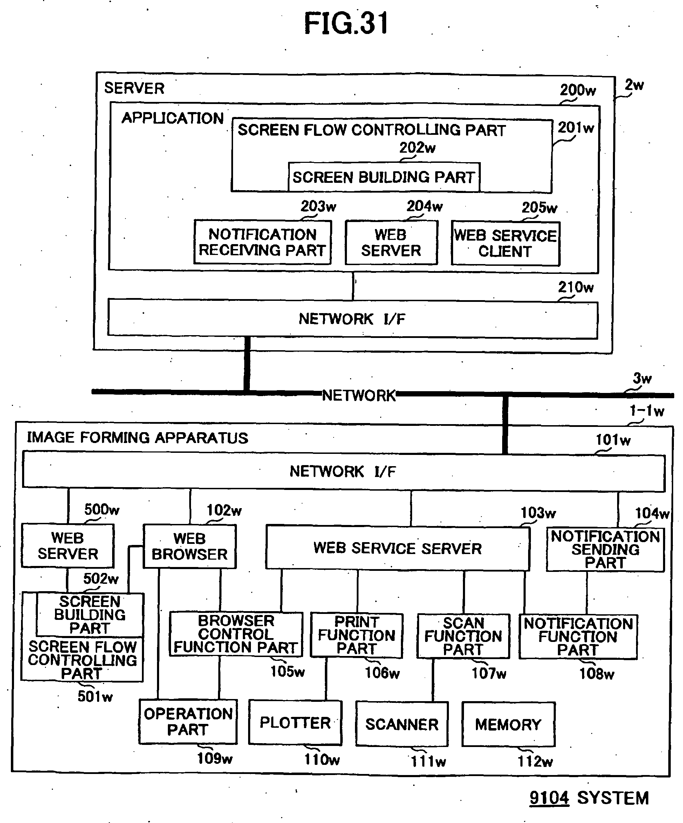

Moreover, in addition to the configuration of the system 9103 using Web services, another configuration as shown in FIG. 31 can improve the performance. FIG. 31 is a diagram showing a configuration of a system 9104 using Web services. Parts configured in system 9104 using Web services are the same as ones configured in the system 9103 using Web services. However, in the system 9104 using Web services, the Web browser 102w does not directly communicate to the browser control function part 105w, the print function part 106w, and the scan function part 107w.

In the image forming apparatus 1-1w in FIG. 31, the JavaScript Local CGI 603w of the Web browser 102w conducts a loop back as a Web service client, with respect to the Web service server 103w of the local host, so as to receive the print request, the scan request, and the process result.

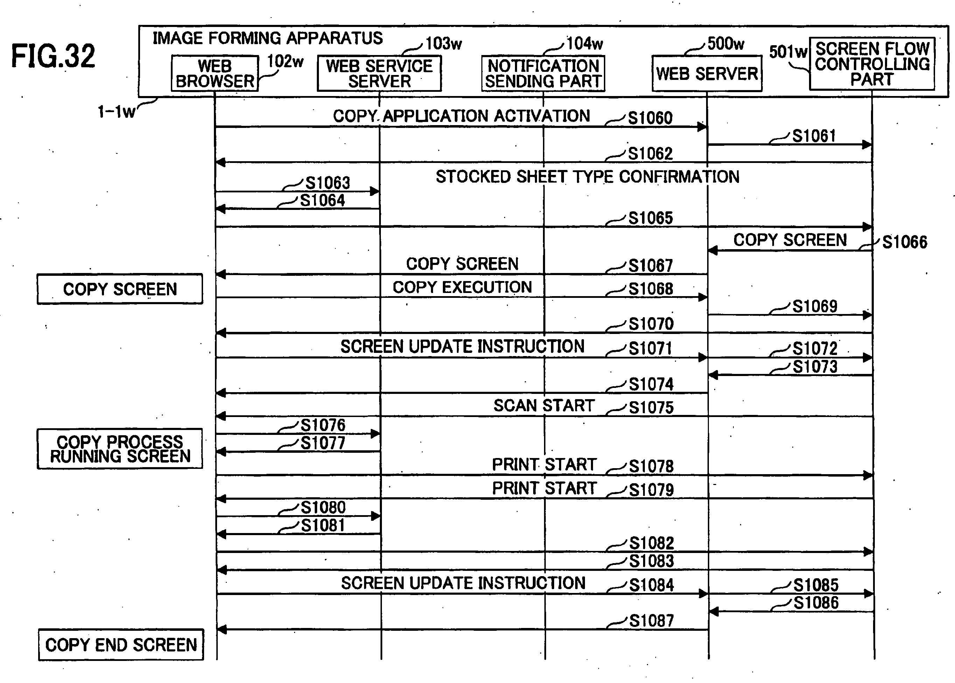

Next, as one example of the processes conducted in the system 9104 using Web services, a copy process will be described. FIG. 32 is a diagram showing a sequence flow of the copy process conducted in the system 9104 using Web services.

For example, when the initial screen 301w is displayed at the operation part 109w, and a user instructs activating the copy application from the operation part 109w, the copy process advances to step S1060. In the step S1060, the Web browser 102w sends a copy application activation instruction to the Web server 500w in the image forming apparatus 1-1w in order to instruct activating the copy application. The copy process advances to step S1061. In the step S1061, the Web server 500w sends the copy application activation instruction to the screen flow controlling part 501w.

The copy process advances to step S1062. In the step S1062, the screen flow controlling part 501w sends a stocked paper type confirmation instruction to the Web browser 102w in order to instruct confirming a stocked paper type. The copy process advances to step S1063. In the step S1063, the Web browser 102w sends the stocked paper type confirmation instruction to the Web service server 103w of the local host.

The copy process advances to step S1064. In the step S1064, the Web service server 103w confirms the stocked paper type by the print function part 106w, and sends the stocked paper type to the Web browser 102w. The copy process advances S1065. In the step S1065, the Web browser 102w sends the stocked paper type to the screen flow controlling part 501w.

The copy process advances to step S1066. In the step S1066, the screen flow controlling part 501w generates copy screen data, and sends to the Web server 500w. The copy process advances to step S1067. In the step S1067, the Web server 500w sends the copy screen data to the Web browser 102w. The Web browser 102w displays the copy screen 302w corresponding to the copy screen data at the operation part 109w.

When the user instructs an execution of the copy process from the operation part 109w by pressing the "EXECUTION" button of the copy screen 302w, the copy process advances to step S1068. In the step S1068, the Web browser 102w sends a copy execution instruction to the Web server 500w. The copy process advances to step S1069. In the step s1069, the Web server 500w sends the copy execution instruction to the screen flow controlling part 501w.

The copy process advances to step S1070. In the step S1070, the screen flow controlling part 501w sends a request of a screen update instruction to the Web browser 102w. When the Web browser 102w receives the request of the screen update instruction, the copy process advances to step S1071. In the step S1071, the Web browser 102w sends the screen update instruction to the Web server 500w. The copy process advances to step S1072. In the step S1072, the Web server 500w sends the screen update instruction to the screen flow controlling part 501w. The copy process advances to step S1073. In the step S1073, the screen flow controlling part 501w generates copy process running screen data, and sends the copy process running screen data to the Web server 500w. The copy process advances to step S1074. In the step S1074, the Web server 500w sends the copy process running screen data to the Web browser 102w. The Web browser 102w displays the copy process running screen 303w corresponding to the copy process running screen data at the operation part 109w.

The copy process advances to step S1075. In the step S1075, the screen flow controlling part 501w sends a scan start instruction to the Web browser 102w. The copy process advances to step S1076. In the step S1076, the Web browser 102w sends a scan start instruction to the Web service server 103w. The Web service server 103w controls the scannet 111w by the scan function part 107w and executes a scan. When the scan ends, the copy process advances to step S1077. In the step S1077, the Web service server 103w informs a scan end to the Web browser 102w. The copy process advances to step S1078. In the step S1078, the Web browser 102w informs the scan end to the screen flow controlling part 501w.

The copy process advances to step S1079. In the step S1079, the screen flow controlling part 501w sends a print start instruction to the Web browser 102w. The copy process advances to step S1080. In the step S1080, the Web browser 102w sends the print start instruction to the Web service server 103w. The Web service server 103w controls the plotter 110w by the print function part 106w, so as to execute a print. When the print ends, the copy process advances to step S1081. In the step S1081, the Web service server 103w informs a print end to the Web browser 102w. The copy process advances to step S1082. In the step S1082, the Web browser 102w informs the print end to the screen flow controlling part 501w.

The copy process advances to step S1083. In the step S1083, the screen flow controlling part 501w sends a request of a screen update instruction to the Web browser 102w. In step S1084 and step S1085, the Web browser 102w sends the screen update instruction to the screen flow controlling part 501w.

The copy process advances to step S1086. In the step S1086, the screen flow controlling part 501w generates copy end screen data, and sends the copy end screen data to the Web server 500W. The copy process advances to step S1087. In the step S1087, the Web server 500w sends the copy end screen data to the Web browser 102w. The Web browser 102w displays the copy end screen 304w corresponding to the copy end screen data at the operation part 109w.

In the system 9103 using Web service in FIG. 28 and the system 9104 using Web service in FIG. 31, by using the Web browser 102w configured as shown in FIG. 29, it is possible for the Web browser 102w to execute the process of the application 200w, which may degrade the performance in the system 9102 using Web services or may handle a large amount of data. Therefore, it is possible to improve the performance and a response in the system 9103 using Web service in FIG. 28 and the system 9104 using Web service in FIG. 31.

In addition, in the systems 9103 and 9104 using Web services in FIG. 28 and FIG. 31, the Web browser 102w can execute the process of the application 200w handling data which is to be secured. It is possible to prevent the data to be secured from being leaked through the network 3w and to improve security of the data.

In order to switch to the local host, an UI (User Interface) concerning an error display may be copied to the local host when the image forming apparatus 1-1w is booted. When a jam occurs and an error is displayed, an access may be switched to the local host. Also, when a communication to the server 2w becomes impossible due to a network error or a like, the access may be switched to the local access.

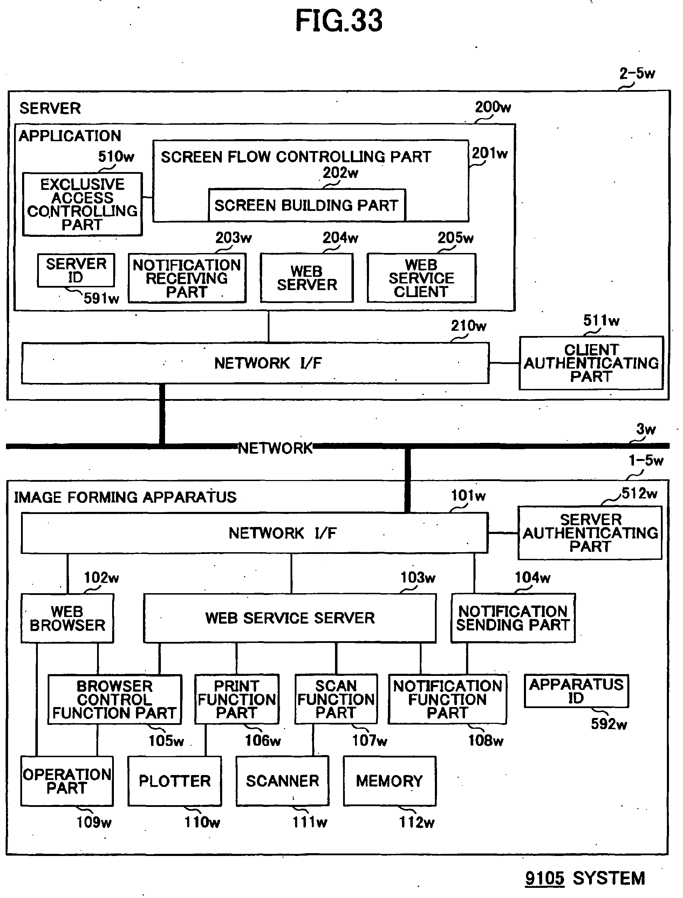

By configuring the system 9102 using Web services in FIG. 25 to be a system 9105 using Web services as shown in FIG. 33, the image forming apparatus 1-1w can confirm a validity of the server 2w, and the server 2w can confirm a validity of the image forming apparatus 1-1w. Moreover, in the system 9105 using Web services in FIG. 33, in order to control a plurality of the image forming apparatuses 1-1w connected to the network 3w, an exclusive access control may be conducted. FIG. 33 is a diagram showing a configuration of the system 9105 using Web services.

In the system 9105 using Web services in FIG. 33, an image forming apparatus 1-5w includes a server authenticating part 512w and an apparatus ID area 592w for storing an apparatus ID in addition to the image forming apparatus 1-1w shown in FIG.25, and a server 2-5w includes an exclusive access controlling part 510w, a client authenticating part 511w, and a server ID area 591w for storing a server ID in addition to the server 2w. The server authenticating part 512w of the image forming apparatus 1-5w conducts an authentication by using the server ID stored in the server ID area 591w of the server 2-5w. Moreover, the client authenticating part 511w of the server 2-5w conducts an authentication by using the apparatus ID stored in the apparatus ID area 592w of the image forming apparatus 1-5w. The exclusive access controlling part 510w can be simultaneously accessed from a plurality of the image forming apparatuses 1-5w. For example, the server 2-5w simultaneously receives requests with respect to the scan function part 107w or a like, and conducts the exclusive access control. A sequence flow in the system 9105 using Web services in FIG. 33 is different from the sequence flow in FIG. 26 for the system 9102, but is basically similar to the sequence flow in FIG. 26, and explanations thereof will be omitted.

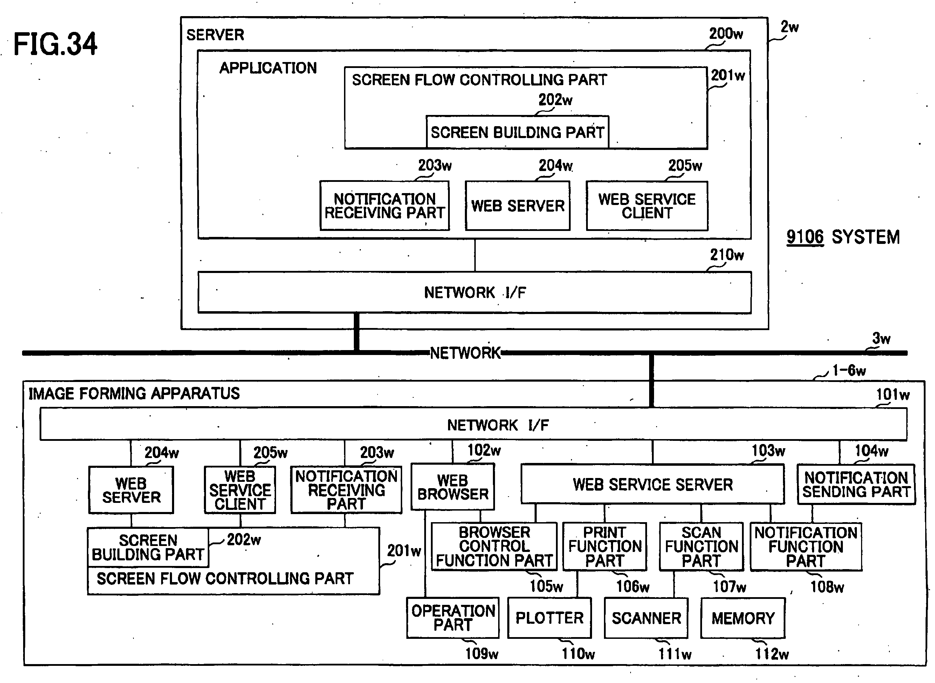

Moreover, by configuring a system 9106 using Web services as shown in FIG. 34 other than the systems 9103 and 9104, it is possible to improve the performance. FIG. 34 is a diagram showing a configuration of the system 9106 using Web services. An image forming apparatus 1-6w in FIG. 34 includes a screen flow controlling part 201w, a screen building part 202w, a notification receiving part 203w, a Web server 204w, and a Web service client 205w in addition to the image forming apparatus 1-1w in FIG. 25.

For example, in FIG. 34, when the image forming apparatus 1-6w is booted, the image forming apparatus 1-6w copies the screen flow controlling part 201w, the screen building part 202w, the notification receiving part 203w, the Web server 204w, and the Web service client 205w from the server 2w. In the system 9106 using Web service in FIG. 34, by using copying and using the screen flow controlling part 201w, the screen building part 202w, the notification receiving part 203w, the Web server 204w, and the Web service client 2.05w from the server 2w, it is possible for the image forming apparatus 1-6w to promptly execute the process of the application 200w which may degrade the performance and handles the large amount of data. Therefore, it is possible to improve the performance and the response in the system 9106 using Web services in FIG. 34.

Moreover, in the system 9106 using Web services in FIG. 34, the image forming apparatus 1-6w can execute the process of the application 200w handing data to be secured. Therefore, it is possible to prevent the data to be secured from being leaked through the network 3w and to improve the security of the data. In the system 9106 using Web services in FIG. 34, the image forming apparatus 1-6w copies screen data concerning an error screen and a state transition screen from the server 2w. Thus, it is possible to switch a screen without communicating to the server 2w.

Referring back to FIG. 26 and FIG. 27, when the user instructs activating a cooperative application from the operation part 109w by pressing a "COOPERATIVE APPLICATION" button of the initial screen 301 or a like, similar to the steps S1005 and S1006, the Web browser 102w of the image forming apparatus 1-1w sends a cooperative application activation instruction to the screen flow controlling part 201w of the server 2w. Similar to the steps S1007 through S1010, processes for acquiring information necessary to generate image data from the Web service server 103w of the image forming apparatus 1-1w.

Then, similar to the steps S1011 and S1012, the screen flow controlling part 201w of the server 2w sends output destination selection screen data for selecting an output destination to the Web browser 102w of the image forming apparatus 1-1w. The Web browser 102w displays an output selection screen 305w corresponding to the output destination selection screen data at the operation part 109w. The user can select one output destination for the copy process from the output destination selection screen 305w. As described above, in the copy process, the cooperative application outputs from another image forming apparatus 1-1w through the network 3w. That is, the cooperative application is a customized regular application.

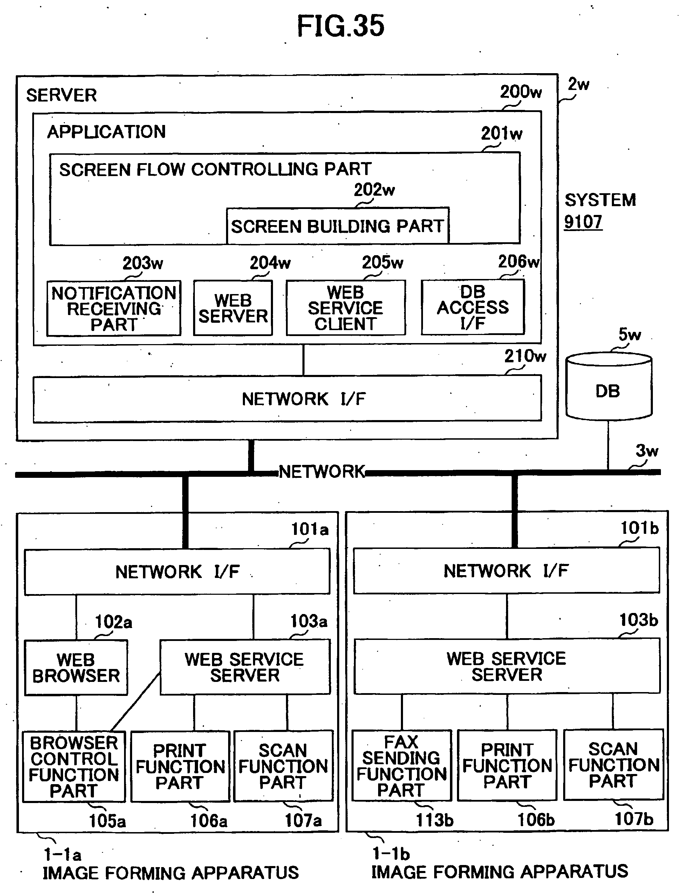

FIG. 35 is a diagram showing a configuration of a system 9107 using Web service. In the system 9107 using Web services, different from the system 9102 using Web services in FIG. 25, two image forming apparatuses 1-1a and 1-1b and a database (DB) 5w are connected to the network 3w, and the server 2w further includes a DB access I/F 206w. Other configurations in the system 9107 using Web services are the same as the ones in the system 9102 using Web services in FIG. 25, and explanations thereof will be omitted. Since detailed configurations of the image forming apparatuses 1-1a and 1-1b are the same as the ones of the image forming apparatus 1-1w, only parts described in the followings are shown in FIG. 35.

In the system 9107 using Web services, the image forming apparatuses 1-1a and 1-1b are connected to the network 3w, and image forming applications cooperate with each other and realize various processes. If the DB 5w does not support the Web service, the server 2w accesses the DB 5w through the DB access I/F 206w.

The system 9102 using Web services as shown in FIG. 25 is a basic configuration in that a number ratio of the server 2w and the image forming apparatus 1-1w is one to one (1:1), the image forming application is built up on the server 2w, and the image forming apparatus 1-1w can be remotely used without concerning any special rule of the image forming apparatus 1-1w. Accordingly, it is possible to easily develop and customize an application. Moreover, since applications are stored in the server 2w, the number of the applications is not influenced by a hardware limitation of the image forming apparatus 1-1w.

In the system 9107 using Web services in which the number ratio of the server 2w and the image forming apparatuses 1-1a and 1-1b (hereinafter, collectively called a plurality of the image forming apparatuses 1-1w) is one to multiple (1:two or more) in FIG. 35, an application of the server 2w is activated in multiple sessions. Also, in the system 9107 using Web services as shown in FIG. 35, by changing the "Controller" module, applications capable of controlling the plurality of the image forming apparatuses 1-1w can be simultaneously updated. Thus, it is possible to update a version for a bug fix and a function enhancement. It is possible to update the applications capable of controlling the plurality of the image forming apparatuses 1-1w, instead of modifying any application implemented in the plurality of the image forming apparatuses 1-1w. In addition, it is possible to build a system application cooperating functions of the plurality of the image forming apparatuses 1-1w.

In another system using Web services (not shown) in which the number ratio of the servers 2w and the image forming apparatus 1-1w is multiple to one (two or more servers 2w:1), applications provided by different third parties can be implemented for user's preferences. For example, it is possible to configure a system using Web services which uses different applications for each user. Also, applications can be provided through a network such as the Internet by makers of the image forming apparatuses 1-1w. Thus, the server 2w can be configured so that the users do not recognize the server 2w on the network 3w.

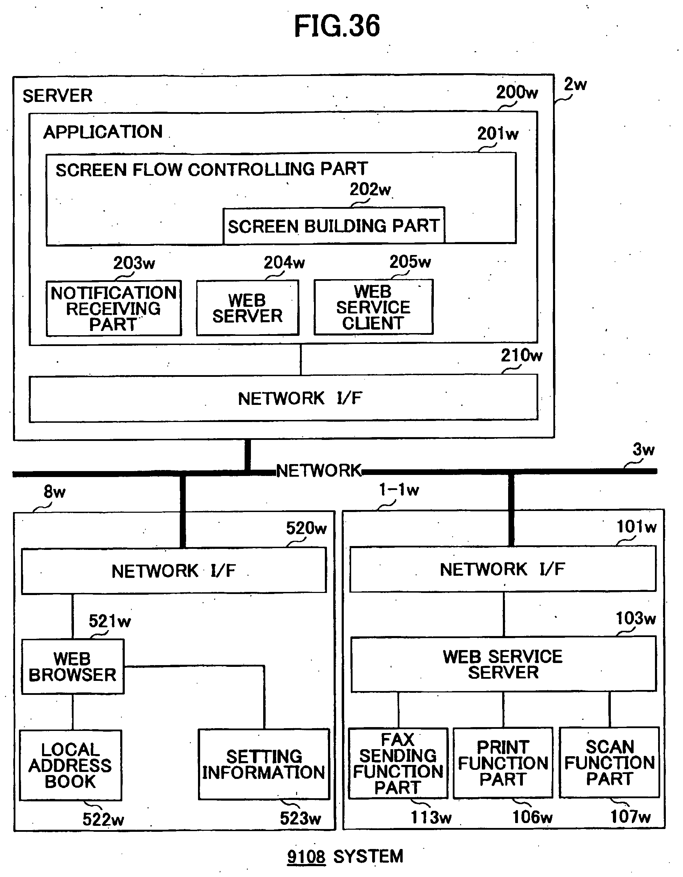

In the systems 9100 through 9107 as described above, the Web browser 102w of the image forming apparatus 1-1w displays various screens at the operation part 109w. Alternatively, a terminal apparatus 8w other than the image forming apparatus 1-1w, and the server 2w may display various screens. FIG. 36 is a diagram showing a configuration of a system 9108 using Web services.

In the system 9108 using Web services, different from the system 9102 using Web services, the terminal apparatus 8w is connected to the network 3w. Other parts are the same as the ones in the system 9102 in FIG. 25, and explanations thereof will be omitted. Also, parts necessary to explain are shown and other parts are omitted in the configuration of the image forming apparatus 1-1w.

The terminal apparatus 8w includes a network I/F 520w, a Web browser 521w, a local address book 522w, and a setting information area 523w. The Web browser 521w of the terminal apparatus 8w receives various screen data from the Web server 204w of the server 2w, and displays screens corresponding to the various screen data received from the server 2w. In addition, the Web browser 521w sends an instruction from a user to the Web server 204w of the server 2w. The terminal apparatus 8w is a PC (Personal Computer), a PDA (Personal Digital Assistant) as a portable information terminal, a mobile phone, or a like.

As described above, in the system 9108 using Web services in FIG. 36, it is possible to display a screen at a device other than the image forming apparatus 1-1w. For example, the screen can be displayed at a large-screen display or a like. In the system 9108 using Web services, it is possible to create an address book combining the local address book 522w of the terminal apparatus 8w and an address book (not shown) of the image forming apparatus 1-1w, and indicate a destination by using the combined address book. In this case, the local address book 522w of the terminal apparatus 8w is not sent to the image forming apparatus 1-1w. Therefore, it is possible to improve security of the local address book 522w.

Moreover, in the system 9108 using Web services in FIG. 36, a job registration function accepting a job registration to the image forming apparatus 1-1w is implemented in the terminal apparatus 8w. Accordingly, the user can register a job to the image forming apparatus 1-1w by using the terminal apparatus 8w. For example, the user can select a job registered to the image forming apparatus 1-1w from an UI (User Interface) displayed at the operation part 109w.

For example, if the user is allowed to repeatedly use the job registered to the image forming apparatus 1-1w, the UI displayed at the operation part 109w can be a special UI for each user (a special operation panel for each user).

By storing an HTML file including setting information (integration + both sides + staple + a like) which the user usually selects and sets at a copy screen, to the terminal apparatus 8w as a local device, and displaying the HTML file at the operation part 109w of the image forming apparatus 1-1w, the user can display a user's UI at the operation part 109w at any time and at any image forming apparatus 1-1w.

Alternatively, data in another format other than the HTML file, in which the setting information which the user usually selects and sets at the copy screen, may be stored in the terminal apparatus 8w, and a screen corresponding to the data may be displayed at the operation part 109w of the image forming apparatus 1-1w.

However, in the system 9108 using Web services described above, the online state is required on the network 3w. In the following, a system 9109 using Web services in which the above operations can be available even if the network 3w is in the offline state, will be described.

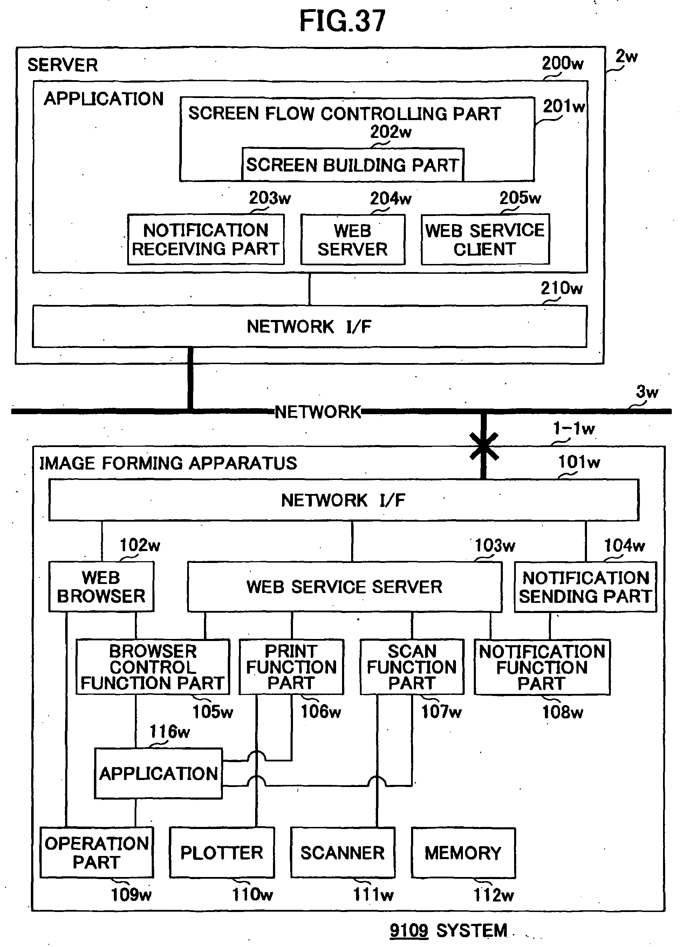

FIG. 37 is a diagram showing a configuration of the system 9109 using Web services. In the system 9109 using Web services, a communication between the image forming apparatus 1-1w and the server 2w is in the offline state. For example, the image forming apparatus 1-1w reads out an application 116w from the SD card 7w, builds up the application 116w in the image forming apparatus 1-1w itself, and displays a UI of the application 116w at the operation part 109w. In a case in that the network 3w is in the offline state, the user can operates the application 116w built in the image forming apparatus 1-1w from the UI displayed at the operation part 109w.

When the user instructs a copy operation from the UI of the application 116w, a copy instruction is sent to the application 116w. The application 116w controls the plotter 110w, the scanner 111w, and the like by the print function part 106w, the scan function part 107w, and the like, and executes a print or a scan, in response to the copy instruction.

The UI of the application 200w, which is built up in the server 2w, is displayed at the operation part 109w when the network 3w is in the online state. The UI of the application 116w, which is built up in the image forming apparatus 1-1w, is displayed at the operation part 109w when the network 3w is in the offline state. For example, when a browser update error is detected at the Web browser 102w, the browser control function part 105w informs the browser update error to the application 116w. Then, the UI to be displayed at the operation part 109w is switched from the application 200w of the server 2w to the application 116w of the image forming.apparatus 1-1w.

Moreover, in the system 9109 using Web services, the server 2w including the application 200w is used. Alternatively, another image forming apparatus including modules of the server 2w can be used.

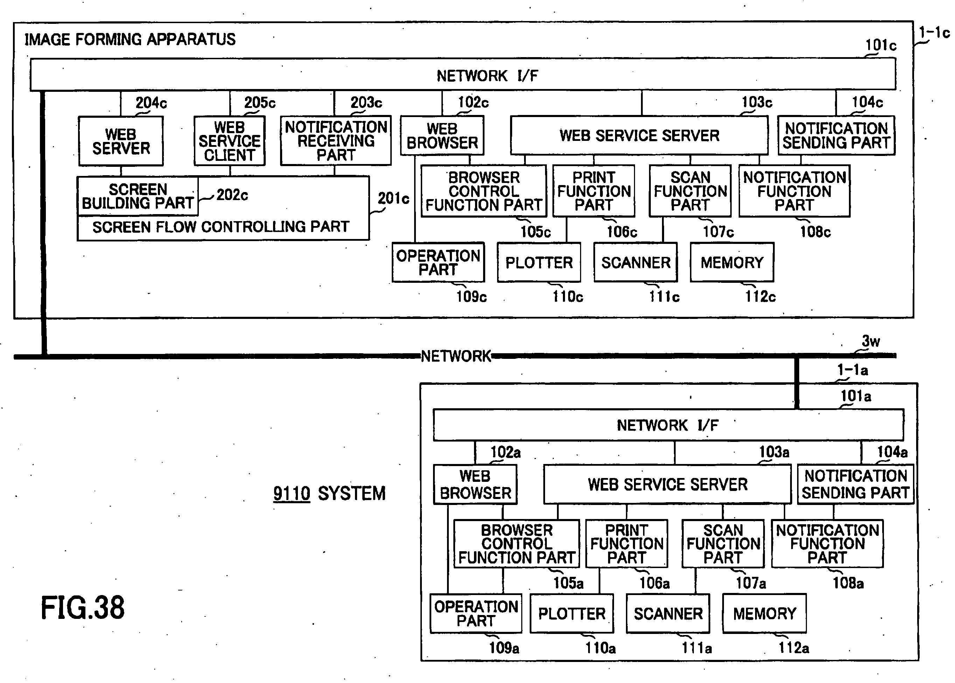

FIG. 38 is a diagram showing of a system 9110 using Web services, which uses another image forming apparatus instead of using the server 2w. In the system 9110 using Web services, the image forming apparatus 1-1a and an image forming apparatus 1-1c are connected to each other through the network 3w. The image forming apparatus 1-1c includes the above-described parts of the image forming apparatus 1-1w and the server 2w.

The image forming apparatus 1-1c includes a network I/F 101c, a Web browser 102c, a Web service server 103c, a notification sending part 104c, a browser control function part 105c, a print function part 106c, a scan function part 107c, a notification function part 108c, an operation part 109c, a plotter 110c, a scanner 111c, a memory 112c, a screen flow controlling part 201c, a screen building part 202c, a notification receiving part 203c, a Web server 204c, and a Web service client 205c.

In the image forming apparatus 1-1c in FIG. 38, even if the network 3w is in the offline state, it is possible to avoid inconvenience such that an application is not available through the network 3w, by accessing the Web server 204c within the image forming apparatus 1-1c itself.

By having the screen flow controlling part 201c and the screen building part 202c in an external memory such as the SD card 7w, if a kernel capable of executing modules stored in the SD card 7w is implemented in the image forming apparatus 1-1c, it is possible to implement modified portions of the modules, instead of changing the configuration of the image forming apparatus 1-1c.

If the modules stored in the SD card 7w is loadable, the image forming apparatus 1-1c may download the modules of the server 2w during the online of the network 3w. Thus, even if the network 3w is in the offline state, the image forming apparatus 1-1c can activate an application which is the same as the one of the server 2w. Moreover, in a case in that a Web access cannot be made, by internally switching a screen at the browser control function part 105c, it is possible to provide the screen even in the offline of the network 3w.

Variations of the process in the system 9102 will be described in the following.

### - First Variation -

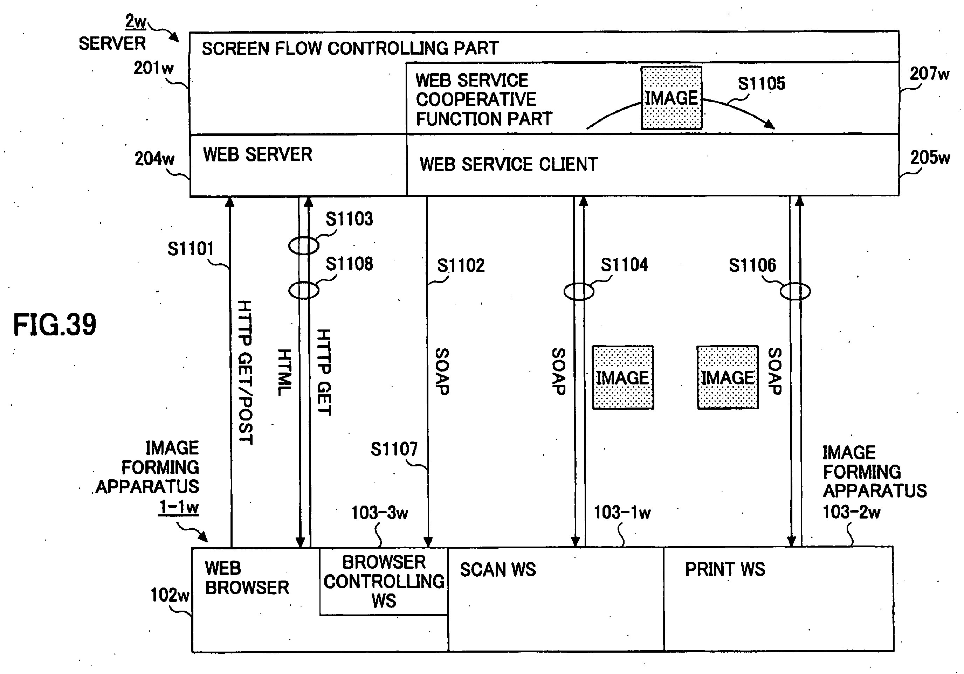

FIG. 39 is a diagram for explaining a first variation of the process in the system 9102 using Web services. In the image forming apparatus 1-1w and the server 2w in FIG. 39, parts necessary to explain are shown and other parts will be omitted.

When a user instructs executing a copy process from the operation part 109w by pressing the "EXECUTION" button of the copy screen 302w or a like, the process advances to step S1101. In the step S1101, the Web browser 102w sends a copy execution instruction to the Web server 204w of the server 2w by using a GET method or a POST method of an HTTP (Hyper Text Transfer Protocol), in order to instruct executing a copy. The Web server 204w sends the copy execution instruction to the screen flow controlling part 201w. The screen flow controlling part 201w sends a request of a screen update instruction to the Web service client 205w.

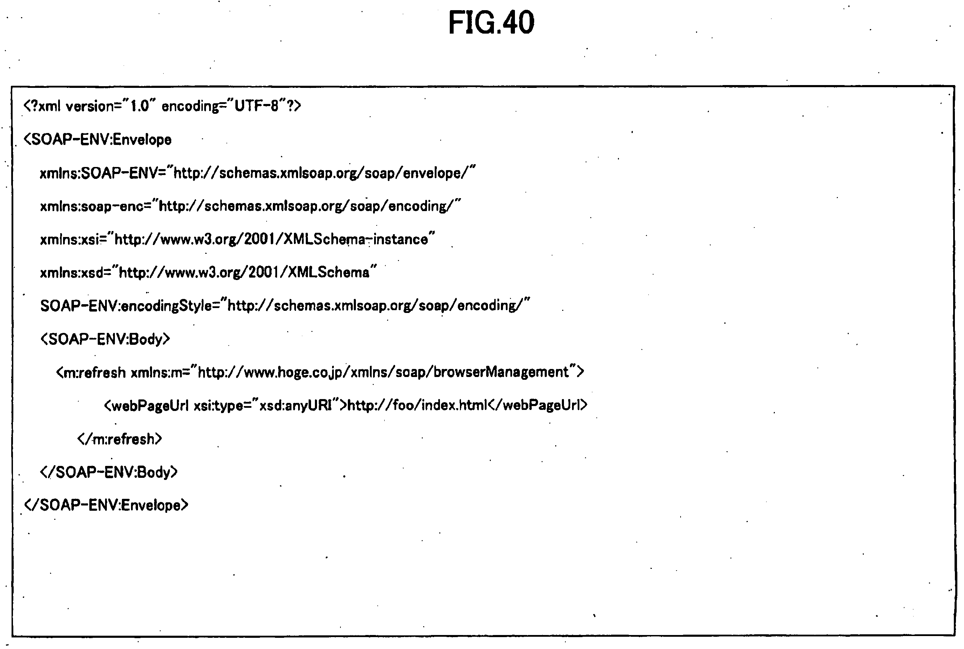

The copy process advances to step S1102. In the step S1102, the Web service client 205w sends the request of the screen update instruction to a browser control web service (browser controlling WS (Web Service) 103-3w. The browser controlling WS 103-3w is a Web service for controlling the browser control function part 105w provided by the Web service server 103w. For the request of the screen update instruction in the step S1102, a request SOAP message as shown in FIG. 40 is used.

When the Web browser 102w of the image forming apparatus 1-1w receives the request of the screen update instruction, the process advances to step S1103. In the step S1103, the Web browser 102w of the image forming apparatus 1-1w sends a screen update instruction to the Web server 204w of the server 2w by using the GET method of the HTTP. The Web server 204w sends the screen update instruction to the screen flow controlling part 201w.

The screen flow controlling part 201w generates copy process running screen data by the HTML, and sends the copy process running screen data to the Web server 204w. The Web server 204w sends the copy process running screen data of the HTML to the Web browser 102w of the image forming apparatus 1-1w. The Web browser 102w displays the copy process running screen 303w corresponding to the copy process running screen data at the operation part 109w.

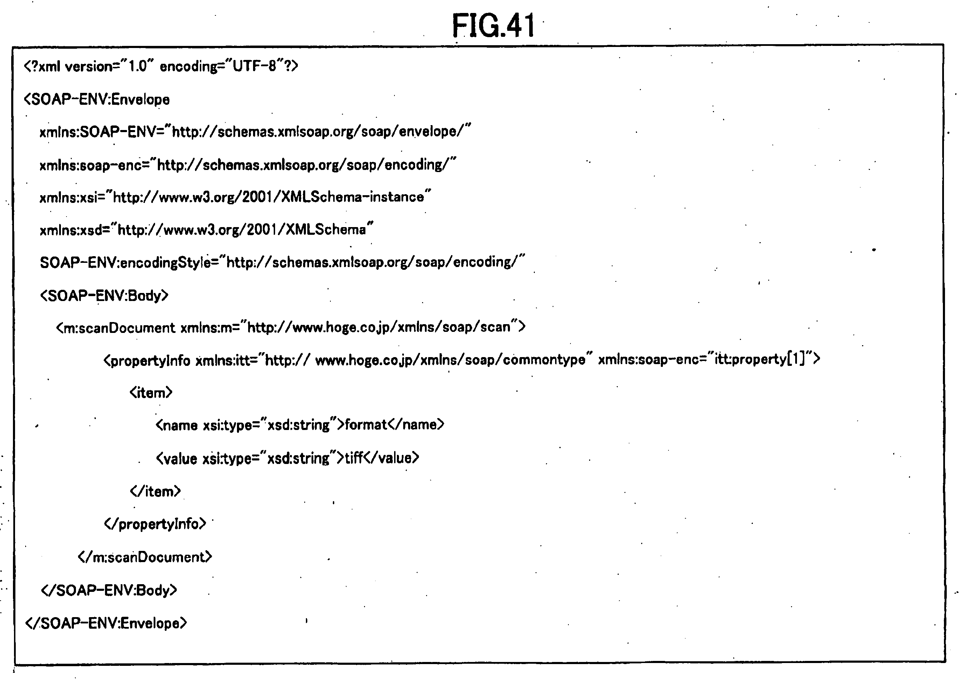

Moreover, the screen flow controlling part 201w of the server 2w instructs a scan start to the Web service client 205w. The process advances to step S1104. In the step S1104, the Web service client 205w instructs the scan start to a scan WS 103-1w of the image forming apparatus 1-1w. The scan WS 103-1w is a Web service for controlling the scan function part 107w provided by the Web service server 103w. In order to instruct the scan start in the step S1104, a request SOAP message as shown in FIG. 41 is used.

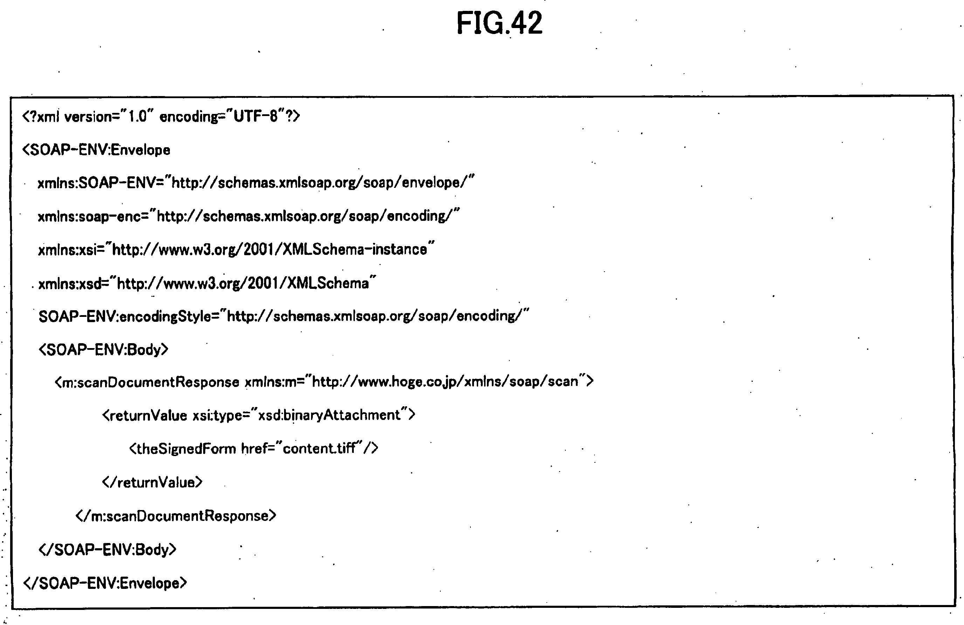

When the scan WS 103-1w receives the request of the scan start instruction, the scan WS 103-1w controls the scanner 111w by the scan function part 107, and executes the scan. When the scan ends, the scan WS 103-1w sends an image (image data), which is scanned and digitized, to the Web service client 205w by a response SOAP message as shown in FIG. 42. The process advances to step S1105. In the step S1105, the Web service client 205w sends the image data received from the scan WS 103-1w to a Web service cooperative function part 207w. The image data are used in a cooperative operation between the Web service client 205w and the Web service cooperative function part 207w.

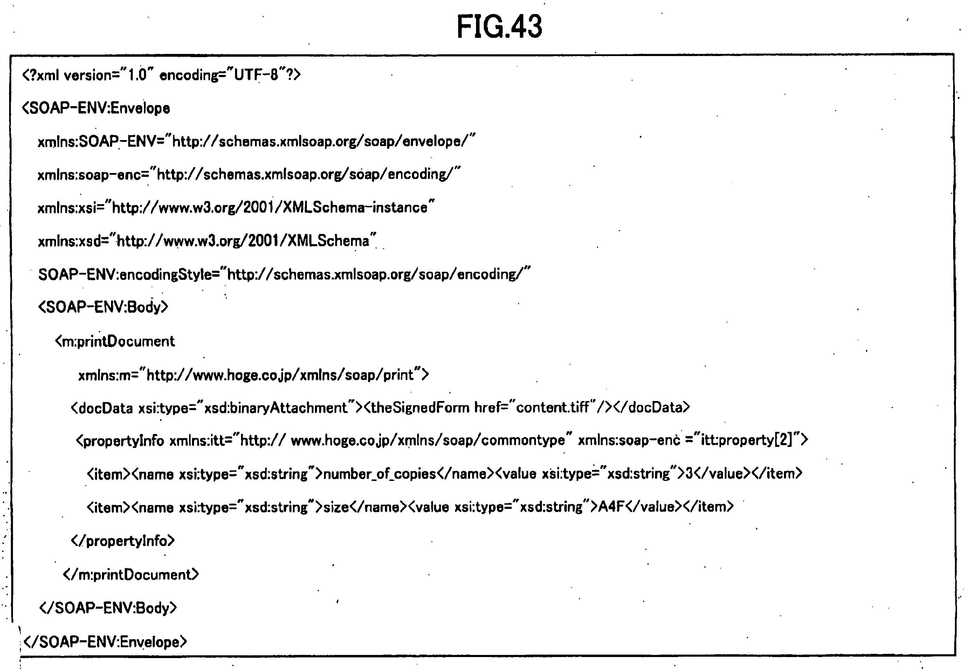

Subsequently, the screen flow controlling part 201w of the server 2w sends a print start instruction to the Web service client 205w. The process advances to step S1106. In the step S1106, the Web service client 205w sends the print start instruction to a print WS 103-2w of the image forming apparatus 1-1w. The print WS 103-2w is a Web service for controlling the print function part 106w provided by the Web service server 103w. For the print start instruction in the step S1106, a request SOAP message including image data as shown in FIG. 43 is used.

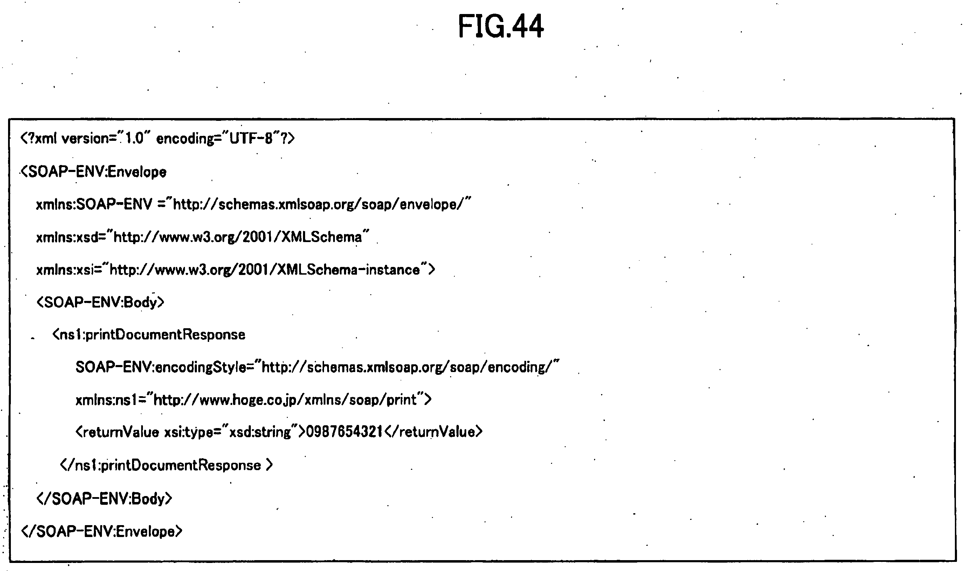

When the print WS 103-2w receives the print start instruction, the print WS 103-2w controls the plotter 110w by the print function part 106w, and executes a copy. When the copy ends, the print WS 103-2w informs a print end to the Web service client 205w by sending a response SOAP message as shown in FIG. 44.

In step S1107, similar to the step S1102, the Web service client 205w sends the request of the screen update instruction to the browser controlling WS 103-3w of the image forming apparatus 1-1w. When the Web browser 102w of the image forming apparatus 1-1w receives the request of the screen update instruction, the process advances to step S1108. In the step S1108, the Web browser 102w of the forming apparatus 1-1w sends a screen update instruction to the Web server 204w of the server 2w by using the GET method of the HTTP. The Web server 204w sends the screen update instruction to the screen flow controlling part 201w.

The screen flow controlling part 201w generates copy end screen data by the HTML, and sends the copy end screen data to the Web server 204w. The Web server 204w sends the copy end screen data of the HTML to the Web browser 102w of the image forming apparatus 1-1w. The Web browser 102w displays the copy end screen 304w corresponding to the copy end screen data at the operation part 109w.

The image forming apparatus 1-1w used in the system 9102 using Web services in FIG. 39 can be a single function apparatus which is less expensive, but is required to include at least a Web service. The browser controlling WS 103-3w can accept a request from the Web service and a hard button mounted to the operation part 109w. When the request of the screen update instruction is received, for example, the Web browser 102w conducts the GET method of the HTTP to a URL which is indicated.

In the first variation of the process of the system 9102 in FIG. 39, when the process ends or an error occurs, the image forming apparatus 1-1w can send the request of the screen update instruction from the server 2w.

### - Second Variation -

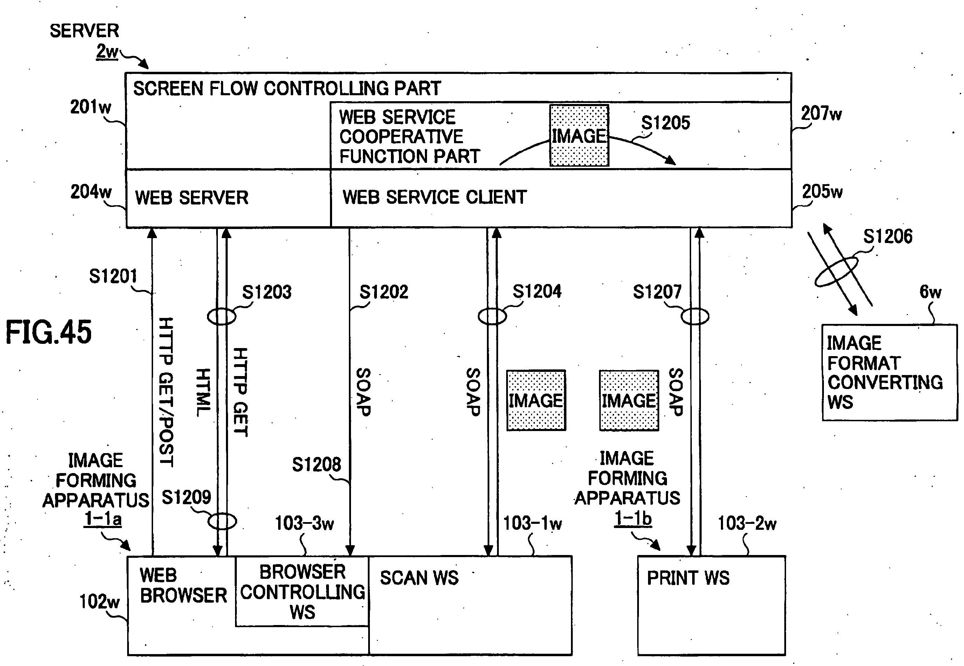

FIG. 45 is a diagram showing a second variation of the process of the system 9102 using Web services. In the image forming apparatuses 1-1a and 1-1b in FIG. 45, parts necessary to explain are shown and other parts will be omitted.

Steps S1201, S1202, S1204, and S1205 in FIG. 45 are the same as the steps S1101, S1102, S1103, S1104, and S1105 in FIG. 39, and explanations thereof will be omitted. In a case in that the scan WS 103-1w cannot acquire image data corresponding to the print WS 103-2w, the screen flow controlling part 201w of the server 2w instructs converting an image format to the Web service client 205w. The process advances to step S1206. In the step S1206, the Web service client 205w converts image data to a proper image format by using an image format converting WS 6w through the network 3w.

Subsequently, the screen flow controlling part 201w of the server 2w sends a print start instruction to the Web service client 205w. The process advances to step S1207. In the step S1207, the Web service client 205w sends the print start instruction to the print WS 103-2w of the image forming apparatus 1-1b different from the image forming apparatus 1-1a which executes the scan. For the print start instruction in the step S1207, the request SOAP message including image data as shown in FIG. 43 is used.

When the print WS 103-2w receives the print start instruction, the print WS 103-2w controls by the print function part 106w and executes a print. When the print ends, the print WS 103-2w informs the print end to the Web service client 205w by sending the response SOAP message shown in FIG. 44.

Steps S1208 and S1209 in FIG. 45 are the same as the steps S1107 and S1108, and explanation thereof will be omitted. In the second variation of the process of the system 9102 using Web services, even if the image forming apparatus 1-1a is a scanner as the single function apparatus, by using a printer of another image forming apparatus 1-1b, the image forming apparatus 1-1a can obtain the same effect as a copier. In the second variation of the process of the system 9102 using Web services in FIG. 45, if a color scanner, and a coler printer are connected to the network 3w, a color copier can be realized. Moreover, the second variation in FIG. 45 can be applied not only to an office but also to the cooperative operation by the image forming apparatuses 1-1a and 1-1b remotely connecting to each other through the network 3w, and to the function enhancement.

### - Third Variation -

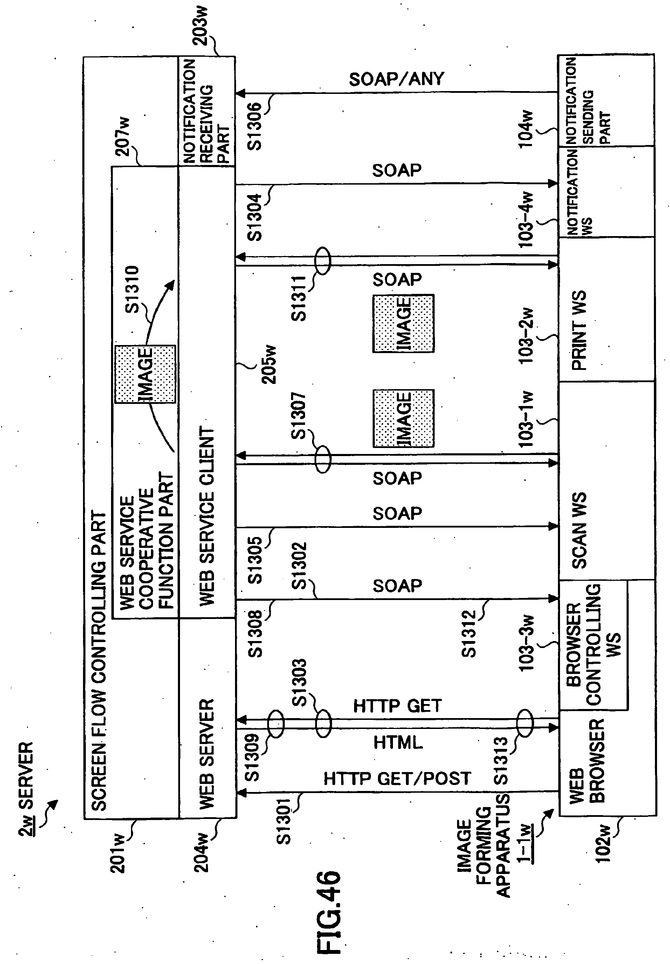

FIG. 46 is a diagram for explaining a third variation of the process of the system 9102 using Web services. In the image forming apparatus 1-1w and the server 2w in FIG. 46, parts to explain are shown but other parts will be omitted.

Steps S1301, S1302, and S1303 in FIG. 46 are the same as the steps S1101, S1102, and S1103, and explanations thereof will be omitted. The screen flow controlling part 201w of the server 2w sends a scan start instruction to the Web service client 205w. The process advances to step S1304. In the step S1304, the Web service client 205w sends an event registration instruction to a notification WS 103-4w of the image forming apparatus 1-1w. The notification WS 103-4w is a Web service for controlling the notification function part 108w provided by the Web service server 103w. For the event registration instruction in the step S1304, a request SOAP message is used.

The process advances to step S1305. In the step S1305, the Web service client 205w sends a scan start instruction to the scan WS 103-1w of the image forming apparatus 1-1w. The scan WS 103-1w controls the scanner 111w by the scan function part 107w, and executes a scan. An event indicating a scan end is registered to the notification WS 103-4w, and a scan end is informed to the notification sending part 104w.

The process advances to step S1306. In the step S1306, the notification sending part 104w informs the scan end to the server 2w. In order to inform the scan end in the step S1306, a response SOAP message may be used or another protocol may be used.

When the scan end is informed, the process advances to step S1307. In the step S1307, the Web service client 205w sends a transfer request of image data which is scanned, to the scan WS 103-1w of the image forming apparatus 1-1w. When the scan WS 103-1w receives the transfer request of the image data which is scanned, the scan WS 103-1w transfers the image data to the Web service client 205w by sending the response SOAP message shown in FIG. 42.

In step S1308, similar to the step S1302, the Web service client 205w sends a request of a screen update instruction to the browser controlling WS 103-3w of the image forming apparatus 1-1w. When the request of the screen update instruction is received, the process advances to step S1309. In the step S1309, the Web browser 102w of the image forming apparatus 1-1w sends a screen update instruction to the Web server 204w of the server 2w by using the GET method of the HTTP. The Web server 204w sends the screen update instruction to the screen flow controlling part 201w.

The screen flow controlling part 201w generates scan running screen data by the HTML, and sends the scan running screen data to the Web server 204w. The Web server 204w sends the scan running screen data by the HTML to the Web browser 102w of the image forming apparatus 1-1w. The Web browser 102w displays a scan running screen corresponding to the scan running screen data at the operation part 109w.

The process advances to step S1310. In the step S1310, the Web service client 205w sends the scan running screen data received in the step S1307 to the Web service cooperative function part 207w. The scan running screen data are used in a cooperative operation between the Web service client 205w and the Web service cooperative function part 207w.

Subsequently, the screen flow controlling part 201w of the server 2w sends a print start instruction to the Web service client 205w. The process advances to step S1311. In the step S1311, the Web service client 205w sends a print start instruction to the print WS 103-2w of the image forming apparatus 1-1w. For the print start instruction in the step S1311, the request SOAP message including image data shown in FIG. 43 is used.

When the print start instruction is received, the print WS 103-2w controls the plotter 110w by the print function part 106w, and executes a print. When the pint ends, the print WS 103-2w informs a print end to the Web service client 205w by sending the response SOAP message shown in FIG. 44.

In step S1312, similar to the step S1302, the Web service client 205w sends a request of a screen update instruction to the browser controlling WS 103-3w of the image forming apparatus 1-1w. When the request of the screen update instruction is received, the process advances to step S1313. In the step S1313, the Web browser 102w of the image forming apparatus 1-1w sends the screen update instruction to the Web server 204w of the server 2w by using the GET method of the HTTP. The Web server 204w sends the screen update instruction to the screen flow controlling part 201w.

The screen flow controlling part 201w generates copy end screen data by the HTML, and sends the copy end screen data to the Web server 204w. The Web server 204w sends the copy end screen data by the HTML to the Web browser 102w of the image forming apparatus 1-1w. The Web browser 102w displays the copy end screen 304w corresponding to the copy end screen data at the operation part 109w.

In the third variation of the process of the system 9102 using Web service, since the steps S1104 and S1106 in FIG. 39 require a certain amount of time, an event indicates a different SOAP message for each of a request and a response. Thus, it is possible to realize a screen update which changes a screen displayed at the operation part 109w based on a process state.

In FIG. 46, one example case, in which the scan running screen is displayed in a process corresponding to the step S1104 in FIG. 39, is described. Similarly, it is possible to display a print running screen during a process corresponding to the step S1106. In a case of a multifunction printer, it is possible to realize the screen update by an event from another application.

### - Fourth Variation -

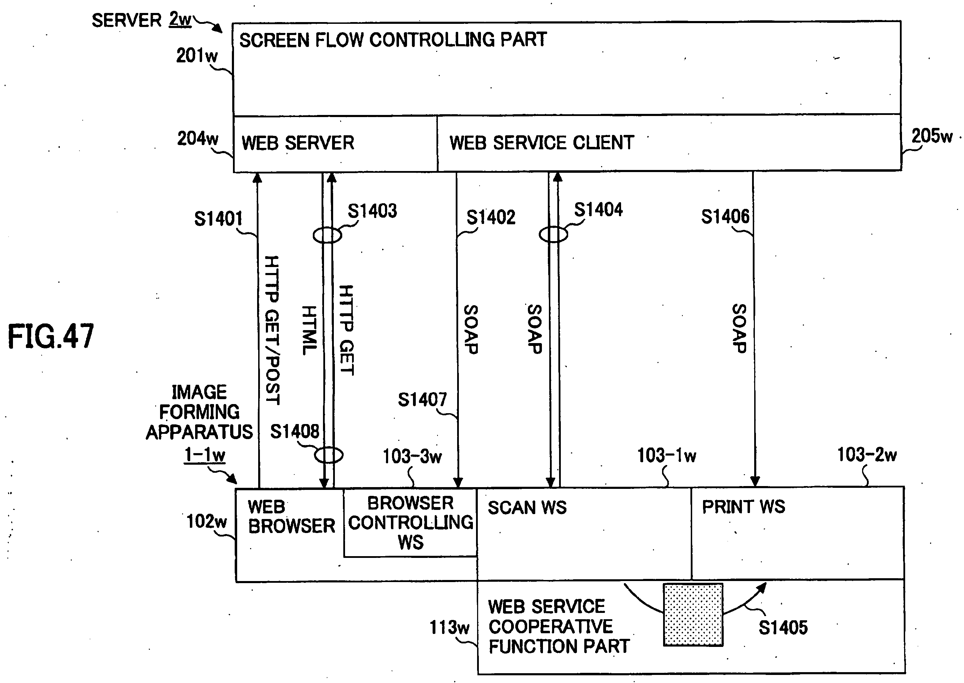

FIG. 47 is a diagram for explaining a fourth variation of the process of the system 9102 using Web services. In the image forming apparatus 1-1w and the server 2w in the fourth variation of the process of the system 9102 using Web services in FIG. 47, parts necessary to explain are shown but other parts will be omitted.

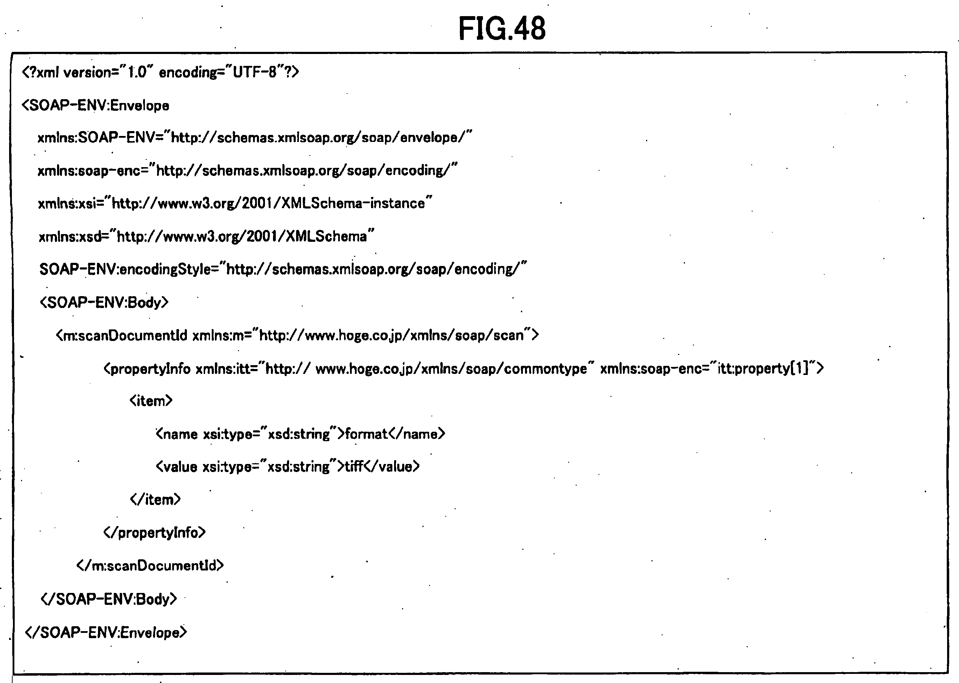

Steps S1401, S1402, and S1403 in FIG. 47 are the same as the steps S1101, S1102, and S1103 in FIG. 39, and explanations thereof will be omitted. The screen flow controlling part 201w of the server 2w sends a scan start instruction to the Web service client 205w. The process advances to step S1404. In the step S1404, the Web service client 205w sends the scan start instruction to the scan WS 103-1w of the image forming apparatus 1-1w. For the scan start instruction in the step S1404, a request SOAP message as shown in FIG. 48 is used.

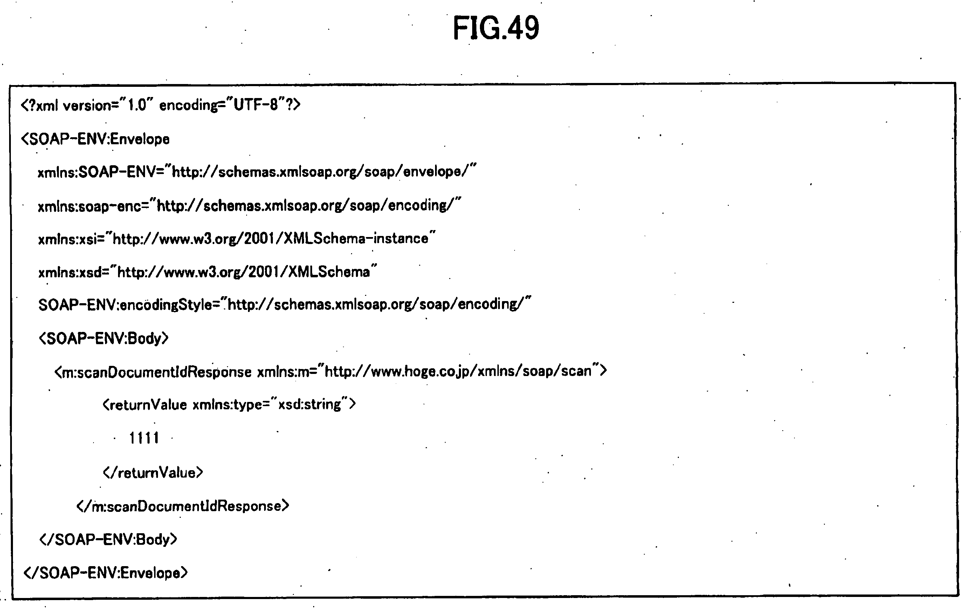

When the scan start instruction is received, the scan WS 103-1w controls the scanner 111w by the scan function part 107w, and executes a scan. When the scan ends, for example, the scan WS 103-1w stores image data to a local memory. After that, the scan WS 103-1w sends a document ID of the image data stored in the local memory to the Web service client 205w by sending a response SOAP message as shown in FIG. 49. The process advances to step S1405. In the step S1405, by a Web service cooperative function part 113w, the image data stored in the local memory are cooperated between the scan WS 103-1w and the print WS 103-2w.

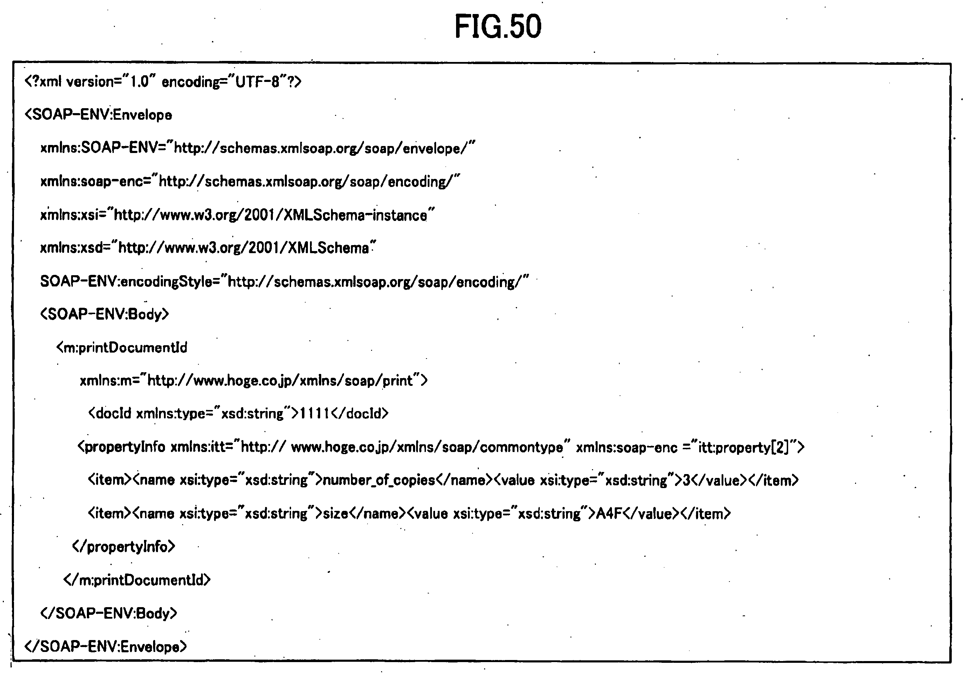

Subsequently, the screen flow controlling part 201w of the server 2w sends a print start instruction to the Web service client 205w. The process advances to step S1406. In the step S1406, the Web service client 205w sends the print start instruction to the print WS 103-2w of the image forming apparatus 1-1w. For the print start instruction sent in the step S1406, a request SOAP message including a document ID as shown in FIG. 50 is used.

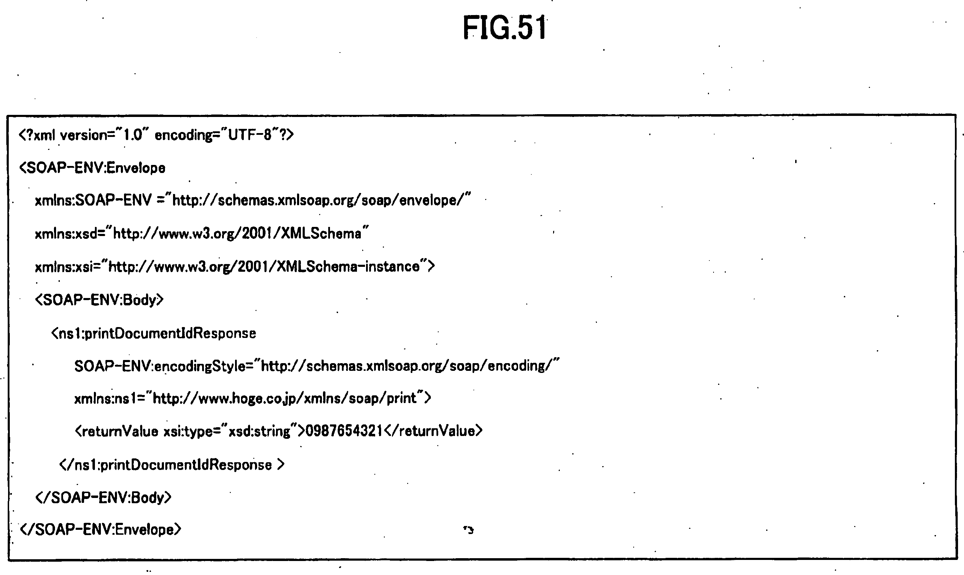

When the print start instruction is received, the print WS 103-2w reads out image data corresponding to the document ID from various image data stored in the local memory, controls the plotter 110w by the print function part 106w, and executes a print. When the print ends, the print WS 103-2w informs a print end to the Web service client 205 by sending a response SOAP message as shown in FIG. 51.

In step S1407, similar to the step S1402, the Web service client 205w sends a request of a screen update instruction to the browser controlling WS 103-3w of the image forming apparatus 1-1w. When the request of the screen update instruction request is received, the process advances to step S1408. In the step S1408, the Web browser 102w of the image forming apparatus 1-1w sends the screen update instruction by using the GET method of the HTTP to the Web server 204w of the server 2w. The Web server 204w sends the screen update instruction to the screen flow controlling part 201w.

The screen flow controlling part 201w generates copy end screen data by the HTML, and sends the copy end screen data to the Web server 204w. The Web server 204w sends the copy end screen data of the HTML to the Web browser 102w of the image forming apparatus 1-1w. The Web browser 102w displays the copy end screen 304w corresponding to the copy end screen data at the operation part 109w.

In the fourth variation in FIG. 47, the document ID is sent in the step S1404 and the step S1406, instead of sending the image data. Therefore, it is possible to reduce workload of the network 3w and improve response performance.

### - Fifth Variation -

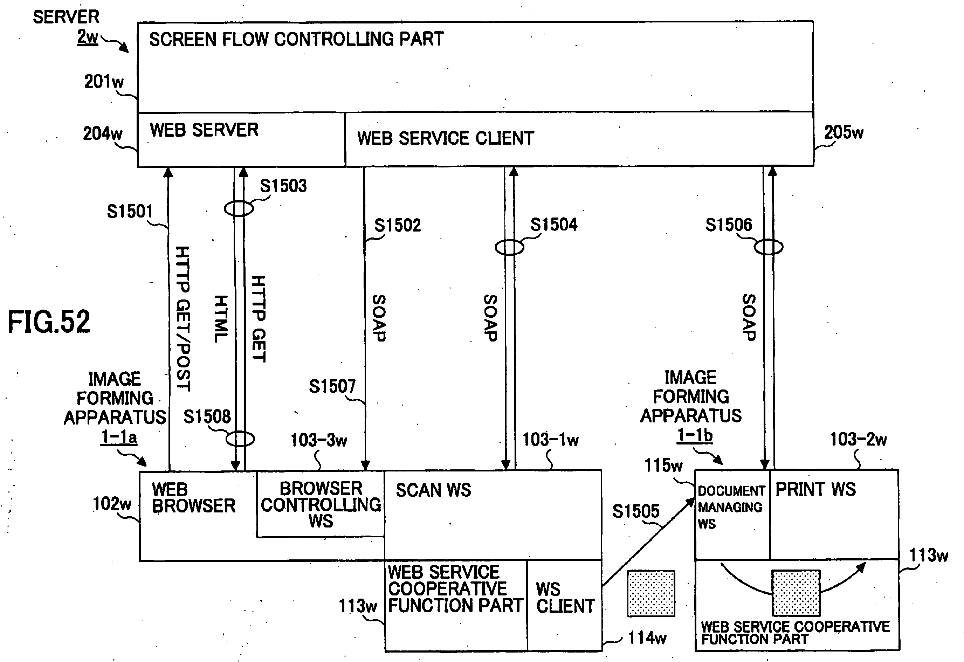

FIG. 52 is a diagram for explaining a fifth variation of the process in the system 9102 using Web services. In the image forming apparatuses 1-1a and 1-1b and the server 2w in FIG. 52, parts necessary to explain are shown but other parts will be omitted.

Steps S1501, S1502, and S1503 are similar to the steps S1101, S1102, and S1103, and explanations thereof will be omitted. The screen flow controlling part 201w of server 2w sends a scan start instruction to the Web service client 205w. The process advances to step S1504. In the step S1504, the Web service client 205w sends a scan start instruction to the scan WS 103-1w of the image forming apparatus 1-1a. For the scan start instruction in the step S1504, the request SOAP message in FIG. 48 is used.

When the scan start instruction is received, the scan WS 103-1w controls the scanner 111w by the scan function part 107w, and executes a scan. When the scan ends, the scan WS 103-1w of the image forming apparatus 1-1a sends the document ID of the image data which is scanned by using the response SOAP message shown in FIG. 49, to the Web service client 205w.

The process advances to step S1505. In the step S1505, the WS client 114w of the image forming apparatus 1-1a sends the image data to a document managing WS 115w of the image forming apparatus 1-1b. The document managing WS 115w is a Web service for controlling a document management function part (not shown) provided by the Web service server 103w of the image forming apparatus 1-1b.

For example, the document managing WS 115w of the image forming apparatus 1-1b stores the image data received from the server 2w. By the Web service cooperative function part 113w, the image data stored in the local memory are cooperated between the document managing WS 115w and the print WS 103-2w.

In parallel with the step S1505, the screen flow controlling 201w of the server 2w sends a print start instruction to the Web service client 205w. The process advances to step S1506. In the step S1506, the Web service client 205w sends a print start instruction to the print WS 103-2w of the image forming apparatus 1-1b. For the print start instruction sent in the step S1506, the request SOAP message including the document ID as shown in FIG. 49 is used.

When the print start instruction is received, the print WS 103-2w reads out image data corresponding to the document ID from various image data stored in the local memory, controls the plotter 110w by the print function part 106w, and executes a print. The print WS 103-2w waits for a process of the step S1505, and the print is executed when preconditions are received. That is, the Web service cooperative function part 113w of the image forming apparatus 1-1b conducts a waiting process for the step S1505 and the step S1506. When the print ends, the print WS 103-2w informs a print end to the Web service client 205w by sending a response SOAP message shown in FIG. 51. In step S1507 and step S1508, similar to the steps S1502 and S1503, the copy end screen 304w is displayed at the operation part 109w.

In the fifth variation of the system 9102 using Web services, the document ID is sent in the step S1504 and the step S1506, instead of sending the image data. Therefore, it is possible to reduce workload of the network 3w, and to improve the response performance.

### - Sixth Variation -

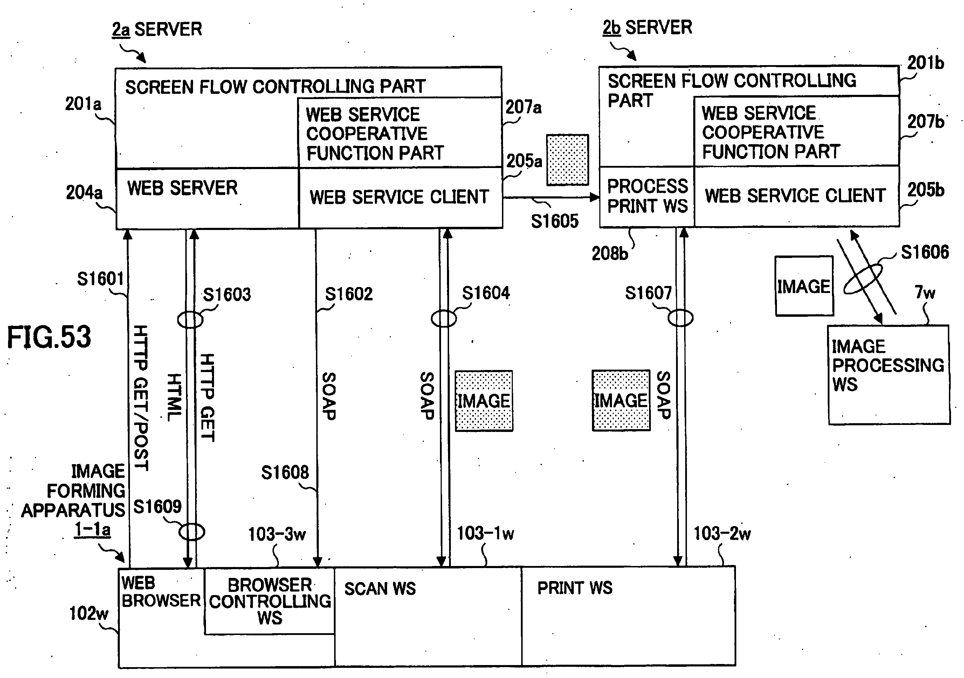

FIG. 53 is a diagram for explaining a sixth variation of the system 9102 using Web services. A configuration of an image forming apparatus 1-1a is the same as the configuration of the image forming apparatus 1-1w, and configuration of servers 2a and 2b are the same as the configuration of the server 1w. In the image forming apparatus 1-1a and servers 2a and 2b, parts necessary to explain are shown, but other parts will be omitted. Configurations of the servers 2a and 2b are basically similar to the configuration of the server 2w, and detailed explanations thereof will be omitted. Screen flow controlling parts 201a and 201b correspond to the screen flow controlling part 201w, Web service clients 205a and 205b correspond to the Web service client 205w, and Web service cooperative function parts 207a and 207b correspond to the Web service cooperative function part 207w.

Steps S1601, S1602, S1603, and S1604 are the same as the steps S1101, S1102, S1103, and S1104, and explanations thereof will be omitted. The Web service client 205a sends the image data received in the step S1604, to a process print WS 208b of the server apparatus 2b. The process print WS 208b is a Web service for controlling a process print function part (not shown) provided by the Web service server. In addition, the servers 2a and 2b cooperate with each other with respect to the image data and processes by the Web service cooperative function parts 207a and 207b.

The screen flow controlling part 201b of the server 2b instructs an image process to the Web service client 205b. The process advances to step S1606. In the step S1606, the Web service client 205b conducts a process to the image data by using an image processing WS 7w through the network 3w.

Subsequently, the screen flow controlling part 201b of the server 2b sends a print start instruction to the Web service client 205b. The process advances to step S1607. In the step S1607, the Web service client 205b of the server 2b sends the print start instruction to the print WS 103-2w of the image forming apparatus 1-1a. For the print start instruction sent in the step S1607, the request SOAP message including the image data as shown in FIG. 43 is used.

When the print start instruction is received, the print WS 103-2w controls the plotter 110w by the print function part 106, and executes a print. When the print ends, the print WS 103-2w informs a print end to the Web service client 205b by using the response SOAP message shown in FIG. 44. Steps S1608 and S1609 are the same as the steps S1107 and S1108, and explanations thereof will be omitted.

In the sixth variation of the process of the system 9102 using Web services, it is possible to build up a new application by utilizing an existing application. For example, in a case of additionally providing a barcode when a document is printed, it is possible to select and use a preferable application through the network 3w.

In the first variation through the sixth variation, since various Web services cooperate with each other, it is possible to reduce a waiting time for a request process.

A Web service will be described as one example of a service controlling a function through a network, but the service is not limited to the Web service.

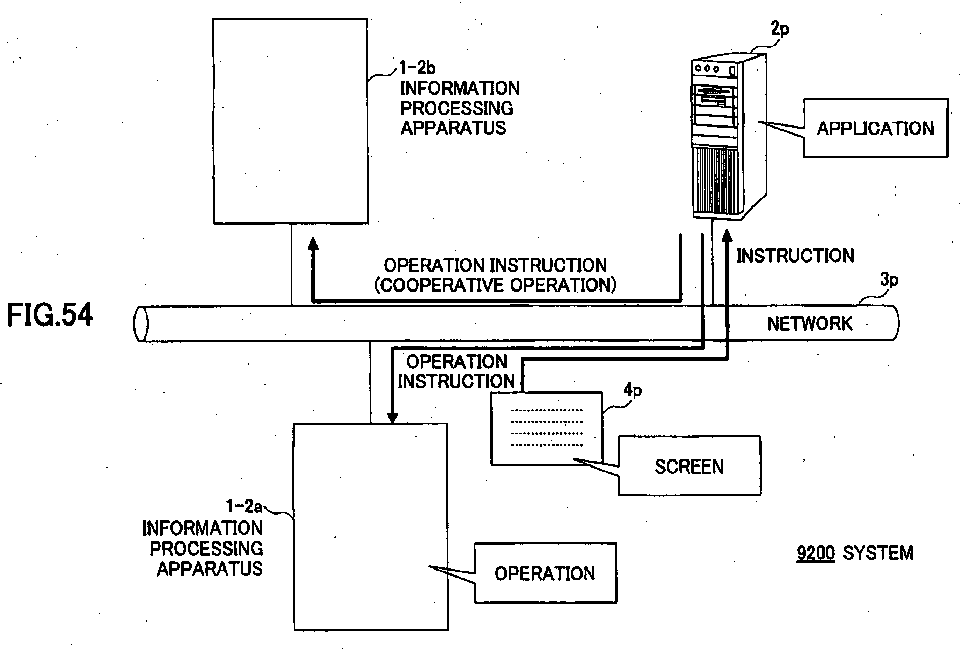

FIG. 54 is a conceptual diagram showing a basic configuration of a system 9200 using Web services. In the system 9200 using Web services, at least one or more image forming apparatuses 1a and 1b, and a server 2p are connected to each other through a network 3p such as a LAN (Local Area Network), the Intranet, or a like.

The server 2p includes a application. Moreover, each of the information processing apparatus 1-2a and 1-2b includes one or more image forming functions, and provides one or more Web services controlling the image forming functions through the network 3p. Furthermore, the information processing apparatus 1-2a includes an operation part capable of displaying a Web browser.

In the system 9200 using Web services, the Web services provided by the information processing apparatuses 1-2a and 1-2b are used and the application is built up on the server 2p. A user interface of the application is provided by a Web server of the server 2p. The information processing apparatus 1-2a displays a user interface 4p of the application by using the Web browser being as a Web client at the operation part. A user can operate the application built up on the server 2p via the user interface 4p of the application displayed at the operation part.

When the user instructs a copy operation from the user interface 4p of the application, a copy instruction is sent from the Web browser of the information processing apparatus 1-2a to the Web server of the server 2p in response to the copy instruction. When the information processing apparatus 1-2a and the information processing apparatus 1-2b cooperate with each other, the application of the server 2p sends the operation instruction to the Web service server of the information processing apparatus 1-2b. Concerning security, communications between each of the information processing apparatuses 1-2a and 1-2b and the server 2 can be conducted by using a SSL (Secure Socket Layer) or a like.

As described above, in the system 9200 using Web services in FIG. 54, it is possible to substitute the special interface for the device control, the special user interface, and the special programming manner for the information processing apparatus with the Web services provided by the information processing apparatuses 1-2a and 1-2b. Accordingly, it is possible to develop and customize the application for controlling the functions of the information processing apparatuses 1-2a and 1-2b by using technologies such as a technology for building the Web application.

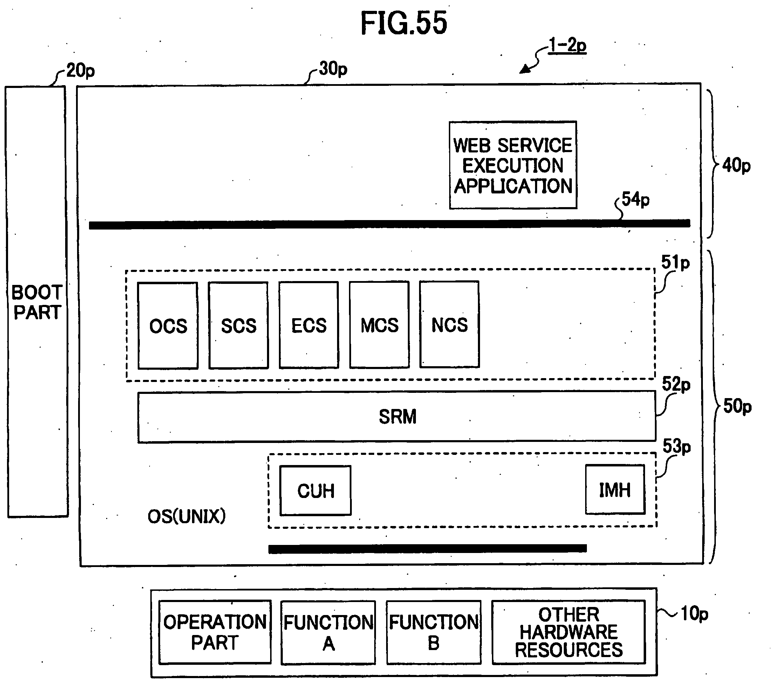

Next, configurations of the information processing apparatuses 1-2a and 1-2b will be described. In the following, the information processing apparatus 1-2a and 1-2b are collectively called an information processing apparatus 1-2p. FIG. 55 is a diagram showing a configuration of the information processing apparatus 1-2p. In FIG.55, the image forming apparatus 1-2p includes a hardware resource 10p, a boot part 20p, and a software group 30p.

The hardware resource 10p includes devices (hardware resources) such as an operation part, a function A, a function B, and a like. If the information processing apparatus 1-2p is an information processing apparatus, the hardware resources include a plotter, a scanner, and a like. Also, the information processing apparatus can be applies as a control unit of an automobile or a like.

The software group 30p includes an application 40p, and a platform 50p. The boot part 20p is initially executed when the information processing apparatus 1-2p, and the application 40p and the platform 50p are activated on an OS (Operating System).

The application 40p includes a Web service execution application. The platform 50p includes a control service 51p, an SRM (System Resource Manager) 52p, and a handler layer 53p. Moreover, the platform 50p includes an API (Application Program Interface) 54p. Moreover, the information apparatus 1-2p may implement the most essential application 40p, and may use the application 40p when a . communication with the server 2p is an offline.

The control service 51p includes an OCS (Operating part Control Service), an SCS (System Control Service), an ECS (Engine Control Service), an MCS (Memory Control Service), and an NCS (Network Control Service). The handler layer 53p includes a CUH (Control Unit Handler) and an IMH (Image Memory Handler).

An OS (Operating System) executes various software of the application 40p and the platform 50p as processes in parallel. A process of the OCS controls the operation part functioning as an information communication part between a user and a main control. A process of the SCS conducts a process for controlling a system. A process of the ECS controls an engine part of the hardware resources 10p.

A process of the MCS conducts a memory control. A process of the NCS intermediates and handles to send and receive data. A process of the SRM 52p manages the hardware resources 10p with the SCS.

Moreover, the handler layer 53p includes the CUH (Control Unit Handler) for managing a CU (Control Unit), which will be described later, and the IMH (Image Memory Handler) for managing a memory area in which are assigned to processes. The SRM 52p and CUH conducts a process request to the hardware resources 10p by using an engine I/F (Inter Face). By configuring as shown in FIG. 55, in the information processing apparatus 1-2p, processes required for application 40 in common are centralized in the platform 50p.

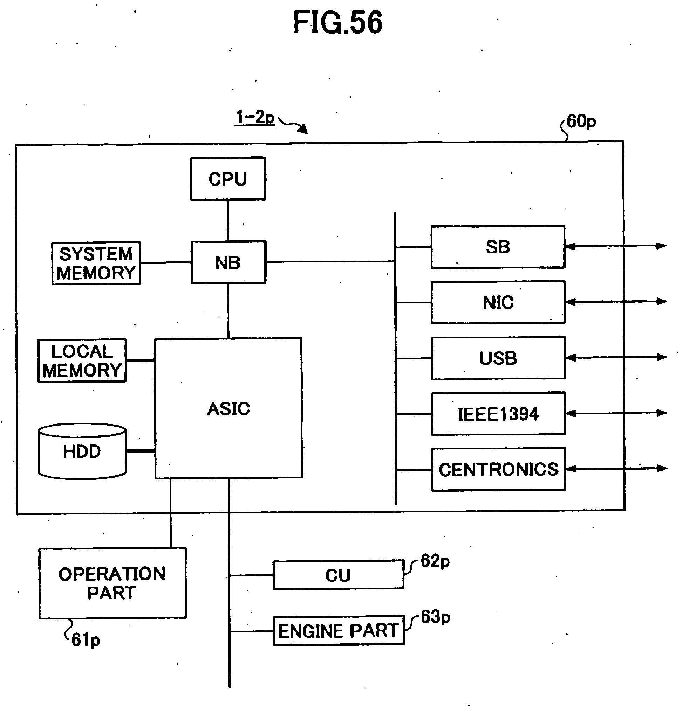

FIG. 56 is a diagram a hardware configuration of the information processing apparatus 1-2p. The information processing apparatus 1-2p includes a controller 60p, an operation part 61p, an FCU 62p, and an engine part 63p.

The controller 60p includes a CPU (Central Processing Unit), a system memory, a local memory, an HDD (Hard Disk Drive), an NB (North Bridge), an ASIC (Application Specific Integrated Circuit), an SB (South Bridge), an NIC (Network Interface Card), a USB (Universal Serial Bus) I/F, an IEEE1394 I/F, and a centronics I/F.

A CPU controls the entire information processing apparatus 1-2p. For example, the CPU activates and executes processes on the OS. An NB is a bridge. An SB is a bridge for connecting to a PCI bus, a ROM (Read-Only Memory), peripheral devices, and a like. A system memory is used as a memory for a process of the information processing apparatus 1-2p. A local memory is used as a buffer for the process.

An ASIC is an IC (Integrated Circuit) including hardware elements for the process. An HDD (Hard Disk Drive) is an example of a storage unit (auxiliary storage unit) for accumulating various data, programs, and a like. An NIC (Network Interface Card) is an interface device for connecting the information processing apparatus 1-2p to the network 3p. A USB (Universal Serial Bus) device, an IEEE 1394 device, and a centronics are interfaces compliance with respective standards. The operation part 61p accepts an input operation from a user, and displays information for the user. The CU 62p and the engine part 63p controls hardware resources 10p of the information processing apparatus 1-2p.

In a case in that the information processing apparatus 1-2p is an information processing apparatus, for example, Japanese Laid-open Patent Application No. 2002-84383 discloses the configuration shown in FIG. 55 and the hardware configuration shown in FIG. 56. Accordingly, by referring to the Japanese Laid-open Patent Application No. 2002-84383 discloses, it is possible to understand details of operations of each of functional blocks configuring the information processing apparatus 1-2p shown in FIG. 55 and details of operations of each of hardware blocks configuring the information processing apparatus 1-2p shown in FIG. 56. In the following, configurations and processes of systems using Web services will be described as examples of the information processing apparatus 1-2p in detail according to the present invention.

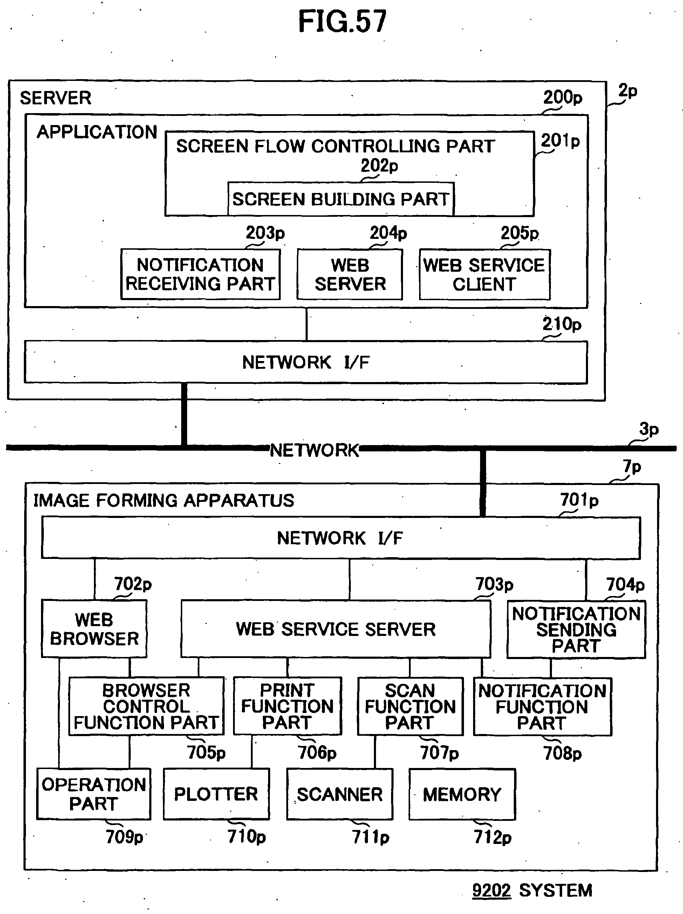

FIG. 57 is a diagram showing a configuration of a system 9202 using Web services. In the system 9202 using Web services in FIG. 57, the image forming apparatus 7p and the server 2p are connected to each other through the network 3p.

The image forming apparatus 7p includes a network I/F 701p, a Web browser 702p, a Web service server 703p, a notification sending part 704p, a browser control function part 705p, a print function part 706p, a scan function part 707p, a notification function part 708p, an operation part 709p, a plotter 710p, a scanner 711p, and a memory 712p.

Moreover, the server 2p includes an application 200p, and a network I/F 2102. The application 200p includes a screen flow controlling part 201p, a screen building part 202p, a notification receiving part 203p, a Web server 204p, and a Web service client 205p.

In the system 9202 using Web services in FIG. 57, an MVC model forming a "Model" module, a "View" module, and a "Controller" module is structured. The "Model" module handles logic. The "View" module handles to display, input, and output information. The "Controller" module handles to control the "Model" module and the "View" module. In detail, the "Controller" requests the "Model" module to execute necessary logic in response to an input from the "View" module, and requests the "View" module to display a result.

For example, the "View" module in the system 9202 using Web services in FIG. 57 builds an user interface on the server 2p, displays the user interface at a Web browser 702p on the image forming apparatus7p, and conducts to input and output information such as setting values. For example, the "View" module displays information, changes a display of information, instructs a change of information, and instructs an execution of a process.

The "View" module is a Web service for controlling a function such as the scan function part 707p. For example, the "Model" module activates the scanner 711p by the scan function part 707p, and digitizes an image. The "Controller" module uses a suitable Web service provided from the server 2p in response to a request from the Web browser 702p.

For example, when the "Controller" module receives an execution instruction of a copy process, the "Controller" module executes a scan process by the scan function part 707p in accordance with process contents, and executes a print by the print function part 706p. That is, the "Controller" module implements logic of an image forming application.

In response to an instruction from a view displayed at the operation part 709p of the image forming apparatus7p, the "Controller" module of the server 2p executes a suitable "Model" module of the image forming apparatus7p. Accordingly, it is possible for a user of the image forming apparatus 7p to use the image forming application of the server 2p as if the user uses the application of the image forming apparatus 7p.

In the system 9202 using Web service, a user interface is built in an user interface for the Web browser, a device control is conducted in the Web service client, an execution environment is in the server 2p, and a programming manner is in the Web service. Thus, it is possible to develop and customize an application.

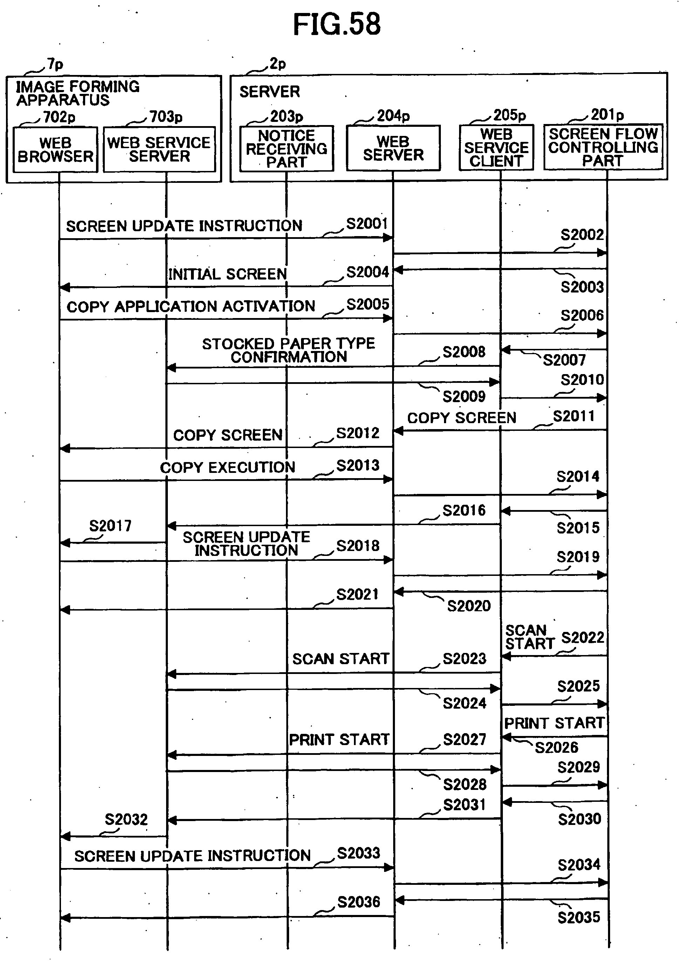

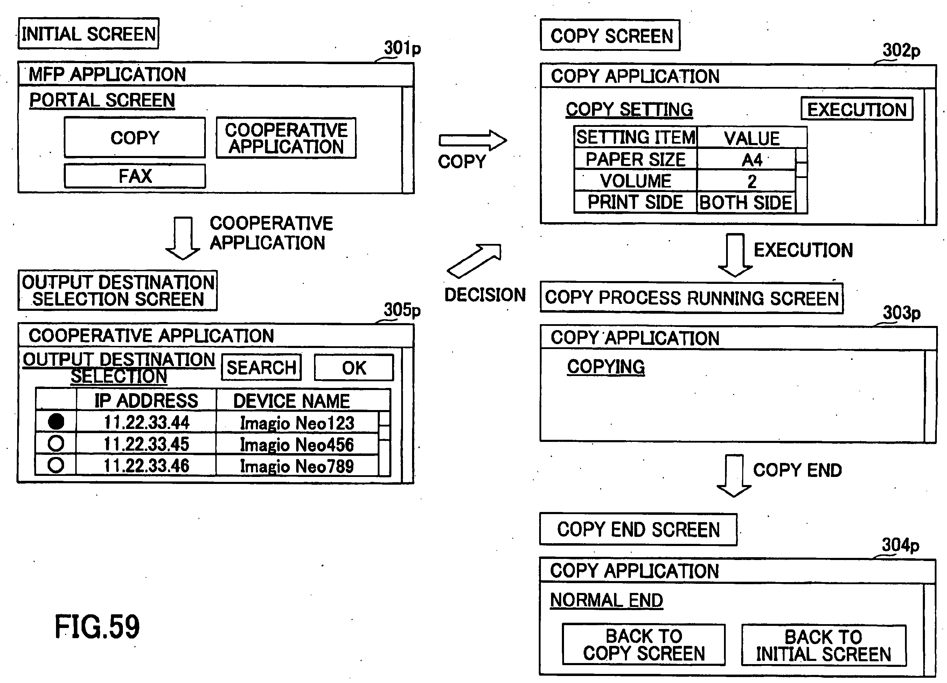

Next, a copy process will be described as one example of processes conducted by the system 9202 using Web services shown in FIG. 57. FIG. 58 is a diagram showing a sequence flow of the copy process as one example of the processes conducted by the system 9202 using Web services. FIG. 59 is a diagram a screen transition of screens displayed at the operation part 709p of the image forming apparatus 7p.

For example, when a power is turned on, the copy process advances to step S2001. In the step S2001, the Web browser 702p of the image forming apparatus 7p sends a screen update instruction to the Web server 204p of the server 2p in order to instruct updating a screen. The copy process advances to step S2002. In the step S2002, the Web server 204p sends the screen update instruction to the screen flow control part 201p. The copy process advances to step S2003. In the step S2003, the screen flow control part 201p generates an initial screen data, and sends the initial screen data to the Web server 204p. The copy process advances to step S2004. In the step S2004, the Web server 204p sends the initial screen data to the Web browser 702p of the image forming apparatus 7p. The Web browser 702p displays an initial screen 301p corresponding to the initial screen data at the operation part 709p.

When a user instructs activating the copy application from the operation part 709p, the Web browser 702p advances to step S2005. In the step S2005, the Web browser 702p sends a copy application activation instruction to the Web server 204p of the server 2p in order to instruct activating the copy application. The copy process advances to step S2006. In the step S2006, the Web server 204p sends the copy application activation instruction to the screen flow controlling part 201p.

The copy process advances to step S2007. In the step S2007, the screen flow controlling part 201p sends stocked paper type confirmation instruction to the Web service client 205p in order to instruct confirming a stocked paper type. The copy process advances to step S2008. In the step S2008, the Web service client 205p sends the stocked paper type confirmation instruction to the Web service server 703p of the image forming apparatus 7p. The copy process advances to step S2009. In the step S2009, the Web service server 703p confirms the stocked paper type by the print function part 706p, and sends the stocked paper type to the Web service client 205p of the server 2p. The copy process advances to step S2010. In the step S2010, the Web service client 205p sends the stocked paper type to the screen flow controlling part 201p.

The copy process advances to step S2011. In the step S2011, the screen flow controlling part 201p generates copy screen data, and sends the copy screen data to the Web server 204p. The copy process advances to step S2012. In the step S2012, the Web server 204p sends the copy screen data to the Web browser 702p of the image forming apparatus 7p. The Web browser 702p displays a copy screen 302p corresponding to the copy screen data at the operation part 709p.

When the user instructs an execution of the copy process from the operation part 709p by pressing a "EXECUTION" button of the copy screen 302p or a like, the copy process advances to step S2013. In the step S2013, the Web browser 702p sends a copy execution instruction to the Web server 204p of the server 2p. The copy process advances to step S2014. In the step S2014, the Web server 204p sends the copy execution instruction to the screen flow controlling part 201p.

The copy process advances to step S2015. In the step S2015, the screen flow controlling part 201p sends a request of the screen update instruction to the Web service client 205p. The request of the screen update instruction is made by the screen flow controlling part 201p of the server 2p so that the Web browser 702p of the image forming apparatus 7p sends the screen update instruction to the Web server 204p of the server 2p.

The copy process advances to step S2016. In the step S2016, the Web service client 205p sends the request of the screen update instruction to the Web service server 703p of the image forming apparatus 7p. The copy process advances to step S2017. In the step S2017, the Web service server 703p sends the request of the screen update instruction to the Web browser 702p through the browser control function part 705p.

When the Web browser 702p of the image forming apparatus 7p receives the request of the screen update instruction, the copy process advances to step S2018. In the step S2018, the Web browser 702p of the image forming apparatus 7p sends the screen update instruction to the Web server 204p of the server 2p. The copy process advances to step S2019. In the step S2019, the Web server 204p sends the screen update instruction to the screen flow controlling part 201p. The process advances to step S2020. In the step S2020, the screen flow controlling part 201p generates copy process running screen data to show that the copy process is running, and sends the copy process running screen data to the web server 204p. The copy process advances to step S2021. In the step S2021, the Web server 204p sends the copy process running screen data to the Web browser 702p of the image forming apparatus7p. The Web browser 702p displays a copy process running screen 303p corresponding to the copy process running screen data.

The copy process advances to step S2022. In the step S2022, the screen flow controlling part 201p of the server 2p sends a scan start instruction to the Web service client 205p to instruct scanning. The copy process advances to step S2023. In the step S2023, the Web service client 205p sends the scan start instruction to the Web service server 703p of the image forming apparatus 7p. The Web service server 703p controls the scanner 711p by the scan function part 707p to execute a scan. When the scan ends, the print process advances to step S2024. In the step S2024, the Web service server 703p informs a scan end to the Web service client 205p. The print process advances to step S2025. In the step S2025, the Web service client 205p informs the scan end to the screen flow controlling part 201p.

The copy process advances to step S2026. In the step S2026, the screen flow controlling part 201p of the server 2p sends a print start instruction to the Web service client 205p in order to instruct printing. The copy process advances to step S2027, the Web service client 205p sends the print start instruction to the Web service server 703p of the image forming apparatus 7p. The Web service server 703p controls the plotter 110 by the print function part 706p to execute a print. When the print ends, the copy process advances to step S2028. In the step S2028, the Web service server 703p informs a print end to the Web service client 205p. The copy process advances to step S2029. In the step S2029, the Web service client 205p informs the print end to the screen flow controlling part 201p.

In steps S2030, S2031, and S2032 similar to the steps S2015, S2016, and S2017, the screen update instruction is requested from the screen flow controlling part 201p of the server 2p to the Web browser 702p of the image forming apparatus 7p. In steps S2033 and S2034 similar to the step S2018 and S2019, the Web browser 702p of the image forming apparatus 7p sends the screen update instruction from the Web browser 702p of the image forming apparatus v to the screen flow controlling part 201p of the server 2p.

The copy process advances to step S2035. In the step S2035, the screen flow controlling part 201p generates copy end screen data to show that the copy process ends, and sends the copy end screen data to the Web server 204p. The copy process advances to step S2036. In the step S2036, the Web server 204p sends the copy end screen data to the Web browser 702p of the image forming apparatus 7p. The Web browser 702p displays a copy end screen 304p corresponding to the copy end screen data at the operation part 709p.

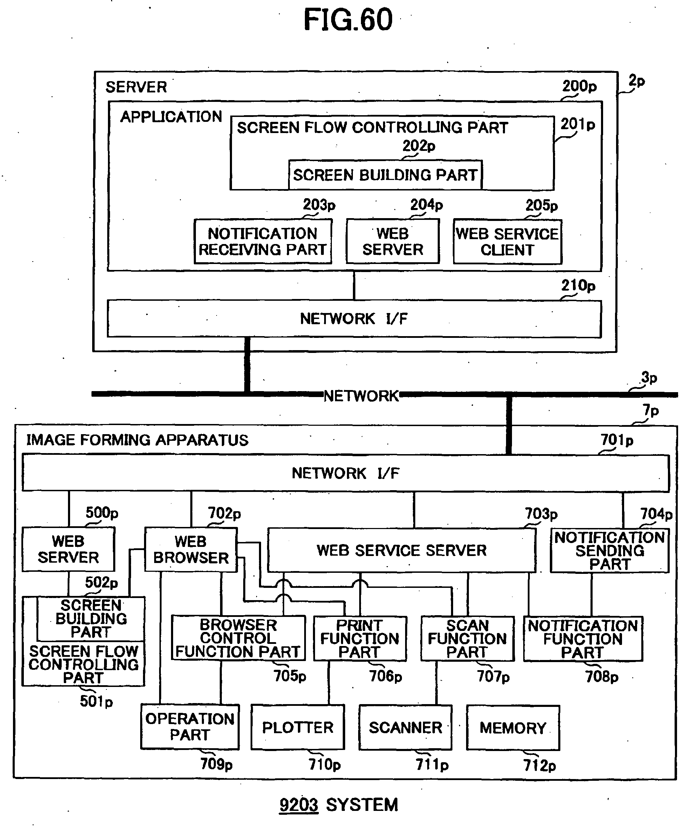

In the system 9202 using Web services in FIG. 57, the Web browser 702p of the image forming apparatus 7p receives various screen data from the Web server 204p, and displays screens corresponding the various screen data at the operation part 709p. In this case, performance may be degraded due to an amount of image data or a state of the network 3p. Accordingly, it is possible to improve the performance by a configuration of a system 9203 using Web services as shown in FIG. 60.

FIG. 60 is a diagram showing the configuration of the system 9203 using Web services. In the system 9203 using Web services shown in FIG. 60, the image forming apparatus 7p and the server 2p are connected to each other through the network 3p. The image forming apparatus 7p in FIG. 60 includes a Web server 500p, a screen flow controlling part 501p, and a screen building part 502p in addition to the configuration of the system 9202 using Web services.

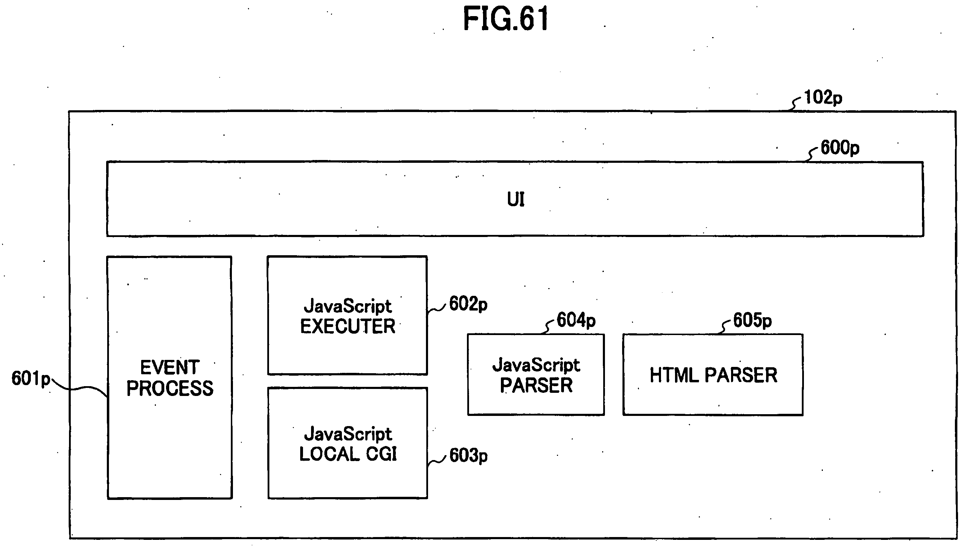

In addition, by configuring the Web browser 702p included in the image forming apparatus 7p in FIG. 60 as shown in FIG..61, the Web browser 702p can execute at least a part of processes of the application 200p. FIG. 61 is a diagram showing a functional configuration of the Web browser.

The Web browser 702p in FIG. 61 includes a UI (user interface) 601p, an Event Process 601p, a JavaScript^{™} executer 602p, JavaScript^{™} Local CGI (Common Gateway Interface) 603p, a JavaScript^{™} parser 604p, and an HTML (HyperText Markup Languate) parser 605p. When the Web browser 702p receives HTML data, the HTML parser 605p parses the HTML data, and sends a layout instruction to the UI 600p. The UI 600p builds a GUI (Graphical User Interface). Moreover, when the HTML data includes JavaScript^{™}, the HTML parser 605p requests the JavaScript^{™} parser 604p to analyze JavaScript^{™}.

The JavaScript^{™} parser 604p parses JavaScript^{™}, and requests JavaScript^{™} parser 604p to process the JavaScript^{™}. The JavaScript^{™} executer 602p sends a layout instruction to the UI 600p based on contents of the request sent from the JavaScript^{™} parser 604p. In addition, JavaScript^{™} executer 602p requests the JavaScript^{™} Local CGI 603p based on contents of the request sent form the JavaScript^{™} parser 604p.

The JavaScript^{™} Local CGI 603p requests the print function part 706p to print out or requests the scan function part 707p to scan. The Event Process 601p receives a process result from the print function part 706p or the scan function part 707p, and sends the process result to the JavaScript^{™} Local CGI 603p. The JavaScript^{™} Local CGI 603p sends the process result to the JavaScript^{™} executer 602p. The JavaScript^{™} executer 602p sends the layout instruction to the UI 600p based on the process result received from the JavaScript^{™} Local CGI 603p so as to build a GUI, or sends the process result to the Web server 204p or 500p.

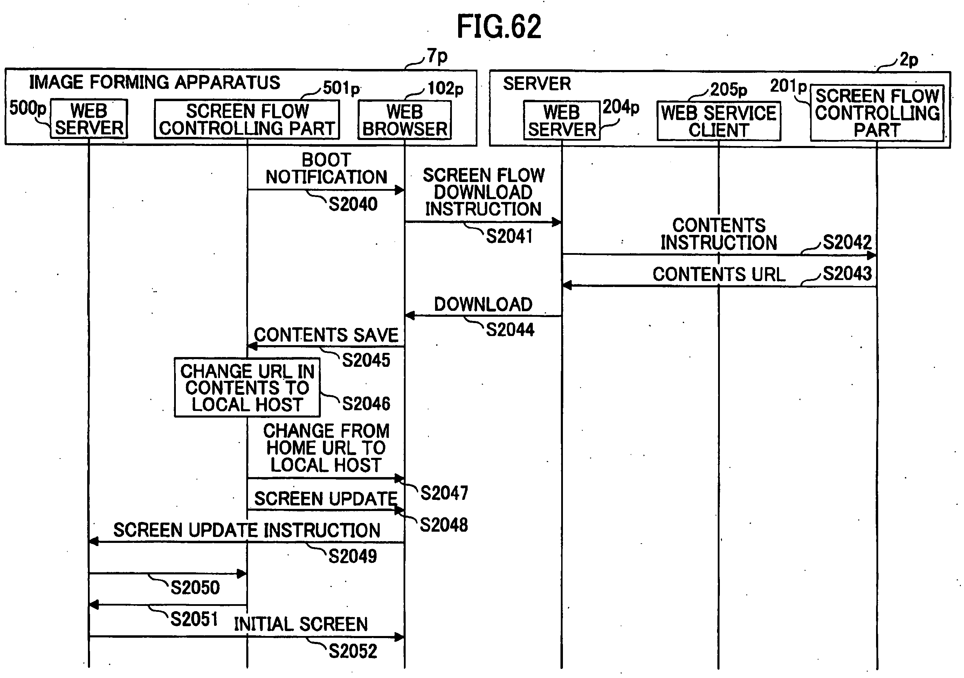

Next, as one example of processes conducted by the system 9203 using Web services in FIG. 60, a process until the initial screen 301p is displayed at the operation part 709p will be described. FIG. 62 is a diagram showing a sequence flow of the process until the initial screen is displayed in the system 9203 using Web services.

When the power is turned on, the process advances to step S2040. In the step S2040, the screen flow controlling part 501p sends a boot notification to the Web browser 702p. The process advances to step S2041. In the step S2041, when the Web browser 702p receives the boot notification from the screen flow controlling part 501p, the server 2p sends a screen flow download instruction to the Web server 204p.

The process advances to step S2042. In the step S2042, the Web server 204p sends a contents instruction to the screen flow controlling part 201p. For example, contents include a control program itself such as a Java^{™} program corresponding to a logic, and control data such as HTML data to be referred by the control program for a control. If the contents include the HTML data only, the system 9203 using Web services can be realized without a function of the Web server 500p.

The process advances to step S2043. In the step S2043, the screen flow controlling part 201p sends a contents URL to the Web server 204p. The process advances to step S2044. In the step S2044, the Web server 204p downloads the contents to the Web browser 702p of the image forming apparatus 7p by using the contents URL received from the screen flow controlling part 201p.

The process advances to step S2045. In the step S2045, the Web browser 702p stores the contents being downloaded to the screen flow controlling part 501p. As described above, in the sequence flow shown in FIG. 62, when the power is turned on and the image forming apparatus 7p is booted, the contents are copied from the server 2p to the image forming apparatus 7p. The process advances to step S2046. In the step S2046, the screen flow controlling part 501p changes an URL included in the contents in a local host URL. The process advances to step S2047. In the step S2047, the screen flow controlling part 501p changes a home URL to the local host URL.

The process advances to step S2048. In the step S2048, the screen flow controlling part 501p sends a request of a screen update instruction to the Web browser 702p. Since the home URL is changed to the local host URL, in step S2049 and step S2050, the screen update instruction is sent from the Web browser 702p to the screen flow controlling part 501p included in the image forming apparatus 7p. Subsequently, the process advances to step S2051, since the URL within the contents is changed to the local host URL, the screen flow controlling part 501p generates initial screen data and sends the initial screen data to the Web server 500p. The process advances to step S2052. In the step S2052, the Web server 502p sends the initial screen data to the Web browser 702p. The Web browser 702p displays the initial screen 301p corresponding to the initial screen data at the operation part 709p.

In processes after the initial screen 301p is displayed at the operation part 709p, by using the JavaScript^{™} Local CGI 603p from the Web browser 702p configured as shown in FIG. 61, the print request is sent to the print function part 706p or the scan request is sent to the scan function part 707p. These processes are different from the sequence flow in FIG. 58, but basically are similar to the sequence flow in FIG. 58, and explanations thereof will be omitted.

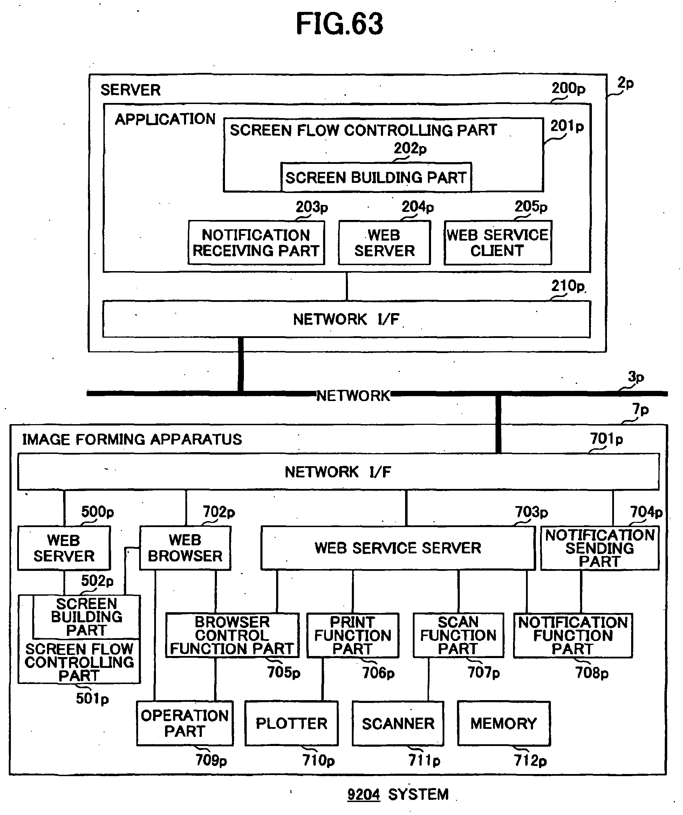

Moreover, in addition to the configuration of the system 9203 using Web services, another configuration as shown in FIG..63 can improve the performance. FIG. 63 is a diagram showing a configuration of a system 9204 using Web services. Parts configured in system 9204 using Web services are the same as ones configured in the system 9203 using Web services. However, in the system 9204 using Web services, the Web browser 702p does not directly communicate to the browser control function part 705p, the print function part 706p, and the scan function part 707p.

In the image forming apparatus 7p in FIG. 63, the JavaScript Local CGI 603p of the Web browser 702p conducts a loop back as a Web service client, with respect to the Web service server 703p of the local host, so as to receive the print request, the scan request, and the process result.

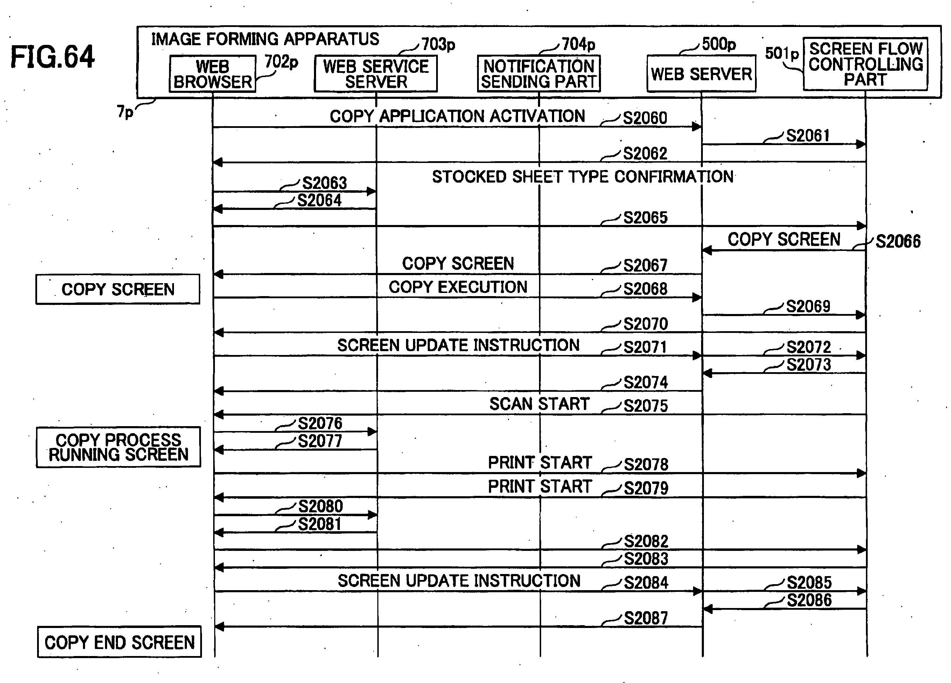

Next, as one example of the processes conducted in the system 9204 using Web services, a copy process will be described. FIG. 64 is a diagram showing a sequence flow of the copy process conducted in the system 9204 using Web services.

For example, when the initial screen 301p is displayed at the operation part 709p, and a user instructs activating the copy application from the operation part 709p, the copy process advances to step S2060. In the step S2060, the Web browser 702p sends a copy application activation instruction to the Web server 500p in the image forming apparatus 7p in order to instruct activating the copy application. The copy process advances to step S2061. In the step S2061, the Web server 500p sends the copy application activation instruction to the screen flow controlling part 501p.

The copy process advances to step S2062. In the step S2062, the screen flow controlling part 501p sends a stocked paper type confirmation instruction to the Web browser 1022 in order to instruct confirming a stocked paper type. The copy process advances to step S2063. In the step S2063, the Web browser 702p sends the stocked paper type confirmation instruction to the Web service server 703p of the local host.

The copy process advances to step S2064. In the step S2064, the Web service server 703p confirms the stocked paper type by the print function part 706p, and sends the stocked paper type to the Web browser 702p. The copy process advances S2065. In the step S2065, the Web browser 702p sends the stocked paper type to the screen flow controlling part 501p.

The copy process advances to step S2066. In the step S2066, the screen flow controlling part 501p generates copy screen data, and sends to the Web server 500p. The copy process advances to step S2067. In the step S2067, the Web server 500p sends the copy screen data to the Web browser 702p. The Web browser 702p displays the copy screen 302p corresponding to the copy screen data at the operation part 709p.

When the user instructs an execution of the copy process from the operation part 709p by pressing the "EXECUTION" button of the copy screen 302p, the.copy process advances to step S2068. In the step S2068, the Web browser 702p sends a copy execution instruction to the Web server 500p. The copy process advances to step S2069. In the step S2069, the Web server 500p sends the copy execution instruction to the screen flow controlling part 501p.

The copy process advances to step S2070. In the step S2070, the screen flow controlling part 501p sends a request of a screen update instruction to the Web browser 702p. When the Web browser 702p receives the request of the screen update instruction, the copy process advances to step S2071. In the step S2071, the Web browser 702p sends the screen update instruction to the Web server 500p. The copy process advances to step S2072. In the step S2072, the Web server 500p sends the screen update instruction to the screen flow controlling part 501p. The copy process advances to step S2073. In the step S2073, the screen flow controlling part 501p generates copy process running screen data, and sends the copy process running screen data to the Web server 500p. The copy process advances to step S2074. In the step S2074, the Web server 500p sends the copy process running screen data to the Web browser 702p. The Web browser 702p displays the copy process running screen 303p corresponding to the copy process running screen data at the operation part 709p.

The copy process advances to step S2075. In the step S2075, the screen flow controlling part 501p sends a scan start instruction to the Web browser 702p. The copy process advances to step S2076. In the step S2076, the Web browser 702p sends a scan start instruction to the Web service server 703p. The Web service server 703p controls the scanner 711p by the scan function part 707p and executes a scan. When the scan ends, the copy process advances to step S2077. In the step S2077, the Web service server 703p informs a scan end to the Web browser 702p. The copy process advances to step S2078. In the step S2078, the Web browser 702p informs the scan end to the screen flow controlling part 501p.

The copy process advances to step S2079. In the step S2079, the screen flow controlling part 501p sends a print start instruction to the Web browser 702p. The copy process advances to step S2080. In the step S2080, the Web browser 702p sends the print start instruction to the Web service server 703p. The Web service server 703p controls the plotter 710p by the print function part 706p, so as to execute a print. When the print ends, the copy process advances to step S2081. In the step S2081, the Web service server 703p informs a print end to the Web browser 702p. The copy process advances to step S2082. In the step S2082, the Web browser 702p informs the print end to the screen flow controlling part 501p.

The copy process advances to step S2083. In the step S2083, the screen flow controlling part 501p sends a request of a screen update instruction to the Web browser 702p. In step S2084 and step S2085, the Web browser 702p sends the screen update instruction to the screen flow controlling part 501p.

The copy process advances to step S2086. In the step S2086, the screen flow controlling part 501p generates copy end screen data, and sends the copy end screen data to the Web server 500p. The copy process advances to step S2087. In the step S2087, the Web server 500p sends the copy end screen data to the Web browser 702p. The Web browser 702p displays the copy end screen 304p corresponding to the copy end screen data at the operation part 709p.

In the system 9203 using Web service in FIG. 60 and the system 9204 using Web service in FIG. 63, by using the Web browser 702p configured as shown in FIG. 61, it is possible for the Web browser 702p to promptly execute the process of the application 200p, which may degrade the performance in the system 9202 using Web services or may handle a large amount of data. Therefore, it is possible to improve the performance and a response in the system 9203 using Web service in FIG. 60 and the system 9204 using Web service in FIG. 63.

In addition, in the systems 9203 and 9204 using Web services in FIG. 60 and FIG. 63, the Web browser 702p can execute the process of the application 200p handling data which is to be secured. It is possible to prevent the data to be secured from being leaked through the network 3p and to improve security of the data.

In order to switch to the local host, an UI (User Interface) concerning an error display may be copied to the local host when the image forming apparatus 7p is booted. When a jam occurs and an error is displayed, an access may be switched to the local host. Also, when a communication to the server 2p becomes impossible due to a network error or a like, the access may be switched to the local access.

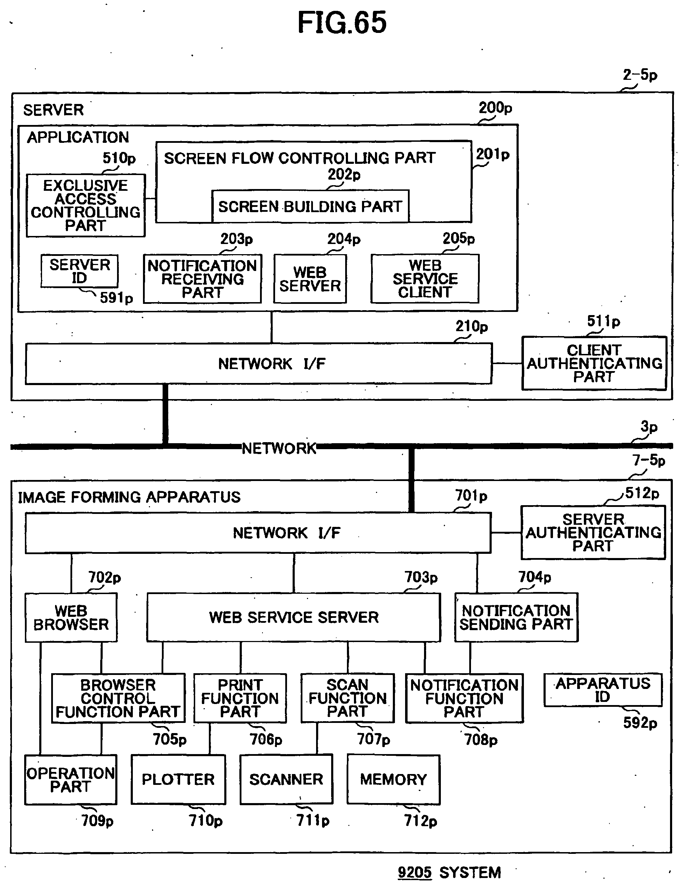

By configuring the system 9202 using Web services in FIG. 57 to be a system 9205 using Web services as shown in FIG. 65, the image forming apparatus 7p can confirm a validity of the server 2p, and the server 2p can confirm a validity of the image forming apparatus 7p. Moreover, in the system 9205 using Web services in FIG. 65, in order to control a plurality of the image forming apparatuses 7p connected to the network 3p, an exclusive access control may be conducted. FIG. 65 is a diagram showing a configuration of the system 9205 using Web services.

In the system 9205 using Web services in FIG. 65, an image forming apparatus 7-5p includes a server authenticating part 512p and an apparatus ID area 592p for storing an apparatus ID in addition to the image forming apparatus 7p shown in FIG.25, and a server 2-5p includes an exclusive access controlling part 510p, a client authenticating part 511p, and a server ID area for storing a server ID in addition to the server 2p. The server authenticating part 512p of the image forming apparatus 7-5p conducts an authentication by using the server ID stored in the server ID area 591p of the server 2-5p. Moreover, the client authenticating part 511p of the server 2-5p conducts an authentication by using the apparatus ID stored in the apparatus ID area 592p of the image forming apparatus 7-5p. The exclusive access controlling part 510p can be simultaneously accessed from a plurality of the image forming apparatuses 7-5p. For example, the server 2-5p simultaneously receives requests with respect to the scan function part 707p or a like, and conducts the exclusive access control. A sequence flow in the system 9205 using Web services in FIG. 65 is different from the sequence flow in FIG. 58 for the system9202, but is basically similar to the sequence flow in FIG. 58, and explanations thereof will be omitted.

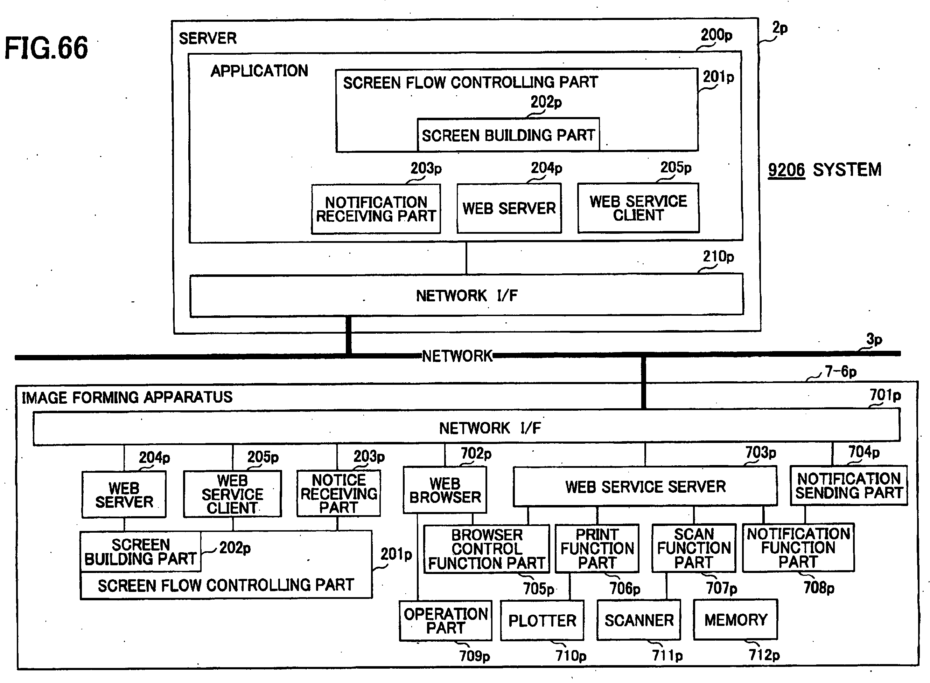

Moreover, by configuring a system 9206 using Web services as shown in FIG. 66 other than the systems 9203 and9204, it is possible to improve the performance. FIG. 66 is a diagram showing a configuration of the system 9206 using Web services. An image forming apparatus 7-6p in FIG. 66 includes a screen flow controlling part 201p, a screen building part 202p, a notification receiving part 203p, a Web server 204p, and a Web service client 205p in addition to the image forming apparatus 1-2p in FIG.57.

For example, in FIG. 66, when the image forming apparatus 7-6p is booted, the image forming apparatus 7-6p copies the screen flow controlling part 201p, the screen building part 202p, the notification receiving part 203p, the Web server 204p, and the Web service client 205p from the server 2p. In the system 9206 using Web service in FIG. 66, by using copying and using the screen flow controlling part 201p, the screen building part 202p, the notification receiving part 203p, the Web server 204p, and the Web service client 205p from the server 2p, it is possible for the image forming apparatus 7-6p to executes the process of the application 200p which may degrade the performance and handles the large amount of data. Therefore, it is possible to improve the performance and the response in the system 9206 using Web services in FIG. 66.

Moreover, in the system 9206 using Web services in FIG. 66, the image forming apparatus 7-6p can execute the process of the application 200p handing data to be secured. Therefore, it is possible to prevent the data to be secured from being leaked through the network 3p and to improve the security of the data. In the system 9206 using Web services in FIG. 66, the image forming apparatus 7-6p copies screen data concerning an error screen and a state transition screen from the server 2p. Thus, it is possible to switch a screen without communicating to the server 2p.

Referring back to FIG. 58 and FIG. 59, when the user instructs activating a cooperative application from the operation part 709p by pressing a "COOPERATIVE APPLICATION" button of the initial screen 301 or a like, similar to the steps S2005 and S2006, the Web browser 702p of the image forming apparatus 1-2p sends a cooperative application activation instruction to the screen flow controlling part 201p of the server 2p. Similar to the steps S2007 through S2010, processes for acquiring information necessary to generate image data from the Web service server 703p of the image forming apparatus 1-2p.

Then, similar to the steps S2011 and S2012, the screen flow controlling part 201p of the server 2p sends output destination selection screen data for selecting an output destination to the Web browser 702p of the image forming apparatus 1-2p. The Web browser 702p displays an output selection screen 305p corresponding to the output destination selection screen data at the operation part 709p. The user can select one output destination for the copy process from the output destination selection screen 305p. As described above, in the copy process, the cooperative application outputs from another image forming apparatus 1-2p through the network 3p. That is, the cooperative application is a customized regular application.

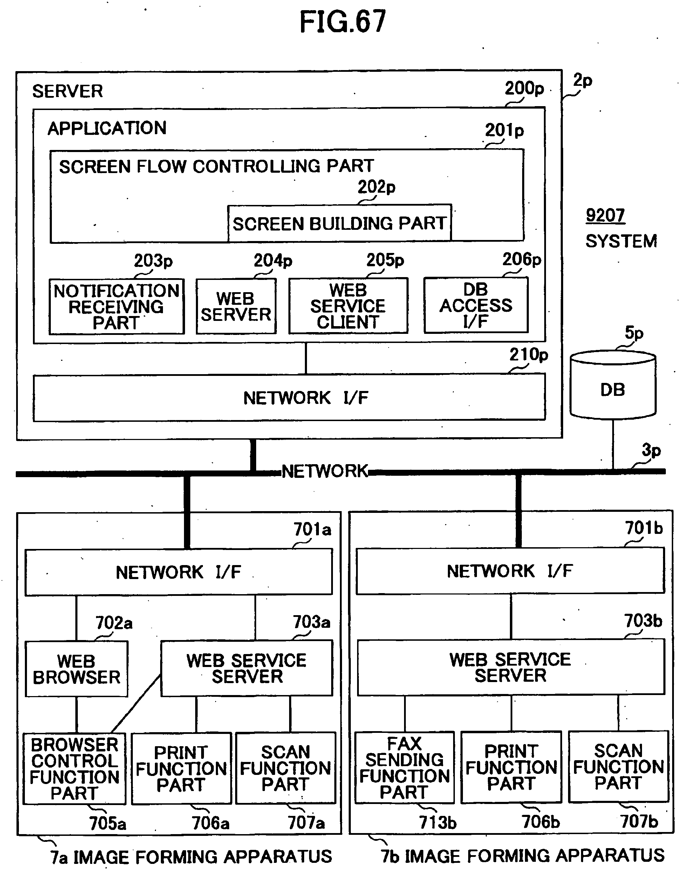

FIG. 67 is a diagram showing a configuration of a system 9207 using Web services. In the system 9207 using Web services, different from the system 9202 using Web services in FIG. 57, two image forming apparatuses 7a and 7b having the same configuration of the image forming apparatus 7p and a database (DB) 5p are connected to the network 3p, and the server 2p further includes a DB access I/F 206p. Other configurations in the system 9207 using Web services are the same as the ones in the system 9202 using Web services in FIG. 57, and explanations thereof will be omitted. Since detailed configurations of the image forming apparatuses 7a and 7b are the same as the one of the image forming apparatus 7p, only parts described in the followings are shown in FIG. 67.

In the system 9207 using Web services, the image forming apparatuses 7a and 7b are connected to the network 3p, and image forming applications cooperate with each other and realize various processes. If the DB 5p does not support the Web service, the server 2p accesses the DB 5p through the DB access I/F 206p.

The system 9202 using Web services as shown in FIG. 57 is a basic configuration in that a number ratio of the server 2p and the image forming apparatus 7p is one to one (1:1), the image forming application is built up on the server 2p, and the image forming apparatus 7p can be remotely used without concerning any special rule of the image forming apparatus 7p. Accordingly, it is possible to easily develop and customize an application. Moreover, since applications are stored in the server 2p, the number of the applications is not influenced by a hardware limitation of the image forming apparatus 7p.

In the system 9207 using Web services in which the number ratio of the server 2p and the image forming apparatuses 7a and 7b (hereinafter, collectively called a plurality of the image forming apparatuses 7p) is one to multiple (1:two or more) as shown in FIG. 67, an application of the server 2p is activated in multiple sessions. In the system 9207 using Web services in FIG. 67, by changing the "Controller" module, applications capable of controlling the plurality of the image forming apparatuses 7p can be simultaneously updated. Thus, it is possible to update a version for a bug fix and a function enhancement. It is possible to update the applications capable of controlling the plurality of the image forming apparatuses 7p, instead of modifying any application implemented in the plurality of the image forming apparatuses 7p. In addition, it is possible to build a system application cooperating functions of the plurality of the image forming apparatuses 7p.

In another system using Web services (not shown) in which the number ratio of the servers 2p and the image forming apparatus 7p is multiple to one (two or more servers 2p:1), applications provided by different third parties can be implemented for user's preferences. For example, it is possible to configure a system using Web services which uses different applications for each user.

Also, applications can be provided through a network such as the Internet by makers of the image forming apparatuses 7p. Thus, the server 2p can be configured so that the users do not recognize the server 2p on the network 3p.

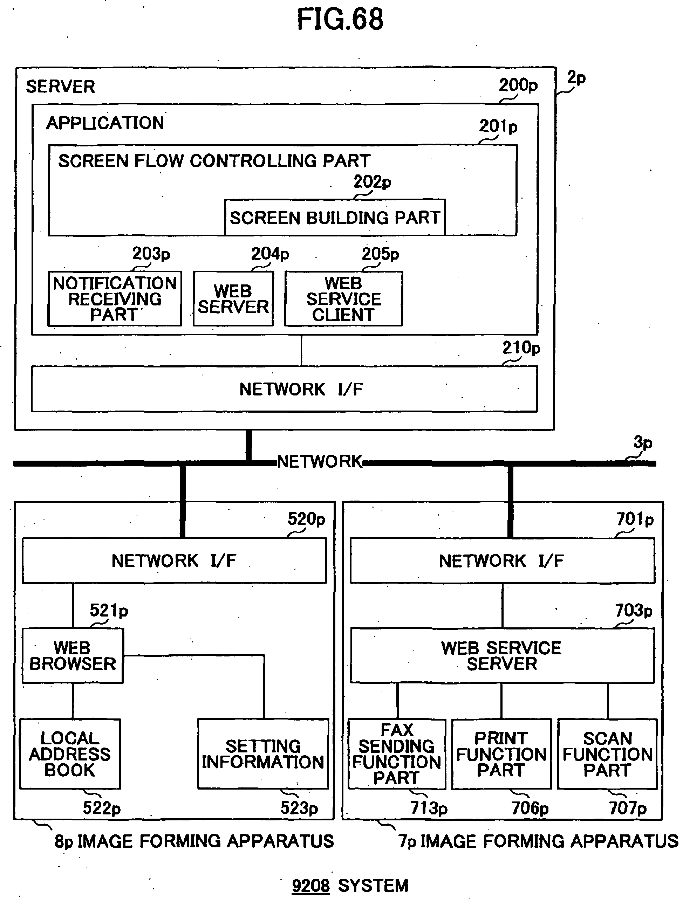

In the systems 9200 through 9207 as described above, the Web browser 702p of the image forming apparatus 7p displays various screens at the operation part 709p. Alternatively, a terminal apparatus 8p other than the image forming apparatus 7p, and the server 2p may display various screen. FIG. 68 is a diagram showing a configuration of a system 9208 using Web services.

In the system 9208 using Web services, different from the system 9202 using Web services, the terminal apparatus 8p is connected to the network 3p. Other parts are the same as the ones in the system 9202 in FIG. 57, and explanations thereof will be omitted. Also, parts necessary to explain are shown and other parts are omitted in the configuration of the image forming apparatus 7p.

The terminal apparatus 8 includes a network I/F 520p, a Web browser 521p, a local address book 522p, and a setting information area 523p. The Web browser 521p of the terminal apparatus 8p receives various screen data from the Web server 204p of the server 2p, and displays screens corresponding to the various screen data received from the server 2p. In addition, the Web browser 521p sends an instruction from a user to the Web server 204p of the server 2p. The terminal apparatus 8p is a PC (Personal Computer), a PDA (Personal Digital Assistant) as a portable information terminal, a mobile phone, or a like.

As described above, in the system 9208 using Web services in FIG. 68, it is possible to display a screen at a device other than the image forming apparatus 7p. For example, the screen can be displayed at a large-screen display or a like. In the system 9208 using Web services, it is possible to create an address book combining the local address book 522p of the terminal apparatus 8p and an address book (not shown) of the image forming apparatus 7p, and indicate a destination by using the combined address book. In this case, the local address book 522p of the terminal apparatus 8p is not sent to the image forming apparatus 7p. Therefore, it is possible to improve security of the local address book 522p.

Moreover, in the system 9208 using Web services in FIG. 68, a job registration function accepting a job registration to the image forming apparatus 7p is implemented in the terminal apparatus 8p. Accordingly, the user can register a job to the image forming apparatus 7p by using the terminal apparatus 8p. For example, the user can select a job registered to the image forming apparatus 7p from an UI (User Interface) displayed at the operation part 709p.

For example, if the user is allowed to repeatedly use the job registered to the image forming apparatus 7p, the UI displayed at the operation part 709p can be a special UI for each user (a special operation panel for each user).

By storing an HTML file including setting information (integration + both sides + staple + a like) which the user usually selects and sets at a copy screen, to the terminal apparatus 8p as a local device, and displaying the HTML file at the operation part 709p of the image forming apparatus 7p, the user can display a user's UI at the operation part 709p at any time and any image forming apparatus 7p.

Alternatively, data in another format other than the HTML file, in which the setting information which the user usually selects and sets at the copy screen, may be stored in the terminal apparatus 8p, and a screen corresponding to the data may be displayed at the operation part 709p of the image forming apparatus 7p.

Variations of the process in the system 9202 will be described in the following. In the following variations, an image forming apparatus, and a sound processing apparatus will be described as examples of the information processing apparatus 1-2p, but the present invention can be applied to any information processing apparatus. For example, the information processing apparatus can be applies as a control unit of an automobile or a like by a similar configuration as described above.

### - First Variation -

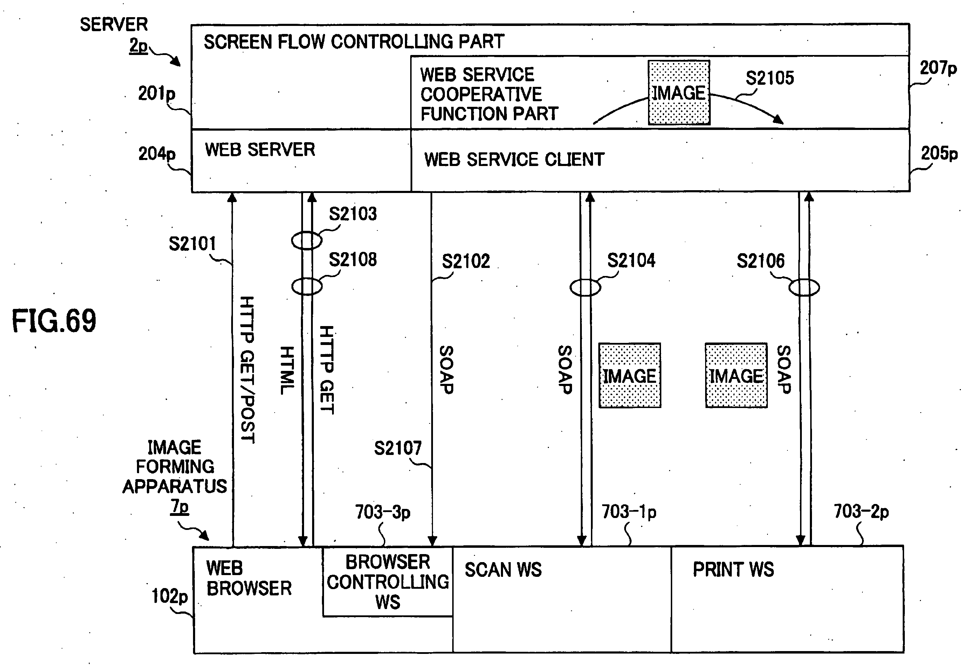

FIG. 69 is a diagram for explaining a first variation of the process in the system 9202 using Web services. In the image forming apparatus 7p and the server 2p in FIG. 69, parts necessary to explain are shown and other parts will be omitted.

When a user instructs executing a copy process from the operation part 709p by pressing the "EXECUTION" button of the copy screen 302p or a like, the process advances to step S2101. In the step S2101, the Web browser 702p sends a copy execution instruction to the Web server 204p of the server 2p by using a GET method or a POST method of an HTTP (Hyper Text Transfer Protocol), in order to instruct executing a copy. The Web server 204p sends the copy execution instruction to the screen flow controlling part 201p. The screen flow controlling part 201p sends a request of a screen update instruction to the Web service client 205p.

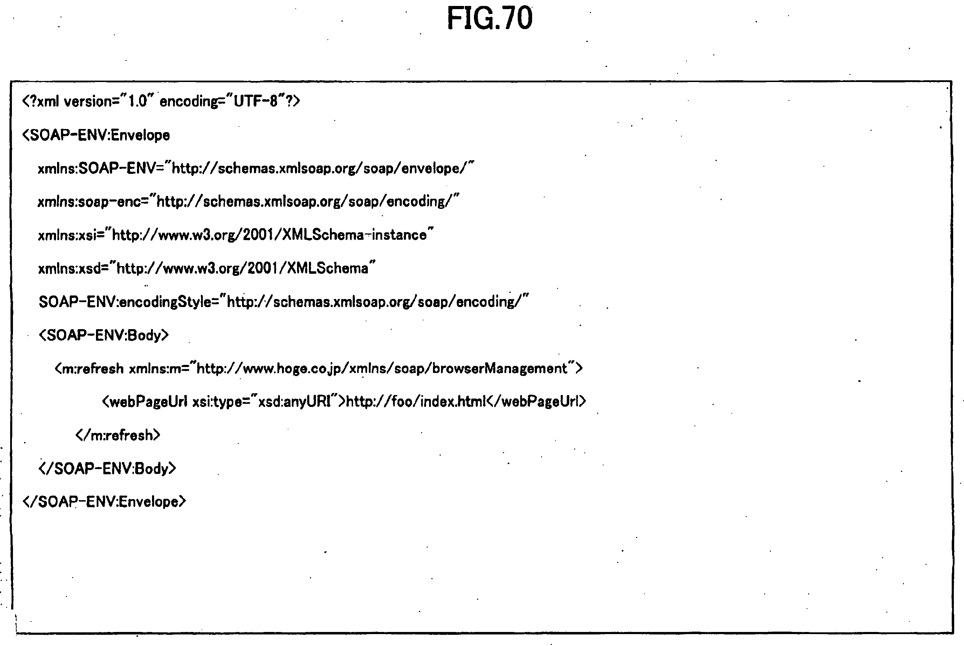

The copy process advance to step S2102. In the step S2102, the Web service client 205p sends the request of the screen update instruction to a browser control web service (browser controlling WS (Web Service) 703-3p of the image forming apparatus 7p. The browser controlling WS 703-3p is a Web service for controlling the browser control function part 705p provided by the Web service server 703p. For the request of the screen update instruction in the step S2102, a request SOAP message as shown in FIG. 70 is used.

When the Web browser 702p of the image forming apparatus 7p receives the request of the screen update instruction, the process advances to step S2103. In the step S2103, the Web browser 702p of the image forming apparatus 7p sends a screen update instruction to the Web server 204p of the server 2p by using the GET method of the HTTP. The Web server 204p sends the screen update instruction to the screen flow controlling part 201p.

The screen flow controlling part 201p generates copy process running screen data by the HTML, and sends the copy process running screen data to the Web server 204p. The Web server 204p sends the copy process running screen data of the HTML to the Web browser 702p of the image forming apparatus 7p. The Web browser 702p displays the copy process running screen 303p corresponding to the copy process running screen data at the operation part 709p.

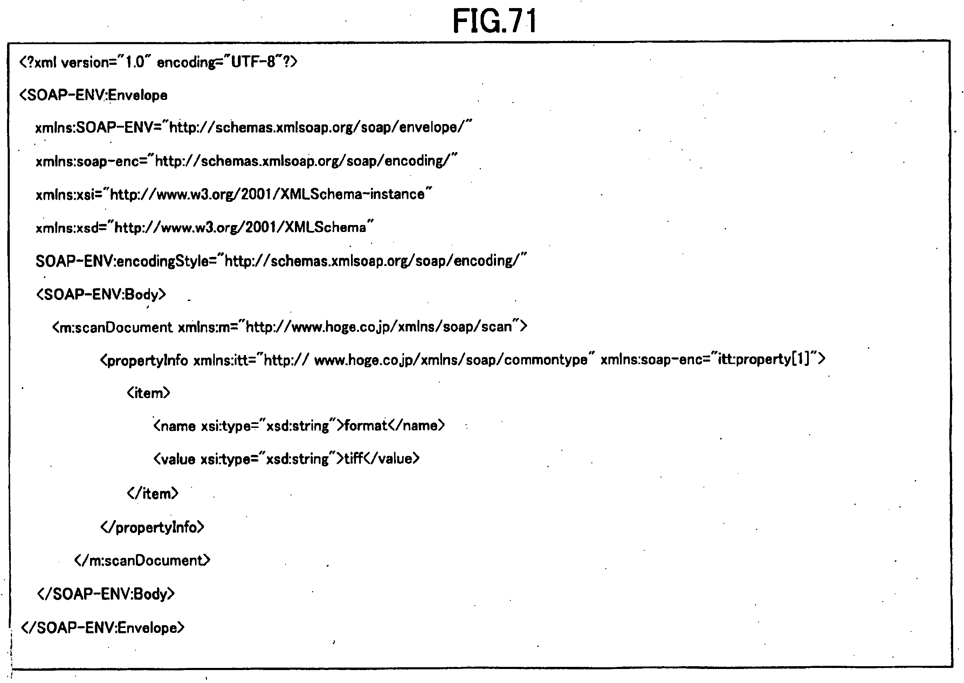

Moreover, the screen flow controlling part 201p of the server 2p instructs a scan start to the Web service client 205p. The process advances to step S2104. In the step S2104, the Web service client 205p instructs the scan start to a scan WS 703-1p of the image forming apparatus 7p. The scan WS 703-1p is a Web service for controlling the scan function part 707p provided by the Web service server 703p. In order to instruct the scan start in the step S2104, a request SOAP message as shown in FIG. 71 is used.

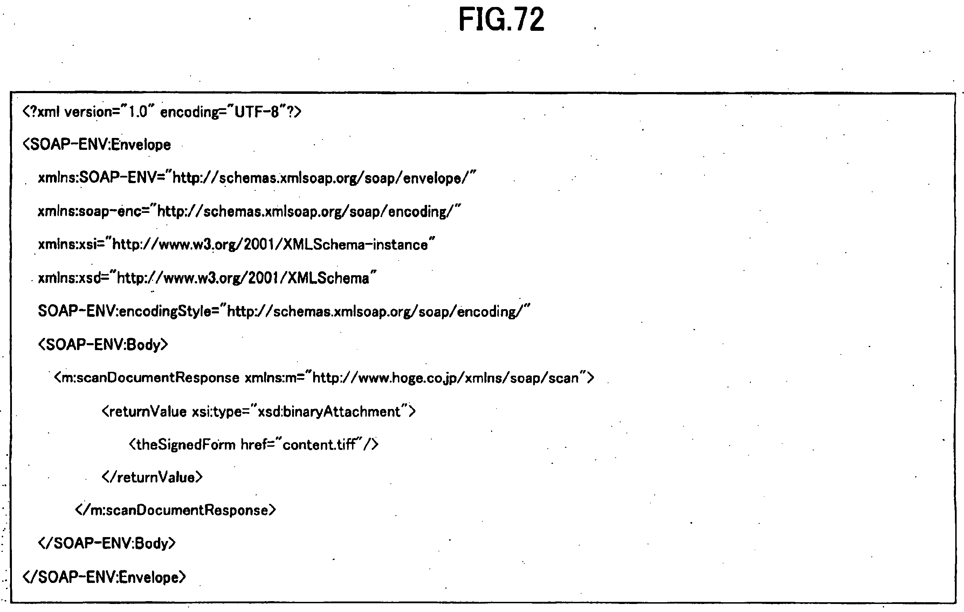

When the scan WS 703-1p receives the request of the scan start instruction, the scan WS 703-1p controls the scanner 711p by the scan function part 707p, and executes the scan. When the scan ends, the scan WS 703-1p sends an image (image data), which is scanned and digitized, to the Web service client 205p by a response SOAP message as shown in FIG. 72. The process advances to step S2105. In the step S2105, the Web service client 205p sends the image data received from the scan WS 703-1p to a Web service cooperative function part 207p. The image data are used in a cooperative operation between the Web service client 205p and the Web service cooperative function part 207p.

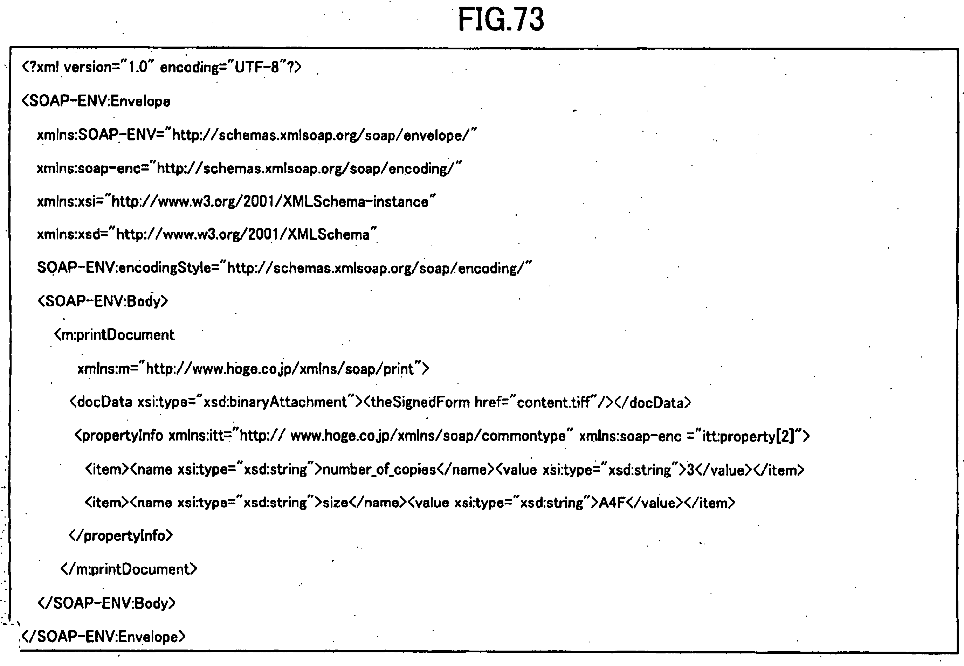

Subsequently, the screen flow controlling part 201p of the server 2p sends a print start instruction to the Web service client 205p. The process advances to step S2106. In the step S2106, the Web service client 205p sends the print start instruction to a print WS 703-2p of the image forming apparatus 7p. The print WS 703-2p is a Web service for controlling the print function part 706p provided by the Web service server 703p. For the print start instruction in the step S2106, a request SOAP message including image data as shown in FIG. 73 is used.

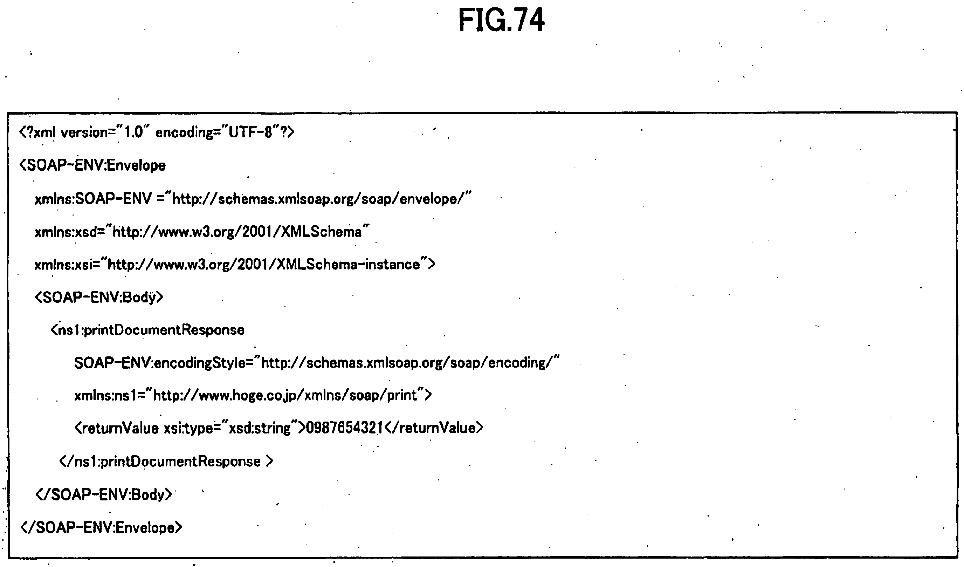

When the print WS 703-2p receives the print start instruction, the print WS 703-2p controls the plotter 710p by the print function part 706p, and executes a copy. When the copy ends, the print WS 703-2p informs a print end to the Web service client 205p by sending a response SOAP message as shown in FIG. 74.

In step S2107, similar to the step S2102, the Web service client 205p sends the request of the screen update instruction to the browser controlling WS 703-3p of the image forming apparatus 7p. When the Web browser 702p of the image forming apparatus 7p receives the request of the screen update instruction, the process advances to step S2108. In the step S2108, the Web browser 702p of the image forming apparatus 7p sends a screen update instruction to the Web server 204p of the server 2p by using the GET method of the HTTP. The Web server 204p sends the screen update instruction to the screen flow controlling part 201p.

The screen flow controlling part 201p generates copy end screen data by the HTML, and sends the copy end screen data to the Web server 204p. The Web server 204p sends the copy end screen data of the HTML to the Web browser 702p of the image forming apparatus 7p. The Web browser 702p displays the copy end screen 304p corresponding to the copy end screen data at the operation part 709p.

The image forming apparatus 7p used in the first variation in FIG. 69 can be a single function apparatus which is less expensive, but is required to include a Web service at least. The browser controlling WS 703-3p can accept a request from the Web service and a hard button mounted to the operation part 709p. When the request of the screen update instruction is received, for example, the Web browser 702p conducts the GET method of the HTTP to a URL which is indicated.

In the first variation in FIG. 69, when the process ends or an error occurs, the image forming apparatus 7p can send the request of the screen update instruction from the server 2p.

### - Second Variation -

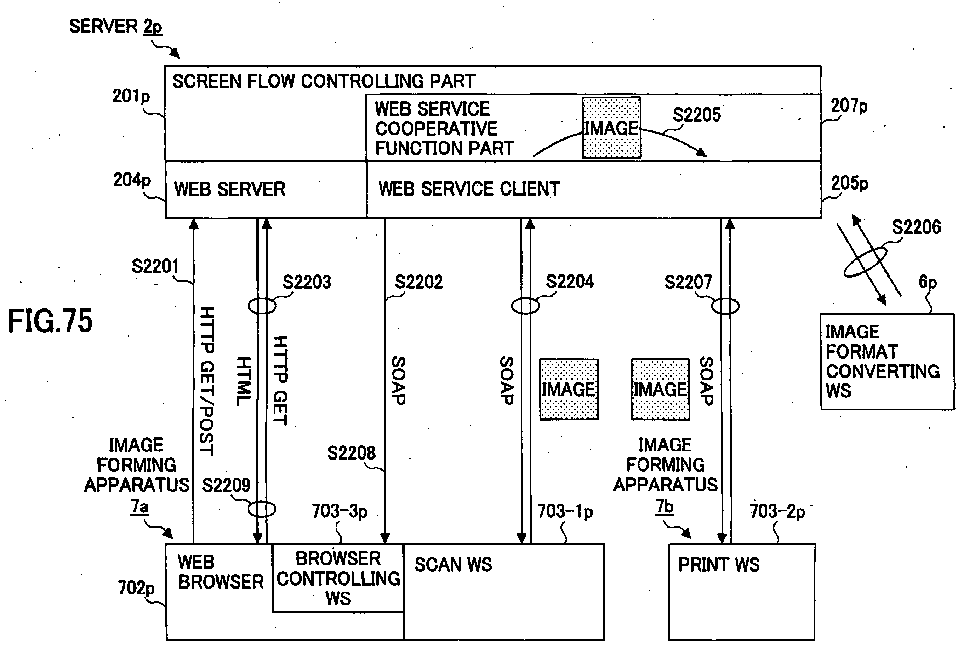

FIG. 75 is a diagram showing a second variation of the process of the system 9202 using Web services. In the image forming apparatuses 7a and 7b and the server 2p in FIG. 75, parts necessary to explain are shown and other parts will be omitted.

Steps S2201, S2202, S2204, and S2205 in FIG. 75 are the same as the steps S2101, S2102, S2103, S2104, and S2105 in FIG. 69, and explanations thereof will be omitted. In a case in that the scan WS 703-1p cannot acquire image data corresponding to the print WS 703-2p, the screen flow controlling part 201p of the server 2p instructs converting an image format to the Web service client 205p. The process advances to step S2206. In the step S2206, the Web service client 205p converts image data to a proper image format by using an image format converting WS 6p through the network 3p.

Subsequently, the screen flow controlling part 201p of the server 2p sends a print start instruction to the Web service client 205p. The process advances to step S2207. In the step S2207, the Web service client 205p sends the print start instruction to the print WS 703-2p of the image forming apparatus 7b different from the image forming apparatus 7a which executes the scan. For the print start instruction in the step S2207, the request SOAP message including image data as shown in FIG. 73 is used.

When the print WS 703-2p receives the print start instruction, the print WS 703-2p controls by the print function part 706p and executes a print. When the print ends, the print WS 703-2p informs the print end to the Web service client 205p by sending the response SOAP message shown in FIG. 74.

Steps S2208 and S2209 in FIG. 75 are the same as the steps S2107 and S2108 in FIG. 69, and explanation thereof will be omitted. In the second variation, even if the image forming apparatus 7a is a scanner as the single function apparatus, by using a printer of another image forming apparatus 7b, the image forming apparatus 7a can obtain the same effect as a copier. In the second variation in FIG. 75, if a color scanner and a cooler printer are connected to the network 3p, a color copier can be realized. Moreover, the second variation in FIG. 75 can be applied not only to an office but also to the cooperative operation by the image forming apparatuses 7a and 7b remotely connecting to each other through the network 3p, and to the function enhancement.

### - Third Variation -

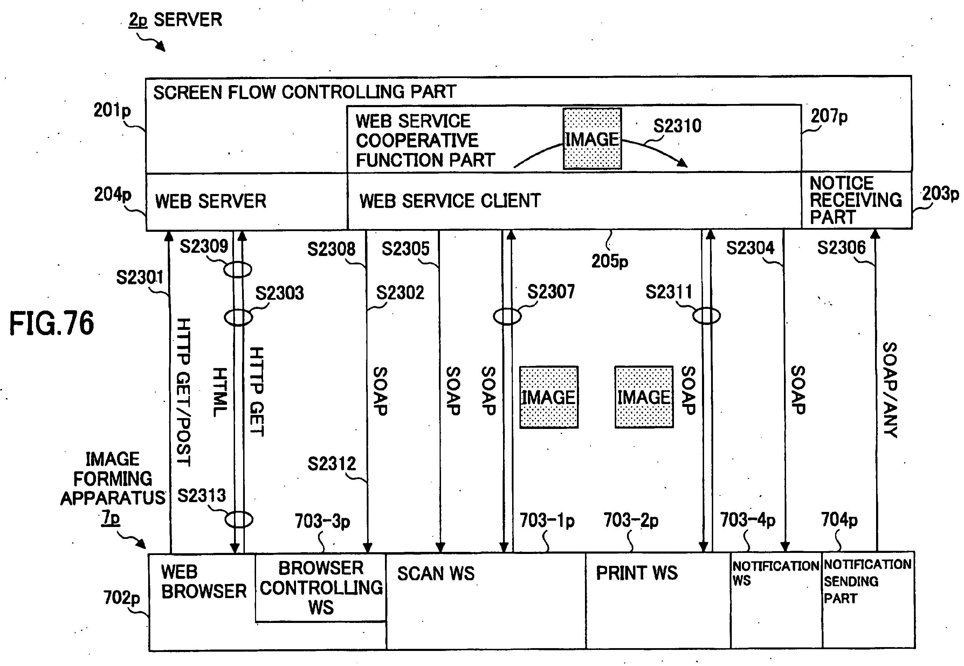

FIG. 76 is a diagram for explaining a third variation of the process of the system 9202 using Web services. In the image forming apparatus 7p and the server 2p in FIG. 76, parts to explain are shown but other parts will be omitted.

Steps S2301, S2302, and S2303 in FIG. 76 are the same as the steps S2101, S2102, and S2103 in FIG. 69, and explanations thereof will be omitted. The screen flow controlling part 201p of the server 2p sends a scan start instruction to the Web service client 205p. The process advances to step S2304. In the step S2304, the Web service client 205p sends an event registration instruction to a notification WS 703-4p of the image forming apparatus 7p. The notification WS 703-4p is a Web service for controlling the notification function part 708p provided by the Web service server 703p. For the event registration instruction in the step S2304, a request SOAP message is used.

The process advances to step S2305. In the step S2305, the Web service client 205p sends a scan start instruction to the scan WS 703-1p of the image forming apparatus 7p. The scan WS 703-1p controls the scanner 711p by the scan function part 707p, and executes a scan. An event indicating a scan end is registered to the notification WS 703-4p, and a scan end is informed to the notification sending part 704p.

The process advances to step S2305. In the step S2305, the notification sending part 704p informs the scan end to the notification receiving part 203p of the server 2p. In order to inform the scan end in the step S2306, a response SOAP message may be used or another protocol may be used.

When the scan end is informed, the process advances to step S2307. In the step S2307, the Web service client 205p sends a transfer request of image data which is scanned, to the scan WS 703-1p of the image forming apparatus 7p. When the scan WS 703-1p receives the transfer request of the image data which is scanned, the scan WS 703-1p transfers the image data to the Web service client 205p by sending the response SOAP message shown in FIG. 72.

In step S2308, similar to the step S2302, the Web service client 205p sends a request of a screen update instruction to the browser controlling WS 703-3p of the image forming apparatus 7p. When the request of the screen update instruction is received, the process advances to step S2309. In the step S2309, the Web browser 702p of the image forming apparatus 7p sends a screen update instruction to the Web server 204p of the server 2p by using the GET method of the HTTP. The Web server 204p sends the screen update instruction to the screen flow controlling part 201p.

The screen flow controlling part 201p generates scan running screen data by the HTML, and sends the scan running screen data to the Web server 204p. The Web server 204p sends the scan running screen data by the HTML to the Web browser 702p of the image forming apparatus 7p. The Web browser 702p displays a scan running screen corresponding to the scan running screen data at the operation part 709p.

The process advances to step S2310. In the step S2310, the Web service client 205p sends the scan running screen data received in the step S2307 to the Web service cooperative function part 207p. The scan running screen data are used in a cooperative operation between the Web service client 205p and the Web service cooperative function part 207p.

Subsequently, the screen flow controlling part 201p of the server 2p sends a print start instruction to the Web service client 205p. The process advances to step S2311. In the step S2311, the Web service client 205p sends a print start instruction to the print WS 703-2p of the image forming apparatus 7p. For the print start instruction in the step S2311, the request SOAP message including image data shown in FIG. 73 is used.

When the print start instruction is received, the print WS 703-2p controls the plotter 710p by the print function part 706p, and executes a print. When the pint ends, the print WS 703-2p informs a print end to the Web service client 205p by sending the response SOAP message shown in FIG. 74.

In step S2312, similar to the step S2302, the Web service client 205p sends a request of a screen update instruction to the browser controlling WS 703-3p of the image forming apparatus 7p. When the request of the screen update instruction is received, the process advances to step S2313. In the step S2313, the Web browser 702p of the image forming apparatus 7p sends the screen update instruction to the Web server 204p of the server 2p by using the GET method of the HTTP. The Web server 204p sends the screen update instruction to the screen flow controlling part 201p.

The screen flow controlling part 201p generates copy end screen data by the HTML, and sends the copy end screen data to.the Web server 204p. The Web server 204p sends the copy end screen data by the HTML to the web browser 702p of the image forming apparatus 7p. The Web browser 702p displays the copy end screen 304p corresponding to the copy end screen data at the operation part 709p.

In the third variation, since the steps S2104 and S2106 in FIG. 69 require a certain amount of time, an event indicates a different SOAP message for each of a request and a response. Thus, it is possible to realize a screen update which changes a screen displayed at the operation part 709p based on a process state.

In FIG. 76, one example case, in which the scan running screen is displayed in a process corresponding to the step S2104 in FIG. 69, is described. Similarly, it is possible to display a print running screen during a process corresponding to the step S2106. In a case of a multifunction printer, it is possible to realize the screen update by an event from another application.

### - Fourth Variation -

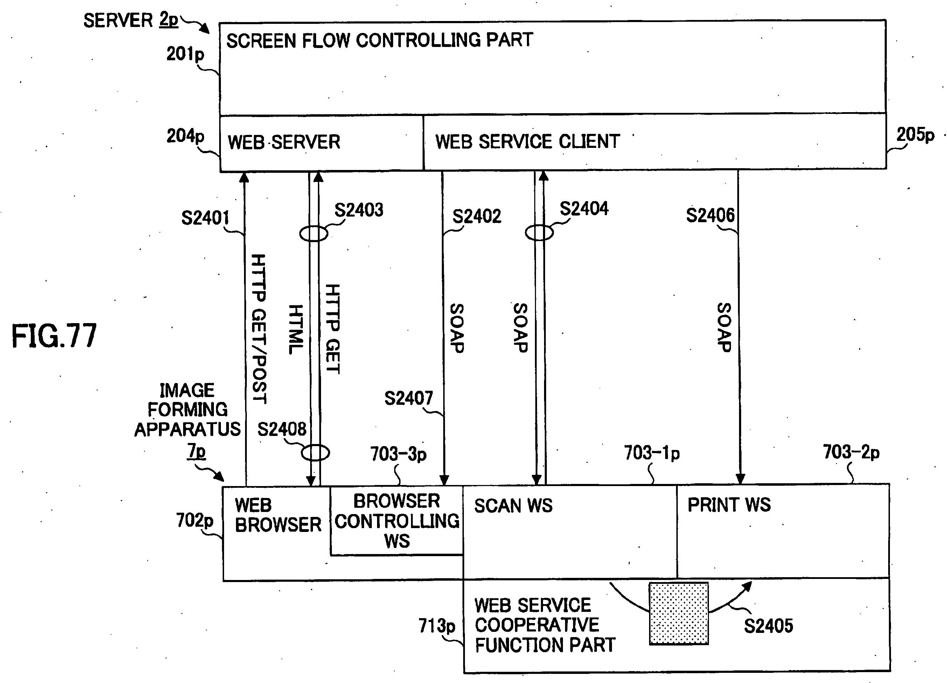

FIG. 77 is a diagram for explaining a fourth variation of the process of the system 9202 using Web services. In the image forming apparatus 7p and the server 2p in the fourth variation in FIG. 77, parts necessary to explain are shown but other parts will be omitted.

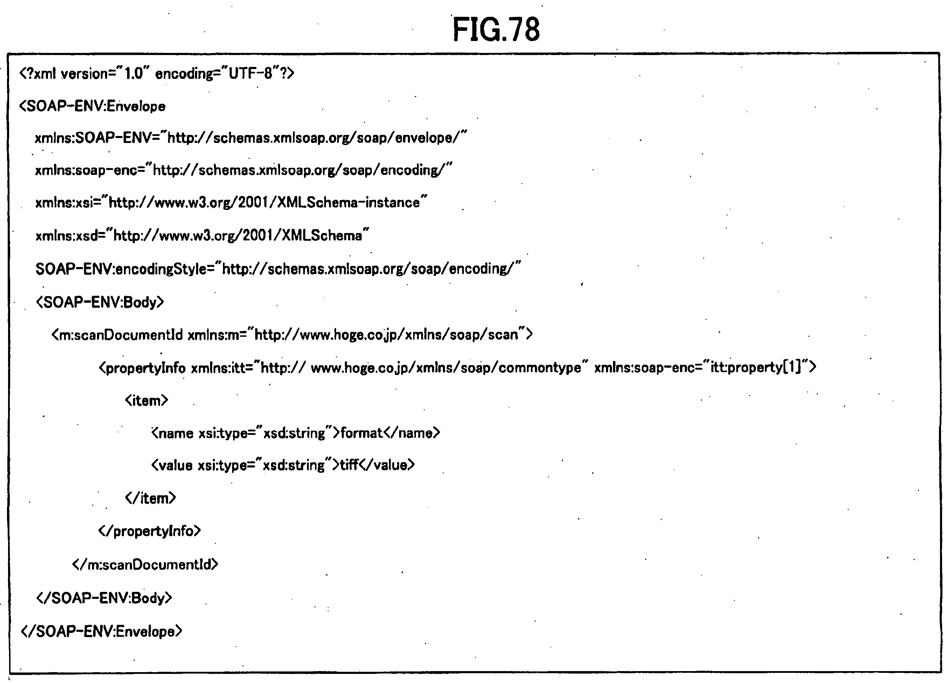

Steps S2401, S2402, and S2403 in FIG. 77 are the same as the steps S2101, S2102, and S2103 in FIG. 69, and explanations thereof will be omitted. The screen flow controlling part 201p of the server 2p sends a scan start instruction to the Web service client 205p. The process advances to step S2404. In the step S2404, the Web service client 205p sends the scan start instruction to the scan WS 703-1p of the image forming apparatus 7p. For the scan.start instruction in the step S2404, a request SOAP message as shown in FIG. 78 is used.

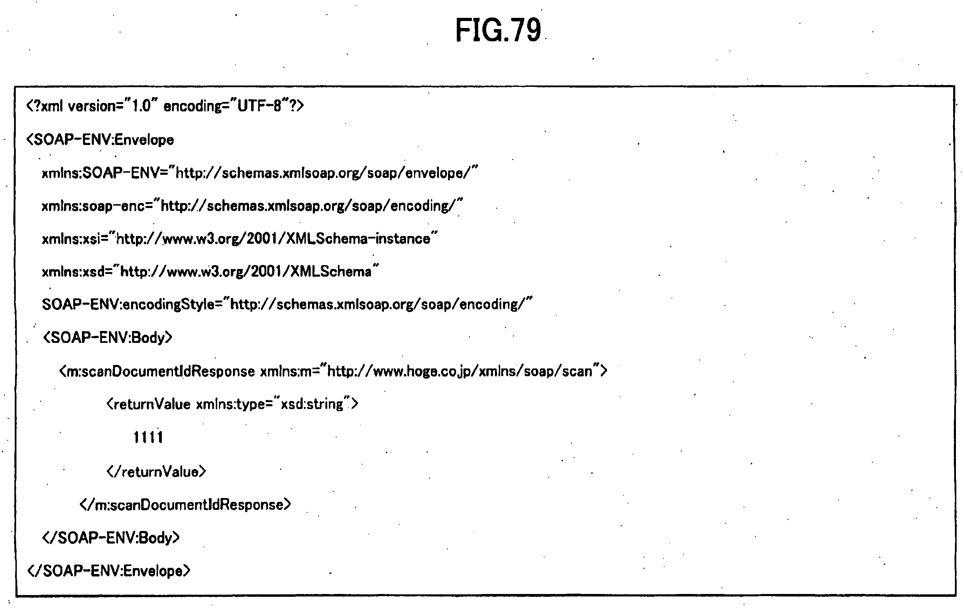

When the scan start instruction is received, the scan WS 703-1p controls the scanner 711p by the scan function part 707p, and executes a scan. When the scan ends, for example, the scan WS 703-1p stores image data in a local memory. After that, the scan WS 703-1p sends a document ID of the image data stored in the local memory to the Web service client 205p by sending a response SOAP message as shown in FIG. 79. The process advances to step S2405. In the step S2405, by a Web service cooperative function part 113p, the image data stored in the local memory are used in the cooperative operation between the scan WS 703-1p and the print WS 703-2p.

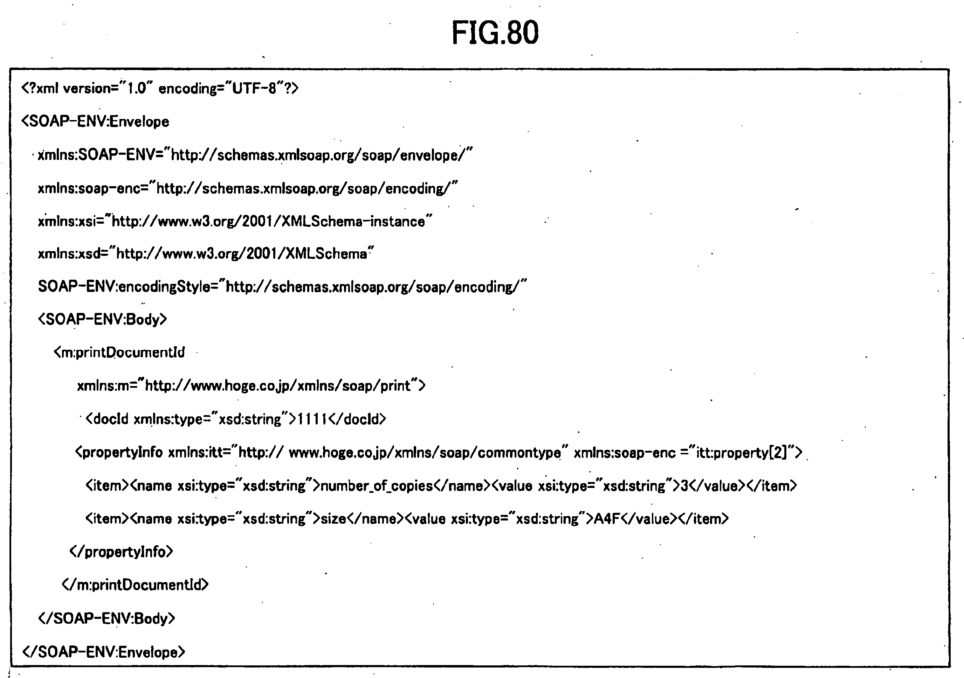

Subsequently, the screen flow controlling part 201p of the server 2p sends a print start instruction to the Web service client 205p. The process advances to step S2406. In the step S2406, the Web service client 205p sends the print start instruction to the print WS 703-2p of the image forming apparatus 7p. For the print start instruction sent in the step S2406, a request SOAP message including a document ID as shown in FIG. 80 is used.

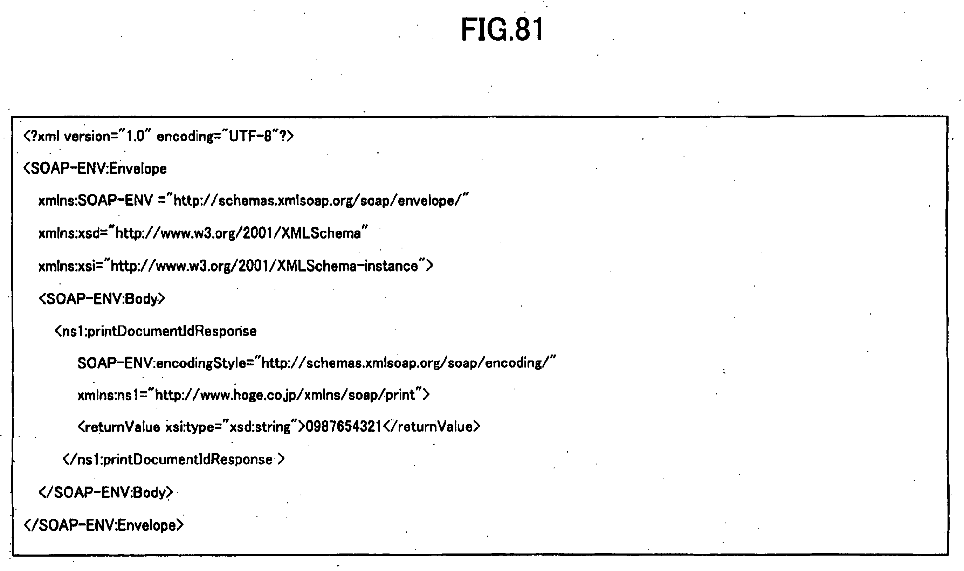

When the print start instruction is received, the print WS 703-2p reads out image data corresponding to the document ID from various image data stored in the local memory, controls the plotter 710p by the print function part 706p, and executes a print. When the print ends, the print WS 703-2p informs a print end to the Web service client 205 by sending a response SOAP message as shown in FIG. 81.

In step S2407, similar to the step S2402, the Web service client 205p sends a request of a screen update instruction to the browser controlling WS 703-3p of the image forming apparatus 7p. When the request of the screen update instruction request is received, the process advances to step S2408. In the step S2408, the Web browser 702p of the image forming apparatus 7p sends the screen update instruction by using the GET method of the HTTP to the Web server 204p of the server 2p. The Web server 204p sends the screen update instruction to the screen flow controlling part 201p.

The screen flow controlling part 201p generates copy end screen data by the HTML, and sends the copy end screen data to the Web server 204p. The Web server 204p sends the copy end screen data of the HTML to the Web browser 702p of the image forming apparatus 7p. The Web browser 702p displays the copy end screen 304p corresponding to the copy end screen data at the operation part 709p.

In the fourth variation in FIG. 77, the document ID is sent in the step S2404 and the step S2406, instead of sending the image data. Therefore, it is possible to reduce workload of the network 3p and improve response performance.

### - Fifth Variation -

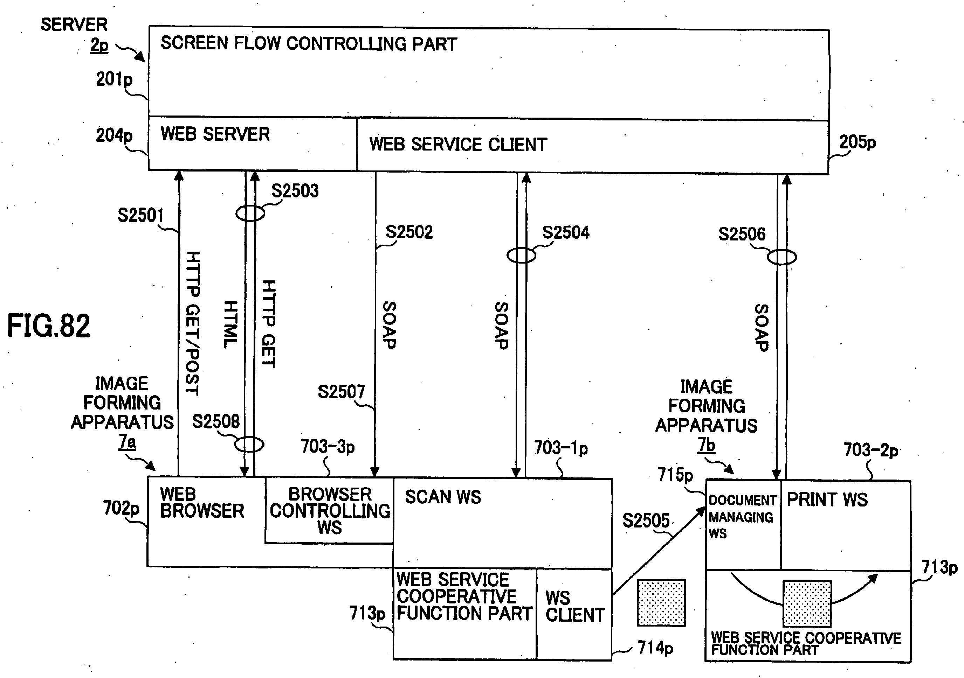

FIG. 82 is a diagram for explaining a fifth variation of the process in the system 9202 using Web services. In the image forming apparatuses 7a and 7b and the server 2p in FIG. 82, parts necessary to explain are shown but other parts will be omitted.

Steps S2501, S2502, and S2503 are similar to the steps S2101, S2102, and S2103, and explanations thereof will be omitted. The screen flow controlling part 201p of server 2p sends a scan start instruction to the Web service client 205p. The process advances to step S2504. In the step S2504, the Web service client 205p sends a scan start instruction to the scan WS 703-1p of the image forming apparatus 7a. For the scan start instruction in the step S2504, the request SOAP message in FIG. 78 is used.

When the scan start instruction is received, the scan WS 703-1p controls the scanner 711p by the scan function part 707p, and executes a scan. When the scan ends, the scan WS 703-1p of the image forming apparatus 7a sends the document ID of the image data which is scanned by using the response SOAP message shown in FIG. 79, to the Web service client 205p.

The process advances to step S2505. In the step S2505, the WS client 114p of the image forming apparatus 7a sends the image data to a document managing WS 115p of the image forming apparatus 7b. The document managing WS 115p is a Web service for controlling a document management function part (not shown) provided by the Web service server 103b of the image forming apparatus 7b.

For example, the document managing WS 115p of the image forming apparatus 7b stores the image data received from the server 2p. By the Web service cooperative function part 113p, the image data stored in the local memory are used in the cooperative operation between the document managing WS 115p and the print WS 703-2p.

In a parallel process to the step S2505, the screen flow controlling 201p of the server 2p sends a print start instruction to the Web service client 205p. The process advances to step S2506. In the step S2506, the Web service client 205p sends a print start instruction to the print WS 703-2p of the image forming apparatus 7b. For the print start instruction sent in the step S2506, the request SOAP message including the document ID as shown in FIG. 79 is used.

When the print start instruction is received, the print WS 703-2p reads out image data corresponding to the document ID from various image data stored in the local memory, controls the plotter 710p by the print function part 706p, and executes a print. The print WS 703-2p waits for a process of the step S2505, and the print is executed when preconditions are received. That is, the Web service cooperative function part 113p of the image forming apparatus 7b conducts a waiting process for the step S2505 and the step S2506. When the print ends, the print WS 703-2p informs a print end to the Web service client 205p by sending a response SOAP message shown in FIG. 81. In step S2507 and step S2508, similar to the steps S2502 and S2503, the copy end screen 304p is displayed at the operation part 709p.

In the fifth variation, the document ID is sent in the step S2504 and the step S2506, instead of sending the image data. Therefore, it is possible to reduce workload of the network 3p, and to improve the response performance.

### - Sixth Variation -

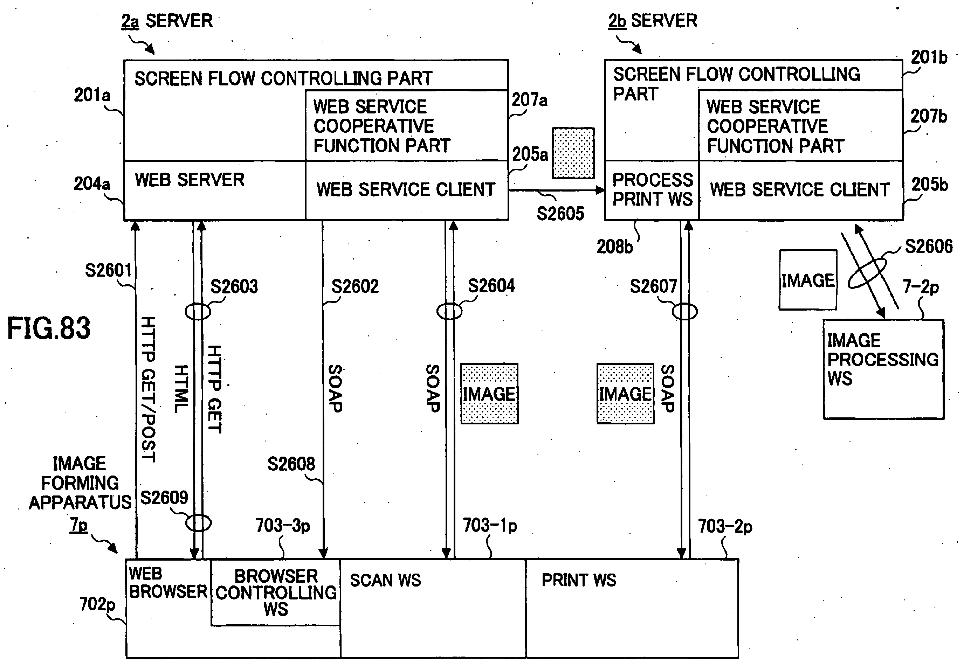

FIG. 83 is a diagram for explaining a sixth variation of the system 9202 using Web services. In the image forming apparatus 7a and servers 2a and 2b, parts necessary to explain are shown, but other parts will be omitted. Configurations of the servers 2a and 2b are basically similar to the configuration of the server 2p, and detailed explanations thereof will be omitted. Screen flow controlling parts 201a and 201b correspond to the screen flow controlling part 201p, Web service clients 205a and 205b correspond to the Web service client 205p, and Web service cooperative function parts 207a and 207b correspond to the Web service cooperative function part 207p.

Steps S2601, S2602, S2603, and S2604 are the same as the steps S2101, S2102, S2103, and S2104, and explanations thereof will be omitted. The Web service client 205a sends the image data received in the step S2604, to a process print WS 208b of the server apparatus 2b. The process print WS 208b is a Web service for controlling a process print function part (not shown) provided by the Web service server. In addition, the servers 2a and 2b cooperate with each other with respect to the image data and processes by the Web service cooperative function parts 207a and 207b.

The screen flow controlling part 201b of the server 2b instructs an image process to the Web service client 205b. The process advances to step S2606. In the step S2606, the Web service client 205b conducts a process to the image data by using an image processing WS 7-2p through the network 3p.

Subsequently, the screen flow controlling part 201b of the server 2b sends a print start instruction to the Web service client 205b. The process advances to step S2607. In the step S2607, the Web service client 205b of the server 2b sends the print start instruction to the print WS 703-2p of the image forming apparatus 7a. For the print start instruction sent in the step S2607, the.request SOAP message including the image data as shown in FIG. 73 is used.

When the print start instruction is received, the print WS 703-2p controls the plotter 710p by the print function part 706p, and executes a print. When the print ends, the print WS 703-2p informs a print end to the Web service client 205b by using the response SOAP message shown in FIG. 74. Steps S2608 and S2609 are the same as the steps S2107 and S2108, and explanations thereof will be omitted.

In the sixth variation in FIG. 83, it is possible to build up a new application by utilizing an existing application. For example, in a case of additionally providing a barcode when a document is printed, it is possible to select and use a preferable application through the network 3p.

### - Seventh Variation -

In the first variation through the sixth variation described above, the image forming apparatus 7p is illustrated as one example of the information processing apparatus 1-2p. In the following variations, a sound processing apparatus will be described as another example of the information processing apparatus 1-2p.

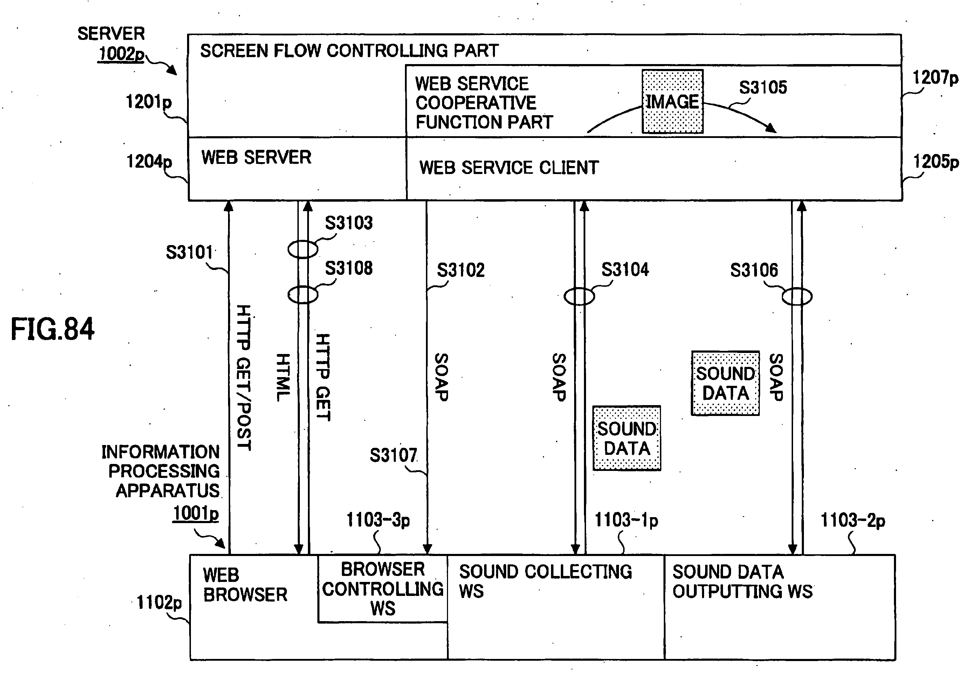

FIG. 84 is a diagram for explaining a first variation of the process in the system 9200 using Web services. In a sound processing apparatus 1001p including the configuration of the information processing apparatus 1-2p and a server 1002p including the configuration of the server 2p, parts necessary to explain are shown and other parts will be omitted.

When a user instructs executing a sound process from an operation part by pressing and "EXECUTION" button of the sound process screen or a like, the process advances to step S3101. In the step S3101, the Web browser 1102p sends a sound process execution instruction to the Web server 1204p of the server 1002p by using a GET method or a POST method of an HTTP (Hyper Text Transfer Protocol), in order to instruct executing a sound process. The Web server 1204p sends the sound execution instruction to the screen flow controlling part 1201p. The screen flow controlling part 1201p sends a request of a screen update instruction to the Web service client 1205p.

The sound process advance to step S3102. In the step S3102, the Web service client 1205p sends the request of the screen update instruction to a browser control web service (browser controlling WS (Web Service) 1103-3p of the sound processing apparatus 1001p. The browser controlling WS 1103-3p is a Web service for controlling the browser control function part 705p provided by the Web service server 703p. For the request of the screen update instruction in the step S3102, a request SOAP message as shown in FIG. 70 is used.

When the Web browser 1102p of the sound processing apparatus 1001p receives the request of the screen update instruction, the process advances to step S3103. In the step S3103, the Web browser 1102p of the sound processing apparatus 1001p sends a screen update instruction to the Web server 1204p of the server 1002p by using the GET method of the HTTP. The Web server 1204p sends the screen update instruction to the screen flow controlling part 1201p.

The screen flow controlling part 1201p generate sound process running screen data by the HTML, and sends the sound process running screen data to the Web server 1204p. The Web server 1204p sends the sound process running screen data of the HTML to the Web browser 1102p of the sound processing apparatus 1001p. The Web browser 1102p displays a sound process running screen corresponding to the sound process running screen data at the operation part.

Moreover, the screen flow controlling part 1201p of the server 1002p instructs a sound collection start to the Web service client 1205p. The process advances to step S3104. In the step S3104, the Web service client 1205p.instructs the sound collection start to a sound collecting WS 1103-1p of the sound processing apparatus 1001p. The sound collecting WS 1103-1p is a Web service for controlling a sound collecting function part provided by the Web service server 703p. In order to instruct the sound collection start in the step S3104, a request SOAP message as shown in FIG. 71 is used.

When the sound collecting WS 1103-1p receives the request of the sound collection start instruction, the sound collecting WS 1103-1p controls a sound collecting device by the sound collecting function part, and executes a sound collection. When the sound collection ends, the sound collecting WS 1103-1p sends sound data in which sound is collected and digitized, to the Web service client 1205p by a response SOAP message as shown in FIG. 72. The process advances to step S3105. In the step S3105, the Web service client 1205p sends the sound data received from the sound collecting WS 1103-1p to a Web service cooperative function part 1207p. The sound data are used in a cooperative operation between the Web service client 1205p and the Web service cooperative function part 1207p.

Subsequently, the screen flow controlling part 1201p of the server 1002p sends a sound data output start instruction to the Web service client 1205p. The process advances to step S3106. In the step S3106, the Web service client 1205p sends the sound data output start instruction to a sound data outputting WS 1103-2p of the sound processing apparatus 1001p. The sound data outputting WS 1103-2p is a Web service for controlling the sound data function part provided by the Web service server 703p. For the sound data output start instruction in the step S3106, a request SOAP message including sound data as shown in FIG. 73 is used.

When the sound data outputting WS 1103-2p receives the sound data output start instruction, the sound data outputting WS 1103-2p controls a data outputting device by the sound data function part, and executes a sound data output. When the sound process ends, the sound data outputting WS 1103-2p informs a sound output end to the Web service client 1205p by sending a response SOAP message as shown in FIG. 74 for the sound process.

In step S3107, similar to the step S3102, the Web service client 1205p sends the request of the screen update instruction to the browser controlling WS 1103-3p of the sound processing apparatus 1001p. When the Web browser 1102p of the sound processing apparatus 1001p receives the request of the screen update instruction, the process advances to step S3108. In the step S3108, the Web browser 1102p of the sound processing apparatus 1001p sends a screen update instruction to the Web server 1204p of the server 1002p by using the GET method of the HTTP. The Web server 1204p sends the screen update instruction to the screen flow controlling part 1201p.

The screen flow controlling part 1201p generates sound process end screen data by the HTML, and sends the sound process end screen data to the Web server 1204p. The Web server 1204p sends the sound process end screen data of the HTML to the Web browser 1102p of the sound processing apparatus 1001p. The Web browser 1102p displays the sound process end screen corresponding to the sound process end screen data at the operation part.

The sound processing apparatus 1001p used in the seventh variation shown in FIG. 84 can be a single function apparatus which is less expensive, but is required to include a Web service at least. The browser controlling WS 1103-3p can accept a request from the Web service and a hard button mounted to the operation part. When the request of the screen update instruction is received, for example, the Web browser 1102p conducts the GET method of the HTTP to a URL which is indicated.

In the seventh variation shown in FIG. 84, when the process ends or an error occurs, the sound processing apparatus 1001p can send the request of the screen update instruction from the server 1002p.

### - Eighth Variation -

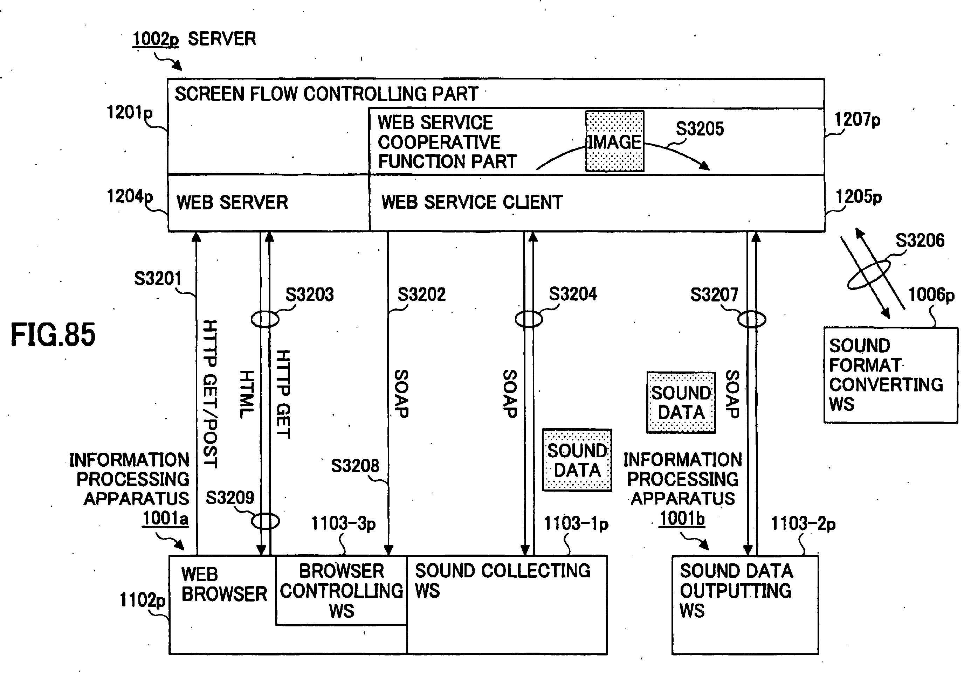

FIG. 85 is a diagram showing an eighth variation of the process of the system 9200 using Web services. In a sound processing apparatuses 1001a and 1001b including the configuration of the information processing apparatus 1-2p and the server 1002p including the configuration of the server 2p, parts necessary to explain are shown and other parts will be omitted.

Steps S3201, S3202, S3204, and S3205 in FIG. 85 are the same as the steps S3101, S3102, S3103, S3104, and S3105 in FIG. 84, and explanations thereof will be omitted. In a case in that the sound collecting WS 1103-1p cannot acquire sound data corresponding to the sound data outputting WS 1103-2p, the screen flow controlling part 1201p of the server 1002p instructs converting a sound data format to the Web service client 1205p. The process advances to step S3206. In the step S3206, the Web service client 1205p converts sound data to a proper sound data format by using a sound data format converting WS 1006p through the network 3p.

Subsequently, the screen flow controlling part 1201p of the server 1002p sends a sound data output start instruction to the Web service client 1205p. The process advances to step S3207. In the step S3207, the Web service client 1205p sends the sound data output start instruction to the sound data outputting WS 1103-2p of the sound processing apparatus 1001b different from the sound processing apparatus 1001a which executes the sound data output. For the sound data output start instruction in the step S3207, the request SOAP message including sound data as shown in FIG. 73, which corresponds to the sound process, is used.

When the sound data outputting WS 1103-2p receives the sound data output start instruction, the sound data outputting WS 1103-2p controls by the sound data function part and executes the sound data output. When the sound output ends, the sound data outputting WS 1103-2p informs the.sound output end to the Web service client 1205p by sending the response SOAP message as shown in FIG. 74, which corresponds to the sound process.

Steps S3208 and S3209 in FIG. 85 are the same as the steps S3107 and S3108 in FIG. 84, and explanation thereof will be omitted. In the eighth variation, even if the sound processing apparatus 1001a is a sound collecting device as the single function apparatus, by using a function of another sound processing apparatus 1001b, the sound processing apparatus 1001a can be a multi-functional apparatus.. The eighth variation shown in FIG. 85 can be applied not only to an office but also to the cooperative operation by the sound processing apparatuses 1001a and 1001b remotely connecting to each other through the network 3p, and to the function enhancement.

### - Ninth Variation -

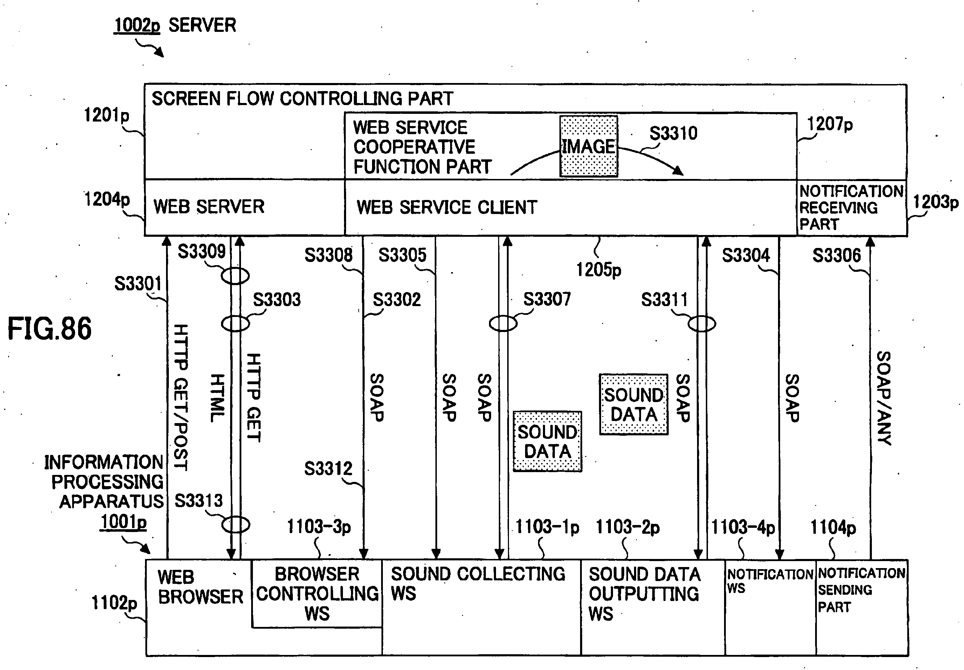

FIG. 86 is a diagram for explaining a ninth variation of the process of the system 9200 using Web services. In the sound processing apparatus 1001p and the server 1002p in FIG. 86, parts to explain are shown but other parts will be omitted.

Steps S3301, S3302, and S3303 in FIG. 86 are the same as the steps S3101, S3102, and S3103 in FIG. 84, and explanations thereof will be omitted. The screen flow controlling part 1201p of the server 1002p sends a sound collection start instruction to the Web service client 1205p. The process advances to step S3304. In the step S3304, the Web service client 1205p sends an event registration instruction to a notification WS 1103-4p of the sound processing apparatus 1001p. The notification WS 1103-4p is a Web service for controlling the notification function part 708p provided by the Web service server 703p. For the event registration instruction in the step S3304, a request SOAP message is used.

The process advances to step S3305. In the step S3305, the Web service client 1205p sends a sound collection start instruction to the sound collecting WS 1103-1p of the sound processing apparatus 1001p. The sound collecting WS 1103-1p controls the sound collecting device by the sound collecting function part, and executes the sound collection. An event indicating a sound collection end is registered to the notification WS 1103-4p, and a sound collection end is informed to a notification sending part 1104p.

The process advances to step S3305. In the step S3305, the notification sending part 1104p informs the sound collection end to a notification receiving part 1203p the server 1002p. In order to inform the sound collection end in the step S3306, a response SOAP message may be used or another protocol may be used.

When the sound collection end is informed, the process advances to step S3307. In the step S3307, the Web service client 1205p sends a transfer request of sound data which is collected, to the sound collecting WS 1103-1p of the sound processing apparatus 1001p. When the sound collecting WS 1103-1p receives the transfer request of the sound data which is collected, the sound collecting WS 1103-1p transfers the sound data to the Web service client 1205p by sending the response SOAP message as shown in FIG. 72 which corresponds to the sound process.

In step S3308, similar to the step S3302, the Web service client 1205p sends a request of a screen update instruction to the browser controlling WS 1103-3p of the sound processing apparatus 1001p. When the request of the screen update instruction is received, the process advances to step S3309. In the step S3309, the Web browser 1102p of the sound processing apparatus 1001p sends a screen update instruction to the Web server 1204p of the server 1002p by using the GET method of the HTTP. The Web server 1204p sends the screen update instruction to the screen flow controlling part 1201p.

The screen flow controlling part 1201p generates sound collection running screen data by the HTML, and sends the sound collection running screen data to the Web server 1204p. The Web server 1204p sends the sound collection running screen data by the HTML to the Web browser 1102p of the sound processing apparatus 1001p. The Web browser 1102p displays a sound collection running screen corresponding to the sound collection running screen data at the operation part.

The process advances to step S3310. In the step S3310, the Web service client 1205p sends the sound collection running screen data received in the step S3307 to the Web service cooperative function part 1207p. The sound collection running screen data are used in a cooperative operation between the Web service client 1205p and the Web service cooperative function part 1207p.

Subsequently, the screen flow controlling part 1201p of the server 1002p sends a sound data output start instruction to the Web service client 1205p. The process advances to step S3311. In the step S3311, the Web service client 1205p sends a sound data output start instruction to the sound data outputting WS 1103-2p of the sound processing apparatus 1001p. For the sound data output start instruction in the step S3311, the request SOAP message including sound data shown in FIG. 73, which corresponds to the sound process, is used.

When the sound data output start instruction is received, the sound data outputting WS 1103-2p controls the data outputting device by the sound data function part, and executes a sound data output. When the sound data output ends, the sound data outputting WS 1103-2p informs a sound output end to the Web service client 1205p by sending the response SOAP message shown in FIG. 74 which corresponds to the sound process.

In step S3312, similar to the step S3302, the Web service client 1205p sends a request of a screen update instruction to the browser controlling WS 1103-3p of the sound processing apparatus 1001p. When the request of the screen update instruction is received, the process advances to step S3313. In the step S3313, the Web browser 1102p of the sound processing apparatus 1001p sends the screen update instruction to the Web server 1204p of the server 1002p by using the GET method of the HTTP. The Web server 1204p sends the screen update instruction to the screen flow controlling part 1201p.

The screen flow controlling part 1201p generates sound process end screen data by the HTML, and sends the sound process end screen data to the Web server 1204p. The Web server 1204p sends the sound process end screen data by the HTML to the Web browser 1102p of the sound processing apparatus 1001p. The Web browser 1102p displays the sound process end screen corresponding to the sound process end screen data at the operation part.

In the ninth variation shown in FIG. 86, since the steps S3104 and S3106 in FIG. 84 require a certain amount of time, an event indicates a different SOAP message for each of a request and a response. Thus, it is possible to realize a screen update which changes a screen displayed at the operation part based on a process state.

In FIG. 86, one example case, in which the sound collection running screen is displayed in a process corresponding to the step S3104 in FIG. 84, is described. Similarly, it is possible to display a sound data output running screen during a process corresponding to the step S3106. In a case of a multi-functional sound processing apparatus, it is possible to realize the screen update by an event from another application.

### - Tenth Variation -

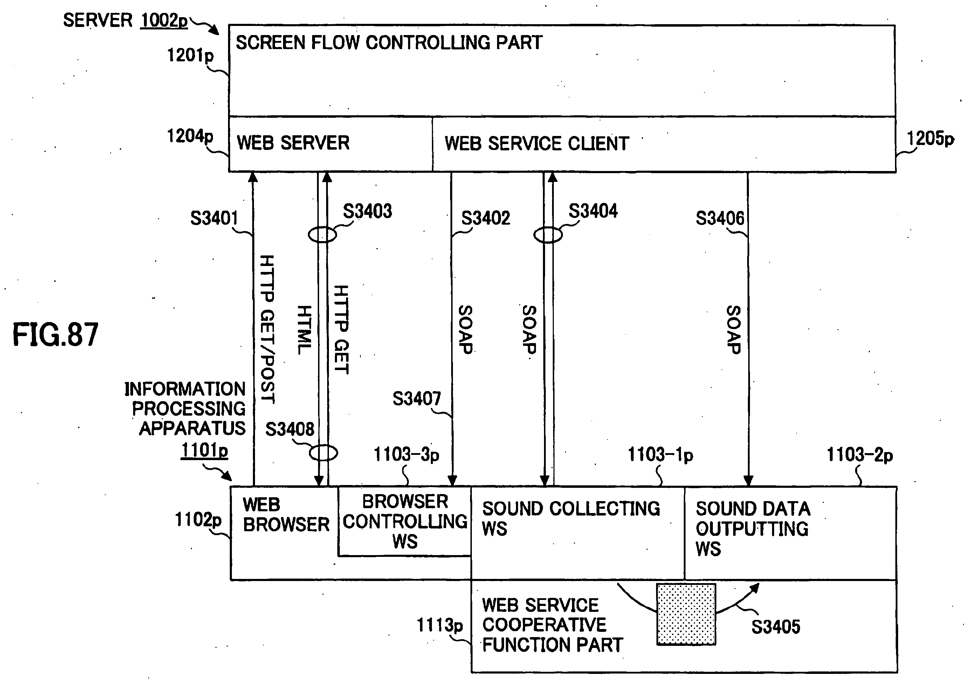

FIG. 87 is a diagram for explaining a tenth variation of the process of the system 9200 using Web services. In the tenth variation of the process of the system 9200 using Web services, in a sound processing apparatus 1001p including the configuration of the information processing apparatus 1-2p and a server 1002p including the configuration of the server 2p, parts necessary to explain are shown but other parts will be omitted.

Steps S3401, S3402, and S3403 in FIG. 87 are the same as the steps S3101, S3102, and S3103 in FIG. 84, and explanations thereof will be omitted. The screen flow controlling part 1201p of the server 1002p sends a sound collection start instruction to the Web service client 1205p. The process advances to step S3404. In the step S3404, the Web service client 1205p sends the sound collection start instruction to the sound collecting WS 1103-1p of the sound processing apparatus 1001p. For the sound collection start instruction in the step S3404, a request SOAP message as shown in FIG. 78, which corresponds to the sound process, is used.

When the sound collection start instruction is received, the sound collecting WS 1103-1p controls the sound collecting device by the sound collecting function part, and executes a sound collection. When the sound collection ends, for example, the sound collecting WS 1103-1p stores sound data in a local memory. After that, the sound collecting WS 1103-1p sends a sound ID of the sound data stored in the local memory to the Web service client 1205p by sending a response SOAP message as shown in FIG. 79, which corresponds to the sound process. The process advances to step S3405. In the step S3405, by a Web service cooperative function part 1113p, the sound data stored in the local memory are used in a cooperative operation between the sound collecting WS 1103-1p and the sound data outputting WS 1103-2p.

Subsequently, the screen flow controlling part 1201p of the server 1002p sends a sound data output start instruction to the Web service client 1205p. The process advances to step S3406. In the step S3406, the Web service client 1205p sends the sound data output start instruction to the sound data outputting WS 1103-2p of the sound processing apparatus 1001p. For the sound data output start instruction sent in the step S3406, a request SOAP message including a sound ID as shown in FIG. 80, which corresponds to the sound process, is used.

When the sound data output start instruction is received, the sound data outputting WS 1103-2p reads out sound data corresponding to the sound ID from various sound data stored in the local memory, controls the data outputting device by the sound data function part, and executes a sound data output. When the sound output ends, the sound data outputting WS 1103-2p informs a sound output end to the Web service client 1205p by sending a response SOAP message as shown in FIG. 81, which corresponds to the sound process.

In step S3407, similar to the step S3402, the Web service client 1205p sends a request of a screen update instruction to the browser controlling WS 1103-3p of the sound processing apparatus 1001p. When the request of the screen update instruction request is received, the process advances to step S3908. In the step S3408, the Web browser 1102p of the sound processing apparatus 1001p sends the screen update instruction by using the GET method of the HTTP to the Web server 1204p of the server 1002p. The Web server 1204p sends the screen update instruction to the screen flow controlling part 1201p.

The screen flow controlling part 1201p generates sound process end screen data by the HTML, and sends the sound process end screen data to the Web server 1204p. The Web server 1204p sends the sound process end screen data of the HTML to the Web browser 1102p of the sound processing apparatus 1001p. The Web browser 1102p displays the sound process end screen corresponding to the sound process end screen data at the operation part.

In the tenth variation in FIG. 87, the sound ID is sent in the step S3404 and the step S3406, instead of sending the sound data. Therefore, it is possible to reduce workload of the network 3p and improve response performance.

### - Eleventh Variation -

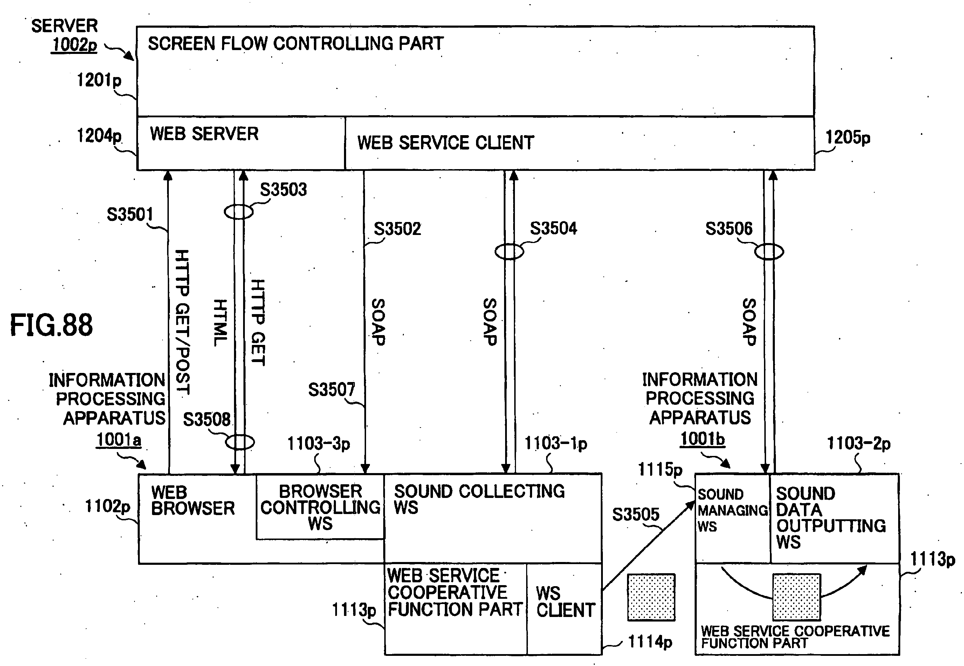

FIG. 88 is a diagram for explaining an eleventh variation of the process in the system 9200 using Web services. In sound processing apparatuses 1001a and 1001b including the configuration of the information processing apparatus 1-2p and a server 1002p including the configuration of the server 2p, parts necessary to explain are shown but other parts will be omitted.

Steps S3501, S3502, and S3503 are similar to the steps S3101, S3102, and S3103, and explanations thereof will be omitted. The screen flow controlling part 1201p of server 1002p sends a sound collection start instruction to the Web service client 1205p. The process advances to step S3504. In the step S3504, the Web service client 1205p sends a sound collection start instruction to the sound collecting WS 1103-1p of the sound processing apparatus 1001a. For the sound collection start instruction in the step S3504, the request SOAP message as shown in FIG. 78, which corresponds to the sound process, is used.

When the sound collection start instruction is received, the sound collecting WS 1103-1p controls the sound collecting device by the sound collecting function part, and executes a sound collection. When the sound collection ends, the sound collecting WS 1103-1p of the sound processing apparatus 1001a sends the sound ID of the sound data which is collected, by using the response SOAP message as shown in FIG. 79 which corresponds to the sound process, to the Web service client 1205p.

The process advances to step S3505. In the step S3505, a WS client 1114p of the sound processing apparatus 1001a sends the sound data to a sound managing WS 1115p of the sound processing apparatus 1001b. The sound managing WS 1115p is a Web service for controlling a sound data management function part (not shown) provided by the Web service server 703b of the sound processing apparatus 1001b.

For example, the sound managing WS 1115p of.the sound processing apparatus 1001b stores the sound data received from the server 1002p. By the Web service cooperative function part 1113p, the sound data stored in the local memory are used in the cooperative operation between the document managing WS 1115p and the sound data outputting WS 1103-2p.

In a parallel process to the step S3505, the screen flow controlling 1201p of the server 1002p sends a sound data output start instruction to the Web service client 1205p. The process advances to step S3506. In the step S3506, the Web service client 1205p sends a sound data output start instruction to the sound data outputting WS 1103-2p of the sound processing apparatus 1001b. For the sound data output start instruction sent in the step S3506, the request SOAP message including the sound ID as shown in FIG. 79, which corresponds to the sound process, is used.

When the sound data output start instruction is received, the.sound data outputting WS 1103-2p reads out sound data corresponding to the sound ID from various sound data stored in the local memory, controls the data outputting device by the sound data function part, and executes a sound data output. The sound data outputting WS 1103-2p waits for a process of the step S3505, and the sound data output is executed when preconditions are received. That is, the Web service cooperative function part 1113p of the sound processing apparatus 1001b conducts a waiting process for the step S3505 and the step S3506. When the sound output ends, the sound data outputting WS 1103-2p informs a sound output end to the Web service client 1205p by sending a response SOAP message as shown in FIG. 81 which corresponds to the sound process. In step S3507 and step S3508, similar to the steps S3502 and S3503, the sound process end screen is displayed at the operation part.

In the eleventh variation shown in FIG. 88, the sound ID is sent in the step S3504 and the step S3506, instead of sending the sound data. Therefore, it is possible to reduce workload of the network 3p, and to improve the response performance.

### - Twelfth Variation -

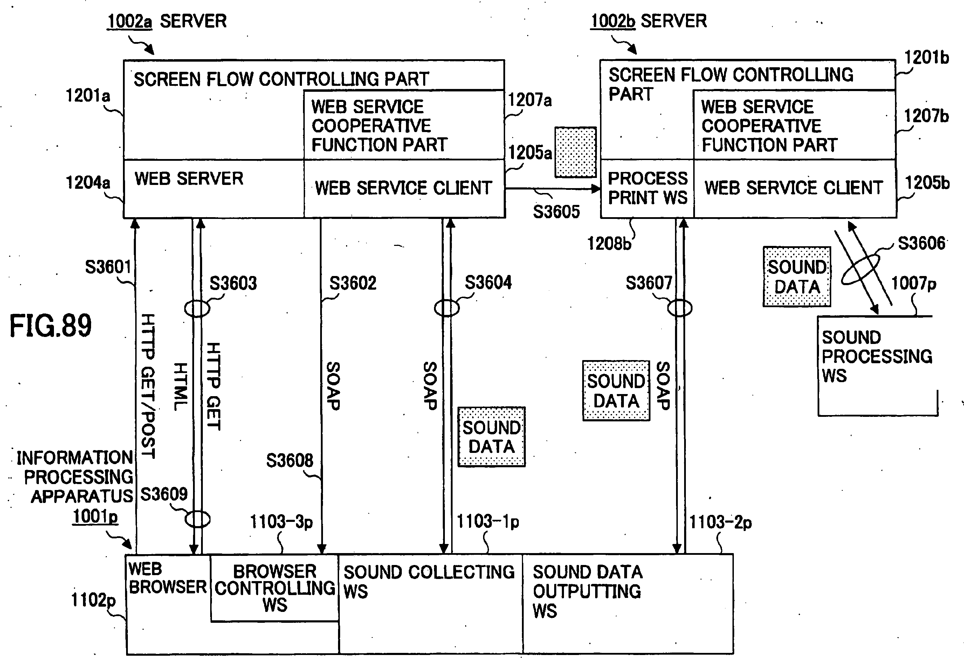

FIG. 89 is a diagram for explaining a twelfth variation of the system 9200 using Web services. In a sound processing apparatus 1001a including the configuration of the information processing apparatus 1-2p and servers 1002a and 1002b, parts necessary to explain are shown, but other parts will be omitted. Configurations of the servers 1002a and 1002b are basically similar to the configuration of the server 1002p, and detailed explanations thereof will be omitted.

Steps S3601, S3602, S3603, and S3604 are the same as the steps S3101, S3102, S3103, and S3104, and explanations thereof will be omitted. The Web service client 1205a sends the sound data received in the step S3604, to a process sound data outputting WS 1208b of the server apparatus 1002b. The process sound data outputting WS 1208b is a Web service for controlling a sound process function part (not shown) provided by the Web service server (not shown). In addition, the servers 1002a and 1002b cooperate with each other with respect to the sound data and processes by Web service cooperative function parts 1207a and 1207b.

The screen flow controlling part 1201b of the server 1002b instructs a sound process to the Web service client 1205b. The process advances to step S3606. In the step S3606, the Web service client 1205b conducts a process to the sound data by using a sound processing WS 1007p through the network 3p.

Subsequently, the screen flow controlling part 1201b of the server 1002b sends a sound data output start instruction to the Web service client 1205b. The process advances to step S3607. In the step S3607, the Web service client 1205b of the server 1002b sends the sound data output start instruction to the sound data outputting WS 1103-2p of the sound processing apparatus 1001a. For the sound data output start instruction sent in the step S3607, the request SOAP message including the sound data as shown in FIG. 73, which corresponds to the sound process, is used.

When the sound data output start instruction is received, the sound data outputting WS 1103-2p controls the data outputting device by the sound data output function part, and executes a sound data output. When the sound output ends, the sound data outputting WS 1103-2p informs a sound output end to the Web service client 1205b by using the response SOAP message as shown in FIG. 74 which corresponds to the sound process. Steps S3608 and S3609 are the same as the steps S3107 and S3108, and explanations thereof will be omitted.

In the twelfth variation in FIG. 89, it is possible to build up as new application by utilizing an existing application. For example, in a case of additionally providing a barcode when sound data is output, it is possible to select and use a preferable application through the network 3p.

In the first variation through the twelfth variation described above, since various Web services cooperate with each other, it is possible to reduce a waiting time for a request process. The above description is not limited to the specifically disclosed embodiments.

For example, in the first variation through the sixth variation, the image data are applied and described, and in the seventh variation through the twelfth variation, the sound data are applied and described. However, the present invention can be applied to a service handling various data such as optical data, character data, or a like.

The present invention is not limited to the specifically disclosed embodiments, and variations and modifications may be made without departing from the scope of the invention.

## Claims

1. A system providing services related to image handling processes, in which an image handling apparatus (1) and server (2) are connected to each other through a network (3), the system conducting at least a part of an image handling process by using a function provided by the image handling apparatus (1), said system comprising:
a notification function part (122) informing a change of a state of the image handling apparatus (1) to a predetermined destination, said predetermined destination being stored in an event management information table (125);
wherein the notification function part (122) is configured to acquire an address as the predetermined destination of an event notification from the event management information table (125) in response to the state included in the event notification;
wherein the destination of the event notification and contents to be included in the event notification can be changed in the event management information table (125);
wherein, if the state is changed to an error stop state, a first predetermined destination and a first event notification content are acquired from the event management information table (125) and a second predetermined destination and a second event notification content are acquired from the event management information table (125);
wherein the first content includes a job ID, job state and error reason;
wherein the second content includes a job ID and job state;
wherein the first predetermined destination is different from the second predetermined destination; and
wherein the notification function part (122) is configured to inform the change of a state being an error stop by sending a notification including the first content to the first predetermined destination and by sending a notification including the second content to the second predetermined destination.

2. The system using services as claimed in claim 1, comprising a management function part managing information concerning the change of the state, wherein the information concerning the change of the state managed by the management function part is sent to a predetermined notification destination which is stored in the event management information table (125).

3. The system using services as claimed in claim 1, wherein the notification function part (122) sends information which is registered beforehand, from information concerning the change of the state to a predetermined notification destination which is stored in the event management information table (125).

4. The system as claimed in claim 1, wherein the notification function part (122) instructs a web browser (102) of the image handling apparatus (1) as the predetermined notifcation destination which is stored in the event management information table (125) or a web browser (102) of a terminal apparatus other than the image handling apparatus (1), to display a screen corresponding to information concerning the change of the state.

5. The system as claimed in claim 1, wherein the notification function part (122) instructs a Web browser (102) of the image handling apparatus (1) or a web browser (102) of a terminal apparatus other than the image handling apparatus (1) to display a screen corresponding to information concerning the change of the state based on an acquisition request sent from the Web browser (102).

6. The system using services as claimed in claim 2, wherein the management function part is provided in an intermediate apparatus (5) other than the image handling apparatus (1) or the server (2).

7. An image handling apparatus (1) connectable to a server (2) through a network (3) and conducting at least a part of an image handling process service provided by said server, said image handling apparatus (1) comprising:
a notification function part (122) sending a change of a state of the image handling apparatus (1) itself to a predetermined notification destination, said predetermined destination being stored in an event management information table (125);
wherein the notification function part (122) is configured to acquire an address as the predetermined destination of an event notification from the event management information table (125) in response to the state included in the event notification;
wherein the destination of the event notification and contents to be included in the event notification can be changed in the event management information table (125);
wherein, 11 the state is changed to an error stop state, a first predetermined destination and a first event notification content are acquired from the event management information table (125) and a second predetermined destination and a second event notification content are acquired from the event management information table (125);
wherein the first content includes a job ID, job state and error reason;
wherein the second content includes a job ID and job state;
wherein the first predetermined destination is different from the second predetermined destination; and
wherein the notification function part (122) is configured to inform the change of a state being an error stop by sending a notification including the first content to the first predetermined destination and by sending a notification including the second content to the second predetermined destination.

8. A server (2) connected to an image handling apparatus (1) through a network (3) and having the image handling apparatus (1) conduct at least a part of an image handling process service, said server (2) comprising:
a notification function part (122) sending a change of a state of the image handling apparatus (1) to a predetermined notification destination when the change of the state of the image handling apparatus (1) is received, said predetermined destination is stored in an event management information table (125);
wherein the notification function part (122) is configured to acquire an address as the predetermined destination of an event notification from the event management information table (125) in response to the state included in the event notification;
wherein the destination of the event notification and contents to be included in the event notification can be changed in the event management information table (125);
wherein, if the state is changed to an error stop state, a first predetermined destination and a first event notification content are acquired from the event management information table (125) and a second predetermined destination and a second event notification content are acquired from the event management information table (125);
wherein the first content includes a job ID, job state and error reason;
wherein the second content includes a job ID and job state;
wherein the first predetermined destination is different from the second predetermined destination; and
wherein the notification function part (122) is configured to inform the change of a state being an error stop by sending a notification including the first content to the first predetermined destination and by sending a notification including the second content to the second predetermined destination.

9. A state change sending method for sending a change of a state of a system providing services related to image handling processes, in which system an image handling apparatus (1) and a server (2) providing services related to image handling processes are connected through a network (3), said image handling apparatus (1) conducting at least a part of an image handling process, said state change sending method comprising the step of:
sending the change of the state of the image handling apparatus (1) to a predetermined notification destination, said predetermined destination being stored in an event management information table (125);
wherein the notification function part (122) is configured to acquire an address as the predetermined destination of an event notification from the event management information table (125) in response to the state included in the event notification;
wherein the destination of the event notification and contents to be included in the event notification can be changed in the event management information table (125);
wherein, if the state is changed to an error stop state, a first predetermined destination and a first event notification content are acquired from the event management information table (125) and a second predetermined destination and a second event notification content are acquired from the event management information table (125);
wherein the first content includes a job ID, job state and error reason;
wherein the second content includes a job ID and job state;
wherein the first predetermined destination is different from the second predetermined destination; and
wherein the notification function part (122) is configured to inform the change of a state being an error stop by sending a notification including the first content to the first predetermined destination and by sending a notification including the second content to the second predetermined destination.

10. A program product for causing a system providing services related to image handling processes, in which an image handling apparatus (1) controlled by an image handling process service and a server (2) are connected through a network (3), said image handling apparatus (1) conducting at least a part of the image handling process by:
sending the change of the state of the image handling apparatus (1) to a predetermined notification destination, said predetermined destination being stored in an event management information table (125);
wherein the notification function part (122) is configured to acquire an address as the predetermined destination of an event notification from the event management information table (125) in response to the state included in the event notification;
wherein the destination of the event notification and contents to be included in the event notification can be changed in the event management information table (125);
wherein, if the state is changed to an error stop state, a first predetermined destination and a first event notification content are acquired from the event management information table (125) and a second predetermined destination and a second event notification content are acquired from the event management information table (125);
wherein the first content includes a job ID, job state and error reason;
wherein the second content includes a job ID and job state;
wherein the first predetermined destination is different from the second predetermined destination; and
wherein the notification function part (122) is configured to inform the change of a state being an error stop by sending a notification including the first content to the first predetermined destination and by sending a notification including the second content to the second predetermined destination.

## Patentansprüche

1. System, das Dienste in Verbindung mit Bildhandhabungsprozessen bereitstellt, bei denen eine Bildhandhabungsvorrichtung (1) und ein Server (2) miteinander durch ein Netz (3) verbunden sind, wobei das System mindestens einen Teil eines Bildhandhabungsprozesses unter Verwendung einer durch die Bildhandhabungsvorrichtung bereitgestellten Funktion durchführt, wobei das System Folgendes umfasst:
einen Benachrichtigungsfunktionsteil (122), der ein vorbestimmtes Ziel über eine Statusänderung der Bildhandhabungsvorrichtung (1) informiert, wobei das vorbestimmte Ziel in einer Ereignisverwaltungs-Informationstabelle (125) gespeichert ist;
wobei der Benachrichtigungsfunktionsteil (122) dazu ausgelegt ist, eine Adresse als vorbestimmtes Ziel einer Ereignisbenachrichtigung aus der Ereignisverwaltungs-Informationstabelle (125) als Antwort auf den in der Ereignisbenachrichtigung enthaltenen Status zu erfassen;
wobei das Ziel der Ereignisbenachrichtigung und Inhalte, die in der Ereignisbenachrichtigung enthalten sein sollen, in der Ereignisverwaltungs-Informationstabelle (125) geändert werden können;
wobei dann, wenn der Status zu einem Fehlerstoppstatus geändert worden ist, ein erstes vorbestimmtes Ziel und ein erster Ereignisbenachrichtigungsinhalt aus der Ereignisverwaltungs-Informationstabelle (125) erfasst werden und ein zweites vorbestimmtes Ziel und ein zweiter Ereignisbenachrichtigungsinhalt aus der Ereignisverwaltungs-Informationstabelle (125) erfasst werden;
wobei der erste Inhalt eine Job-ID, einen Job-Status und eine Fehlerursache umfasst;
wobei der zweite Inhalt eine Job-ID und einen Job-Status umfasst;
wobei das erste vorbestimmte Ziel von dem zweiten vorbestimmten Ziel verschieden ist; und
wobei der Benachrichtigungsfunktionsteil (122) dazu ausgelegt ist, das erste vorbestimmte Ziel durch Senden einer Benachrichtigung, die den ersten Inhalt umfasst, und das zweite vorbestimmte Ziel durch Senden einer Benachrichtigung, die den zweiten Inhalt umfasst, über eine Statusänderung, die ein Fehlerstopp ist, zu informieren.

2. System, das Dienste verwendet, nach Anspruch 1, das einen Verwaltungsfunktionsteil, der Informationen in Bezug auf die Statusänderung verwaltet, umfasst, wobei die Informationen in Bezug auf die Statusänderung, die von dem Verwaltungsfunktionsteil verwaltet werden, an ein vorbestimmtes Benachrichtigungsziel gesendet werden, das in der Ereignisverwaltungs-Informationstabelle (125) gespeichert ist.

3. System, das Dienste verwendet, nach Anspruch 1, wobei der Benachrichtigungsfunktionsteil (122) Informationen, die vorher registriert werden, aus Informationen in Bezug auf die Statusänderung an ein vorbestimmtes Benachrichtigungsziel sendet, das in der Ereignisverwaltungs-Informationstabelle (125) gespeichert ist.

4. System nach Anspruch 1, wobei der Benachrichtigungsfunktionsteil (122) einen Webbrowser (102) der Bildhandhabungsvorrichtung (1) als vorbestimmtes Benachrichtigungsziel, das in der Ereignisverwaltungs-Informationstabelle (125) gespeichert ist, oder einen Webbrowser (102) eines Endgerätes außer der Bildhandhabungsvorrichtung (1) anweist, einen Bildschirm entsprechend den Informationen in Bezug auf die Statusänderung anzuzeigen.

5. System nach Anspruch 1, wobei der Benachrichtigungsfunktionsteil (122) einen Webbrowser (102) der Bildhandhabungsvorrichtung (1) oder einen Webbrowser (102) eines Endgerätes außer der Bildhandhabungsvorrichtung (1) anweist, einen Bildschirm entsprechend den Informationen in Bezug auf die Statusänderung basierend auf einer von dem Webbrowser (102) gesendeten Erfassungsanforderung anzuzeigen.

6. System, das Dienste verwendet, nach Anspruch 2, wobei der Verwaltungsfunktionsteil in einer Zwischenvorrichtung (5) außer der Bildhandhabungsvorrichtung (1) oder auf dem Server (2) vorgesehen ist.

7. Bildhandhabungsvorrichtung (1), die mit einem Server (2) durch ein Netz (3) verbunden sein kann und mindestens einen Teil eines Bildhandhabungsprozessdienstes, der durch den Server bereitgestellt wird, durchführt, wobei die Bildhandhabungsvorrichtung (1) Folgendes umfasst:
einen Benachrichtigungsfunktionsteil (122), der eine Statusänderung der Bildhandhabungsvorrichtung (1) selbst an ein vorbestimmtes Benachrichtigungsziel sendet, wobei das vorbestimmte Ziel in einer Ereignisverwaltungs-Informationstabelle (125) gespeichert ist;
wobei der Benachrichtigungsfunktionsteil (122) dazu ausgelegt ist, eine Adresse als vorbestimmtes Ziel einer Ereignisbenachrichtigung aus der Ereignisverwaltungs-Informationstabelle (125) als Antwort auf den in der Ereignisbenachrichtigung enthaltenen Status zu erfassen;
wobei das Ziel der Ereignisbenachrichtigung und Inhalte, die in der Ereignisbenachrichtigung enthalten sein sollen, in der Ereignisverwaltungs-Informationstabelle (125) geändert werden können;
wobei dann, wenn der Status zu einem Fehlerstoppstatus geändert worden ist, ein erstes vorbestimmtes Ziel und ein erster Ereignisbenachrichtigungsinhalt aus der Ereignisverwaltungs-Informationstabelle (125) erfasst werden und ein zweites vorbestimmtes Ziel und ein zweiter Ereignisbenachrichtigungsinhalt aus der Ereignisverwaltungs-Informationstabelle (125) erfasst werden;
wobei der erste Inhalt eine Job-ID, einen Job-Status und eine Fehlerursache umfasst;
wobei der zweite Inhalt eine Job-ID und einen Job-Status umfasst;
wobei das erste vorbestimmte Ziel von dem zweiten vorbestimmten Ziel verschieden ist; und
wobei der Benachrichtigungsfunktionsteil (122) dazu ausgelegt ist, das erste vorbestimmte Ziel durch Senden einer Benachrichtigung, die den ersten Inhalt umfasst, und das zweite vorbestimmte Ziel durch Senden einer Benachrichtigung, die den zweiten Inhalt umfasst, über eine Statusänderung, die ein Fehlerstopp ist, zu informieren.

8. Server (2), der mit einer Bildhandhabungsvorrichtung (1) durch ein Netz (3) verbunden ist und der die Bildhandhabungsvorrichtung (1) mindestens einen Teil eines Bildhandhabungsprozessdienstes durchführen lässt, wobei der Server (2) Folgendes umfasst:
einen Benachrichtigungsfunktionsteil (122), der eine Statusänderung der Bildhandhabungsvorrichtung (1) an ein vorbestimmtes Benachrichtigungsziel sendet, wenn die Statusänderung der Bildhandhabungsvorrichtung (1) empfangen wird, wobei das vorbestimmte Ziel in einer Ereignisverwaltungs-Informationstabelle (125) gespeichert ist;
wobei der Benachrichtigungsfunktionsteil (122) dazu ausgelegt ist, eine Adresse als vorbestimmtes Ziel einer Ereignisbenachrichtigung aus der Ereignisverwaltungs-Informationstabelle (125) als Antwort auf den in der Ereignisbenachrichtigung enthaltenen Status zu erfassen;
wobei das Ziel der Ereignisbenachrichtigung und Inhalte, die in der Ereignisbenachrichtigung enthalten sein sollen, in der Ereignisverwaltungs-Informationstabelle (125) geändert werden können;
wobei dann, wenn der Status zu einem Fehlerstoppstatus geändert worden ist, ein erstes vorbestimmtes Ziel und ein erster Ereignisbenachrichtigungsinhalt aus der Ereignisverwaltungs-Informationstabelle (125) erfasst werden und ein zweites vorbestimmtes Ziel und ein zweiter Ereignisbenachrichtigungsinhalt aus der Ereignisverwaltungs-Informationstabelle (125) erfasst werden;
wobei der erste Inhalt eine Job-ID, einen Job-Status und eine Fehlerursache umfasst;
wobei der zweite Inhalt eine Job-ID und einen Job-Status umfasst;
wobei das erste vorbestimmte Ziel von dem zweiten vorbestimmten Ziel verschieden ist; und
wobei der Benachrichtigungsfunktionsteil (122) dazu ausgelegt ist, das erste vorbestimmte Ziel durch Senden einer Benachrichtigung, die den ersten Inhalt umfasst, und das zweite vorbestimmte Ziel durch Senden einer Benachrichtigung, die den zweiten Inhalt umfasst, über eine Statusänderung, die ein Fehlerstopp ist, zu informieren.

9. Statusänderungs-Sendungsverfahren zum Senden einer Statusänderung eines Systems, das Dienste in Verbindung mit Bildhandhabungsprozessen bereitstellt, wobei in dem System eine Bildhandhabungsvorrichtung (1) und ein Server (2), die Dienste bereitstellen, die auf Bildhandhabungsprozesse bezogen sind, durch ein Netz (3) verbunden sind, wobei die Bildhandhabungsvorrichtung (1) mindestens einen Teil eines Bildhandhabungsprozesses durchführt, wobei das Statusänderungs-Sendungsverfahren die folgenden Schritte umfasst:
Senden der Statusänderung der Bildhandhabungsvorrichtung (1) an ein vorbestimmtes Benachrichtigungsziel, wobei das vorbestimmte Benachrichtigungsziel in einer Ereignisverwaltungs-Informationstabelle (125) gespeichert ist;
wobei der Benachrichtigungsfunktionsteil (122) dazu ausgelegt ist, eine Adresse als vorbestimmtes Ziel einer Ereignisbenachrichtigung von der Ereignisverwaltungs-Informationstabelle (125) als Antwort auf den in der Ereignisbenachrichtigung enthaltenen Status zu erfassen;
wobei das Ziel der Ereignisbenachrichtigung und Inhalte, die in der Ereignisbenachrichtigung enthalten sein sollen, in der Ereignisverwaltungs-Informationstabelle (125) geändert werden können;
wobei dann, wenn der Status zu einem Fehlerstoppstatus geändert worden ist, ein erstes vorbestimmtes Ziel und ein erster Ereignisbenachrichtigungsinhalt aus der Ereignisverwaltungs-Informationstabelle (125) erfasst werden und ein zweites vorbestimmtes Ziel und ein zweiter Ereignisbenachrichtigungsinhalt aus der Ereignisverwaltungs-Informationstabelle (125) erfasst werden;
wobei der erste Inhalt eine Job-ID, einen Job-Status und eine Fehlerursache umfasst;
wobei der zweite Inhalt eine Job-ID und einen Job-Status umfasst;
wobei das erste vorbestimmte Ziel von dem zweiten vorbestimmten Ziel verschieden ist; und
wobei der Benachrichtigungsfunktionsteil (122) dazu ausgelegt ist, das erste vorbestimmte Ziel durch Senden einer Benachrichtigung, die den ersten Inhalt umfasst, und das zweite vorbestimmte Ziel durch Senden einer Benachrichtigung, die den zweiten Inhalt umfasst, über eine Statusänderung, die ein Fehlerstopp ist, zu informieren.

10. Programmprodukt zum Veranlassen eines Systems, das Dienste in Bezug auf Bildbehandlungsprozesse bereitstellt, bei denen eine Bildhandhabungsvorrichtung (1), die durch einen Bildhandhabungsprozessdienst gesteuert wird, und ein Server (2) über ein Netz (3) verbunden sind, wobei die Bildhandhabungsvorrichtung (1) mindestens einen Teil des Bildhandhabungsprozesses durchführt, zu Folgendem:
Senden der Statusänderung der Bildhandhabungsvorrichtung (1) an ein vorbestimmtes Benachrichtigungsziel, wobei das vorbestimmte Benachrichtigungsziel in einer Ereignisverwaltungs-Informationstabelle (125) gespeichert ist;
wobei der Benachrichtigungsfunktionsteil (122) dazu ausgelegt ist, eine Adresse als vorbestimmtes Ziel einer Ereignisbenachrichtigung von der Ereignisverwaltungs-Informationstabelle (125) als Antwort auf den in der Ereignisbenachrichtigung enthaltenen Status zu erfassen;
wobei das Ziel der Ereignisbenachrichtigung und Inhalte, die in der Ereignisbenachrichtigung enthalten sein sollen, in der Ereignisverwaltungs-Informationstabelle (125) geändert werden können;
wobei dann, wenn der Status zu einem Fehlerstoppstatus geändert worden ist, ein erstes vorbestimmtes Ziel und ein erster Ereignisbenachrichtigungsinhalt aus der Ereignisverwaltungs-Informationstabelle (125) erfasst werden und ein zweites vorbestimmtes Ziel und ein zweiter Ereignisbenachrichtigungsinhalt aus der Ereignisverwaltungs-Informationstabelle (125) erfasst werden;
wobei der erste Inhalt eine Job-ID, einen Job-Status und eine Fehlerursache umfasst;
wobei der zweite Inhalt eine Job-ID und einen Job-Status umfasst;
wobei das erste vorbestimmte Ziel von dem zweiten vorbestimmten Ziel verschieden ist; und
wobei der Benachrichtigungsfunktionsteil (122) dazu ausgelegt ist, das erste vorbestimmte Ziel durch Senden einer Benachrichtigung, die den ersten Inhalt umfasst, und das zweite vorbestimmte Ziel durch Senden einer Benachrichtigung, die den zweiten Inhalt umfasst, über eine Statusänderung, die ein Fehlerstopp ist, zu informieren.

## Revendications

1. Système fournissant des services liés à des processus de prise en charge d'image, dans lequel un appareil de prise en charge d'image (1) et un serveur (2) sont connectés l'un à l'autre par l'intermédiaire d'un réseau (3), le système conduisant au moins une partie d'un processus de prise en charge d'image en utilisant une fonction fournie par l'appareil de prise en charge d'image (1), ledit système comprenant :
une partie de fonction de notification (122) informant d'un changement d'un état de l'appareil de prise en charge d'image (1) une destination prédéterminée, ladite destination prédéterminée étant stockée dans une table d'informations de gestion d'événement (125) ;
dans lequel la partie de fonction de notification (122) est configurée pour acquérir une adresse comme la destination prédéterminée d'une notification d'événement à partir de la table d'informations de gestion d'événement (125) en réponse à l'état inclus dans la notification d'événement ;
dans lequel la destination de la notification d'événement et des contenus à inclure dans la notification d'événement peuvent être changés dans la table d'informations de gestion d'événement (125) ;
dans lequel, si l'état est changé en un état d'arrêt d'erreur, une première destination prédéterminée et un premier contenu de notification d'événement sont acquis à partir de la table d'informations de gestion d'événement (125) et une seconde destination prédéterminée et un second contenu de notification d'événement sont acquis à partir de la table d'informations de gestion d'événement (125) ;
dans lequel le premier contenu inclut un ID de travail, un état de travail et un motif d'erreur ;
dans lequel le second contenu inclut un ID de travail et un état de travail ;
dans lequel la première destination prédéterminée est différente de la seconde destination prédéterminée ; et
dans lequel la partie de fonction de notification (122) est configurée pour informer du changement d'un état qui est un arrêt d'erreur en envoyant une notification incluant le premier contenu à la première destination prédéterminée et en envoyant une notification incluant le second contenu à la seconde destination prédéterminée.

2. Système utilisant des services selon la revendication 1, comprenant une partie de fonction de gestion gérant des informations concernant le changement de l'état, dans lequel les informations concernant le changement de l'état gérées par la partie de fonction de gestion sont envoyées à une destination de notification prédéterminée qui est stockée dans la table d'informations de gestion d'événement (125).

3. Système utilisant des services selon la revendication 1, dans lequel la partie de fonction de notification (122) envoie des informations qui sont enregistrées au préalable, à partir d'informations concernant le changement de l'état à une destination de notification prédéterminée qui est stockée dans la table d'informations de gestion d'événement (125).

4. Système selon la revendication 1, dans lequel la partie de fonction de notification (122) donne pour instruction à un navigateur web (102) de l'appareil de prise en charge d'image (1) comme la destination de notification prédéterminée qui est stockée dans la table d'informations de gestion d'événement (125) ou un navigateur web (102) d'un appareil terminal autre que l'appareil de prise en charge d'image (1), d'afficher un écran correspondant à des informations concernant le changement de l'état.

5. Système selon la revendication 1, dans lequel la partie de fonction de notification (122) donne pour instruction à un navigateur Web (102) de l'appareil de prise en charge d'image (1) ou à un navigateur web (102) d'un appareil terminal autre que l'appareil de prise en charge d'image (1) d'afficher un écran correspondant à des informations concernant le changement de l'état sur la base d'une demande d'acquisition envoyée depuis le navigateur Web (102).

6. Système utilisant des services selon la revendication 2, dans lequel la partie de fonction de gestion est pourvue dans un appareil intermédiaire (5) autre que l'appareil de prise en charge d'image (1) ou le serveur (2).

7. Appareil de prise en charge d'image (1) connectable à un serveur (2) par l'intermédiaire d'un réseau (3) et conduisant au moins une partie d'un service de processus de prise en charge d'image fourni par ledit serveur, ledit appareil de prise en charge d'image (1) comprenant :
une partie de fonction de notification (122) envoyant un changement d'un état de l'appareil de prise en charge d'image (1) lui-même à une destination de notification prédéterminée, ladite destination prédéterminée étant stockée dans une table d'informations de gestion d'événement (125) ;
dans lequel la partie de fonction de notification (122) est configurée pour acquérir une adresse comme la destination prédéterminée d'une notification d'événement à partir de la table d'informations de gestion d'événement (125) en réponse à l'état inclus dans la notification d'événement ;
dans lequel la destination de la notification d'événement et des contenus à inclure dans la notification d'événement peuvent être changés dans la table d'informations de gestion d'événement (125) ;
dans lequel, si l'état est changé en un état d'arrêt d'erreur, une première destination prédéterminée et un premier contenu de notification d'événement sont acquis à partir de la table d'informations de gestion d'événement (125) et une seconde destination prédéterminée et un second contenu de notification d'événement sont acquis à partir de la table d'informations de gestion d'événement (125) ;
dans lequel le premier contenu inclut un ID de travail, un état de travail et un motif d'erreur ;
dans lequel le second contenu inclut un ID de travail et un état de travail ;
dans lequel la première destination prédéterminée est différente de la seconde destination prédéterminée ; et
dans lequel la partie de fonction de notification (122) est configurée pour informer du changement d'un état qui est un arrêt d'erreur en envoyant une notification incluant le premier contenu à la première destination prédéterminée et en envoyant une notification incluant le second contenu à la seconde destination prédéterminée.

8. Serveur (2) connecté à un appareil de prise en charge d'image (1) par l'intermédiaire d'un réseau (3) et faisant que l'appareil de prise en charge d'image (1) conduise au moins une partie d'un service de processus de prise en charge d'image, ledit serveur (2) comprenant :
une partie de fonction de notification (122) envoyant un changement d'un état de l'appareil de prise en charge d'image (1) à une destination de notification prédéterminée lorsque le changement de l'état de l'appareil de prise en charge d'image (1) est reçu, ladite destination prédéterminée est stockée dans une table d'informations de gestion d'événement (125) ;
dans lequel la partie de fonction de notification (122) est configurée pour acquérir une adresse comme la destination prédéterminée d'une notification d'événement à partir de la table d'informations de gestion d'événement (125) en réponse à l'état inclus dans la notification d'événement ;
dans lequel la destination de la notification d'événement et des contenus à inclure dans la notification d'événement peuvent être changés dans la table d'informations de gestion d'événement (125) ;
dans lequel, si l'état est changé en un état d'arrêt d'erreur, une première destination prédéterminée et un premier contenu de notification d'événement sont acquis à partir de la table d'informations de gestion d'événement (125) et une seconde destination prédéterminée et un second contenu de notification d'événement sont acquis à partir de la table d'informations de gestion d'événement (125) ;
dans lequel le premier contenu inclut un ID de travail, un état de travail et un motif d'erreur ;
dans lequel le second contenu inclut un ID de travail et un état de travail ;
dans lequel la première destination prédéterminée est différente de la seconde destination prédéterminée ; et
dans lequel la partie de fonction de notification (122) est configurée pour informer du changement d'un état qui est un arrêt d'erreur en envoyant une notification incluant le premier contenu à la première destination prédéterminée et en envoyant une notification incluant le second contenu à la seconde destination prédéterminée.

9. Procédé d'envoi de changement d'état pour envoyer un changement d'un état d'un système fournissant des services liés à des processus de prise en charge d'image, dans lequel système un appareil de prise en charge d'image (1) et un serveur (2) fournissant des services liés à des processus de prise en charge d'image sont connectés par l'intermédiaire d'un réseau (3), ledit appareil de prise en charge d'image (1) conduisant au moins une partie d'un processus de prise en charge d'image, ledit procédé d'envoi de changement d'état comprenant l'étape consistant à :
envoyer le changement de l'état de l'appareil de prise en charge d'image (1) à une destination de notification prédéterminée, ladite destination prédéterminée étant stockée dans une table d'informations de gestion d'événement (125) ;
dans lequel la partie de fonction de notification (122) est configurée pour acquérir une adresse comme la destination prédéterminée d'une notification d'événement à partir de la table d'informations de gestion d'événement (125) en réponse à l'état inclus dans la notification d'événement ;
dans lequel la destination de la notification d'événement et des contenus à inclure dans la notification d'événement peuvent être changés dans la table d'informations de gestion d'événement (125) ;
dans lequel, si l'état est changé en un état d'arrêt d'erreur, une première destination prédéterminée et un premier contenu de notification d'événement sont acquis à partir de la table d'informations de gestion d'événement (125) et une seconde destination prédéterminée et un second contenu de notification d'événement sont acquis à partir de la table d'informations de gestion d'événement (125) ;
dans lequel le premier contenu inclut un ID de travail, un état de travail et un motif d'erreur ;
dans lequel le second contenu inclut un ID de travail et un état de travail ;
dans lequel la première destination prédéterminée est différente de la seconde destination prédéterminée ; et
dans lequel la partie de fonction de notification (122) est configurée pour informer du changement d'un état qui est un arrêt d'erreur en envoyant une notification incluant le premier contenu à la première destination prédéterminée et en envoyant une notification incluant le second contenu à la seconde destination prédéterminée.

10. Produit de programme pour amener un système fournissant des services liés à des processus de prise en charge d'image, dans lequel un appareil de prise en charge d'image (1) commandé par un service de processus de prise en charge d'image et un serveur (2) sont connectés par l'intermédiaire d'un réseau (3), ledit appareil de prise en charge d'image (1) conduisant au moins une partie du processus de prise en charge d'image en :
envoyant le changement de l'état de l'appareil de prise en charge d'image (1) à une destination de notification prédéterminée, ladite destination prédéterminée étant stockée dans une table d'informations de gestion d'événement (125) ;
dans lequel la partie de fonction de notification (122) est configurée pour acquérir une adresse comme la destination prédéterminée d'une notification d'événement à partir de la table d'informations de gestion d'événement (125) en réponse à l'état inclus dans la notification d'événement ;
dans lequel la destination de la notification d'événement et des contenus à inclure dans la notification d'événement peuvent être changés dans la table d'informations de gestion d'événement (125) ;
dans lequel, si l'état est changé en un état d'arrêt d'erreur, une première destination prédéterminée et un premier contenu de notification d'événement sont acquis à partir de la table d'informations de gestion d'événement (125) et une seconde destination prédéterminée et un second contenu de notification d'événement sont acquis à partir de la table d'informations de gestion d'événement (125) ;
dans lequel le premier contenu inclut un ID de travail, un état de travail et un motif d'erreur ;
dans lequel le second contenu inclut un ID de travail et un état de travail ;
dans lequel la première destination prédéterminée est différente de la seconde destination prédéterminée ; et
dans lequel la partie de fonction de notification (122) est configurée pour informer du changement d'un état qui est un arrêt d'erreur en envoyant une notification incluant le premier contenu à la première destination prédéterminée et en envoyant une notification incluant le second contenu à la seconde destination prédéterminée.
